**Europäisches Patentamt**

**European Patent Office**

**Office européen des brevets**

(19)

(11) **EP 1 596 317 A1**

(12) **EUROPÄISCHE PATENTANMELDUNG**

(43) Veröffentlichungstag:
**16.11.2005 Patentblatt 2005/46**

(51) Int Cl.[7]: **G06F 17/60**

(21) Anmeldenummer: **05010487.6**

(22) Anmeldetag: **13.05.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **13.05.2004 DE 102004023833**

(71) Anmelder: **Lufthansa Cargo AG**
**65451 Kelsterbach (DE)**

(72) Erfinder: **Blomeyer, Johannes**
**60489 Frankfurt (DE)**

(74) Vertreter: **Metten, Karl-Heinz**
**Forrester & Boehmert,**
**Pettenkoferstrasse 20-22**
**80336 München (DE)**

(54) **System und Verfahren zur Optimierung der Auslastung eines Frachtraumes und zur Maximierung des Erlöses für einen Frachttransport**

(57) Die vorliegende Erfindung betrifft Verfahren zur automatischen Maximierung bzw. Optimierung der Auslastung, des abrechenbaren Gewichts, des Erlöses, der Kapazitäten und/oder des Frachtraumes eines Frachtguttransportes, insbesondere eines Luftfrachttransportes, bestehend aus Ladung mit unterschiedlichem Volumengewicht d, berechnet als Volumen pro Gewicht, insbesondere unter Verwendung einer EDV-Anlage, wobei für den Frachtraum ein Höchstfrachtvolumen $V_{max}$ und ein Höchstfrachtgewicht $W_{max}$ vorgegeben sind. Das erfindungsgemäße Verfahren nutzt skalierte Volumengewichtswerte und stützt sich insbesondere auf die Optimierungsverfahren des linearen Programmierens. Ein Verfahren zur Optimierung der Auslastung und/oder zur Maximierung des Erlöses eines Frachtraumes eines Frachttransportes zeichnet sich z.B. dadurch aus, dass

- man für einen Frachttransport eingehende Transportnachfragen für Frachteinheiten n in Bezug auf ihr Volumen $V_n$, insbesondere in der Einheit m³, ihr Gewicht $W_n$, insbesondere in der Einheit t, ihr abrechenbares Gewicht cw, vorzugsweise in abrechenbaren kg, und ihre Rate $r_n$ pro abrechenbares Gewicht cw der Frachteinheit n erfasst bzw. abbildet,
- das Volumengewicht $d_n$ der Frachteinheiten n bestimmt, wobei,
- falls das Gewicht $W_n$ der n-ten Frachteinheit $\geq 0$ und das Volumen $V_n$ der n-ten Frachteinheit $\geq 0$, dann das Volumengewicht $d_n = (V_n/W_n)$ ist,
- falls das Gewicht $W_n$ der n-ten Frachteinheit = 0 und das Volumen $V_n > 0$, dann das Volumengewicht $d_n$

= ∞ ist, und
- falls das Gewicht $W_n$ der n-ten Frachteinheit = 0 und das Volumen $V_n$ = 0, dann das Volumengewicht $d_n$ unbestimmt ist,
- ausgehend von dem ermittelten Volumengewicht $d_n$ das skalierte Volumengewicht $sd_n$ bestimmt, wobei,
- falls $d_n = 0$, dann $sd_n = 0$ ist,
- falls $0 < d_n \leq ds$, dann $sd_n = d_n/2ds$ ist,
- falls $ds < d_n < \infty$, dann $sd_n = 1 - ds/2d_n$ ist, und
- falls $d_n = \infty$, dann $sd_n = 1$ ist,

wobei ds ein Standard-Volumengewicht ist, das insbesondere dem Standard-Volumengewicht $ds_{IATA}$ der IATA entspricht;

- auf der Grundlage der ermittelten Menge an skalierten Volumengewichten $sd_n$ mindestens zwei, insbesondere mindestens vier, Volumengewichtsklassen $K_x$ mit unteren und oberen Klassengrenzen $d_g$ bildet, wobei keine Klasse $K_x$ gebildet wird, die eine untere Grenze mit einem sd-Wert < 0,5 und eine obere Grenze mit einem sd-Wert > 0,5 aufweist,
- die Volumengewichte der Klassengrenzen $d_g$ in der Weise berechnet, dass,
- falls $sd_g = 0$, dann $d_g = 0$ ist,
- falls $0 < sd_g \leq 0,5$, dann $d_g = 2 sd_g \times ds$ ist,
- falls $0,5 < sd_g < 1$, dann $d_g = ds/(2 - 2sd_g)$ ist, und
- falls $sd_g = 1$, dann $d_g = \infty$ ist, und
- die Frachtguteinheiten n den ermittelten Volumengewichtsklassen $K_x(d_n)$ zuordnet.

Printed by Jouve, 75001 PARIS (FR)

Ein dualer Graph mit verschiedenen Volumen Bid-Preisen

# Figure 10

**Beschreibung**

Die vorliegende Erfindung betrifft Verfahren zur automatischen Maximierung bzw. Optimierung der Auslastung, des abrechenbaren Gewichts, des Erlöses, der Kapazitäten und/oder des Frachtraumes eines Frachtguttransportes, insbesondere eines Luftfrachttransportes, bestehend aus Ladung mit unterschiedlichem Volumengewicht d, berechnet als Volumen pro Gewicht, insbesondere unter Verwendung einer EDV-Anlage, wobei für den Frachtraum ein Höchstfrachtvolumen $V_{max}$ und ein Höchstfrachtgewicht $W_{max}$ vorgegeben sind.

Es ist hinlänglich bekannt, dass Vor- und Zwischenprodukte für vielfältige Fertigungsprozesse nicht an ein und demselben Ort produziert, sondern häufig just-in-time angeliefert werden. Insbesondere aufgrund der modernen Kommunikationsmittel und der damit einhergehenden zunehmenden Bedeutung des E-Commerce können und werden Zwischen- und Endprodukte häufig sehr kurzfristig geordert. Auf diese Weise kann flexibel auf die sich ändernden Marktbedingungen reagiert werden. Die beschriebenen Fertigungs- und Marktsituationen setzen stets voraus, dass entsprechende Transportmittel und Frachtkapazitäten zur Verfügung stehen. Angesichts der zunehmenden Internationalisierung der Geschäftsbeziehungen und der Globalisierung der Märkte können die gewünschten Frachtmengen in der Regel nur noch mit Hilfe des Luftfrachtverkehrs in kurzer Zeit von einem Ausgangs- zu einem Bestimmungsort befördert werden. Demgemäß nimmt der Luftfrachtverkehr noch stets an Umfang und Bedeutung zu.

Der Luftfrachtverkehr bietet mittlerweile weltweit Frachtverbindungen zwischen allen wesentlichen Handelsmetropolen an, so dass zeitkritische Fracht zumeist per Flugzeug verschickt werden kann. Gleichzeitig sieht sich der Luftfrachtverkehr wesentlichen Beschränkungen ausgesetzt. Zum einen verfügt jedes Frachtflugzeug zwangsläufig über ein begrenztes maximales Zuladungsgewicht und -volumen. Beispielsweise kann dabei das maximale Zuladungsgewicht in Abhängigkeit von der jeweiligen Fluglänge bzw. dem Abstand zwischen zwei Tankstopps variieren, je nachdem wieviel Treibstoff getankt werden muss. Zudem kann auch das maximale Zuladungsvolumen für Fracht variieren, z.B. in Abhängigkeit davon, wieviel Raum durch Passagiergepäck oder durch Stauverluste bedingt durch sperrige Fracht eingenommen wird. Zum anderen ist insgesamt auf eine nicht zu ungleichmäßige Gewichtsverteilung beim Beladen des Frachtraums zu achten. Die Komplexität des Luftfrachtverkehrs wird noch dadurch erhöht, dass Frachtflüge nicht notwendiger Weise als Hin- und Rückflüge konzipiert sind, sondern dass nacheinander mehrere Flughäfen angesteuert werden, um einen Teil der Ladung abzugeben sowie gegebenenfalls neue Ladung aufzunehmen, bevor der Ausgangsflughafen wieder erreicht wird. Um den Luftfrachtverkehr profitabel zu gestalten, sind sowohl die regelmäßig hohen Anschaffungs- bzw. Leasingkosten für das (Fracht-)Flugzeug als auch die Wartungs-, Betriebs- und Personalkosten aufzubringen. Dieses gelingt im allgemeinen nur, wenn der zur Verfügung stehende Frachtraum auf jedem Flugabschnitt eines Fluges optimal genutzt wird, ohne dabei das zulässige Höchstgewicht oder -volumen zu überschreiten. Bedingt durch den nicht geringen Wettbewerb unter den Luftfrachtgesellschaften ist es ein vorrangiges Anliegen, die Ressourcen eines jeweiligen Frachtfluges optimal zu nutzen. Anders als beim Passagierverkehr kommt beim Luftfrachtverkehr erschwerend hinzu, dass Luftfracht stets nur in eine Richtung zu transportieren ist und für den Rückflug demgemäß eine vom Hinflug unabhängige Nachfrage zugrunde zu legen ist. Des weiteren sind anders als beim Passagierverkehr die einzelnen Ladungseinheiten in der Regel stark unterschiedlich hinsichtlich ihres Gewichtes und ihres Volumens und können daher nicht einheitlich behandelt werden. Auch bedingt durch die bereits dargestellten, dem Luftfrachtverkehr hinsichtlich Gewicht und Volumen auferlegten Beschränkungen hat es sich als wenig erfolgversprechend erwiesen, eingehende Frachtaufträge nach dem so genannten First-come-first-serve-Prinzip anzunehmen, da für Buchungen kurz vor dem Abflug vielfach höhere Raten bezahlt werden. Um dennoch möglichst reibungslos insbesondere auf die zeitnah zum Flugtermin eingehenden zahlreichen Einzelanfragen unmittelbar antworten zu können und dabei gleichzeitig das zur Verfügung stehende Gewicht und Volumen in einer die Kosten tragende Weise auf die einzelnen Anfragen aufteilen zu können, wird heutzutage auf EDV-gestützte Systeme zurückgegriffen. Dabei ist es ein Ziel der Luftfrachtunternehmen auf eine elektronische Anfrage postwendend, d.h. möglichst innerhalb von wenigen Sekunden, eine Zu- bzw. eine Absage erteilen zu können. Zwar sind moderne Rechenanlagen in der Lage, eine Vielzahl an einfachen Operationen innerhalb kürzester Zeit durchzuführen, allerdings sind bei dem Entscheidungsprozess, ob für einen bestimmten Flug eine Frachtanfrage angenommen werden kann oder nicht, derart viele Parameter, die zudem voneinander abhängen und darüber hinaus sich nach der Bestätigung einer jeden einzelnen Frachtanfrage ändern, zu berücksichtigen, dass sich nicht ohne weiteres eindeutige EDV-gestützte Entscheidungen innerhalb von z. B. einer Sekunde herbeiführen lassen. Hierbei ist zu berücksichtigen, dass die für den Passagier- und Frachtverkehr zum Einsatz kommenden Computer in Spitzenzeiten mehrere Tausend Transaktionen pro Sekunde bearbeiten müssen (s.a. Durham, "The Future of SABRE", in The Handbook of Airline Economics, D. Jenkins (ed.), The Aviation Weekly Group of the Mc-Graw-Hill Companies, New York, NY, 469-482, 1995).

Die US 6,263,315 B1 beschreibt beispielsweise ein Revenue Management System, mit dem angestrebt wird, über Luftfrachtanfragen in Abhängigkeit von den zur Verfügung stehenden Ressourcen basierend auf ausgewerteten Erfahrungswerten angemessen reagieren zu können. Hierbei handelt es sich um eine Weiterentwicklung der zuerst von K. Littlewood eingeführten sogenannten geschachtelten Kapazitätsbereitstellung ("Forecasting and Control of Passenger Bookings", British Overseas Airways Corp. (10/1972)). Nach Littlewood sind bei Flügen, die auch günstige Tarife anbieten, z.B. bei frühzeitiger Buchung, diesbezügliche Buchungsanfragen solange zu akzeptieren, wie der damit erzielte Erlös den zu erwartenden Erlös, beruhend auf zukünftige Buchungen zum Normaltarif, übersteigt. Gemäß der US 6,263,315 lassen sich mit multidimensionalen Tableaus die jeweiligen Ressourcen als Funktion der Kapazität klassifizieren. Mit diesem Verfahren soll angemessen auf Kapazitätsveränderungen reagiert werden können. Beispielsweise wird der zu überschreitende Grenzwert für eine jedwede Frachtzusage nach jeder erfolgten Frachtanfrage erneut angepasst. Auf diese Weise soll verhindert werden, dass zu frühzeitig einer unverhältnismäßig viel Laderaum beanspruchenden Frachtanfrage der Zuschlag erteilt wird, obwohl diese an sich die Frachtkosten nicht decken bzw. auch die verbleibende Frachtkapazität nicht oder nur schwerlich ausreichen würde, um einen kostendeckenden Flug zu erhalten.

Die US 6,526,392 B1 befasst sich allgemein mit EDV-gestützten Systemen zur optimierten Bereitstellung von Ressourcen im Passagier- und Luftfrachtverkehr und bedient sich hierbei u.a. der so genannten Linearen Programmierung.

Um die Flugkosten für einen einzelnen Flug zu minimieren, schlägt die US 6,134,500 vor, einen vierdimensionalen dynamischen programmunterstützten Suchalgorithmus einzusetzen. Dieser Lösungsansatz soll gleichermaßen auf Passagier- wie auch auf Frachtflüge anwendbar sein.

Die US 6,085,164 befasst sich ebenfalls mit der Bereitstellung von Frachttransport- und Passagiertransportkapazitäten zu angemessenen Preisen. Dabei wird ein stets optimierter Preis in Abhängigkeit von der aktuellen Nachfrage errechnet.

Die meisten Systeme und Verfahren zur Optimierung der Ausnutzung von Frachtkapazitäten hantieren mit Bezugsgrößen wie dem Frachtvolumen, dem Frachtgewicht, der maximalen Volumenkapazität und dem maximal zulässigen Gesamtfrachtgewicht für einen Flug. Darüber hinaus finden sich bei Kasilingam (http://soom.utdallas.edu/c4isn/isn_seminars-cscmc.htm) Ansätze, die Dichte bzw. das Volumengewicht der jeweiligen Einzelladung gleichzeitig mit dem zu veranschlagenden Preis darzustellen. Im Frachtgewerbe wird in Kontinaleuropa häufig das Volumengewicht als Bezugsgröße gewählt, während im angelsächsischen Raum in der Regel auf die Dichte zurückgegriffen wird. Das Volumengewicht dient im allgemeinen zusammen mit dem Abrechnungsgewicht und der Rate als Grundlage der Entgeltberechnung. Darüber hinaus wird das Volumengewicht für die Berechnung des spezifischen Gewichts- und Volumenverbrauchs des Abrechnungsgewichts einer Frachtsendung herangezogen. In einer Vereinbarung der International Air Transport Association (IATA) ist bereits vor längerer Zeit eine so genannte Standard-Density bzw. ein so genanntes Standard-Volumgewicht festgelegt worden mit der Einheit $m^3/t$. Dieses Standard-Volumengewicht liegt derzeit bei 6 $m^3/t$. Danach wird Fracht mit einem Volumengewicht zwischen 0 und dem Standard-Volumengewicht (einschließlich) nach dem Gewicht und Fracht mit einem tatsächlichen Volumengewicht oberhalb dem Standard-Volumengewicht nach dem Volumen, ausgedrückt in abrechenbaren Kilogramm, abgerechnet. Da es sich beim Luftfrachtverkehr in der Regel um Stückgutverkehr handelt, werden für die Voraussage von Transportströmen bzw. für die für einen bestimmten

Flug zu erwartende Fracht die Frachtgüter in Klassen eingeteilt. Denn würde man jedes einzelne Frachtgut als eigenständige Klasse betrachten, würde ein unangemessen hoher rechentechnischer Aufwand resultieren, um einigermaßen verläßliche Prognosen über die zu erwartende Fracht abgeben zu können. Die Frachtklassen sollten daher einen überschaubaren Umfang behalten und dennoch dazu geeignet sein, ähnliche Frachtgüter bzw. -elemente in einer Klasse zusammenzufassen, um diese dann als eine Einheit behandeln zu können. Gegenwärtig wird im Luftfrachtgewerbe entweder die Rate pro Gewichtseinheit, das Volumengewicht (bzw. die Dichte) oder der Sendungsertrag zur Klassenbildung herangezogen (s.a. Kasilingam, a.a.O.; I.Z. Karaesmen, Dissertation, Three Essays on Revenue Management, Columbia University, 2001; Sabre, http://www.sabre.com/products/airline/pdf/CargoRevMgmt.pdf). Bei dieser Art der Klassenbildung wird Fracht mit einem Volumengewicht von z.B. 1 $m^3/t$ und eine solche mit einem Volumengewicht von z.B. 2 $m^3/t$ als ebenso ähnlich angesehen wie Fracht mit Volumengewichtswerten von 3 und 4, 5 und 6 bzw. 7 und 8 $m^3/t$. Ausgehend von dem Sachverhalt, dass der spezifische Volumenverbrauch sich für Volumengewichtswerte im Bereich von 0 bis einschließlich zum Standard-Volumengewicht herleitet aus dem Quotienten von tatsächlichem Volumengewicht zu Standard-Volumengewicht und für Volumengewichtswerte im Bereich zwischen dem Standard-Volumengewicht und Unendlich aus dem Quotienten von Standard-Volumengewicht zu tatsächlichem Volumengewicht, stellt man fest, dass der spezifische Volumenverbrauch sich nur bei Werten zwischen Null und dem Standard-Volumengewicht proportional zum Volumengewicht verhält. Hingegen nimmt bei Volumengewichtswerten über dem Standard-Volumengewicht der spezifische Gewichtsverbrauch nicht in dem Maße ab, wie der spezifische Volumenverbrauch bei Volumengewichtswerten unter dem Standard zunimmt. Je weiter das Volumengewicht über dem Standard-Volumengewicht liegt, um so weniger adäquat wird die Ähnlichkeit eines abrechenbaren Kilogramms im spezifischen Gewichts- und Volumenverbrauch abgebildet. Von Nachteil ist bei dieser Vorgehensweise weiterhin, dass sich die Ähnlichkeit zweier Volumengewichte nicht angeben lässt, wenn einer der Werte Unendlich ist. Fracht, der der Volumengewichtswert Unendlich zugewiesen wird, ist im Luftverkehr durchaus nicht unüblich. Beispielsweise wird bei einer bereits gebuchten Sendung einer nachträglichen Volumenerhöhung dem Volumengewicht der Wert Unendlich zugeordnet. Schließlich lässt sich ebenfalls das Volumengewicht des Abrechnungsgewichts nicht visualisieren, da der Wertebereich des Volumengewichts sich von Null bis Unendlich erstreckt. Darüber hinaus ist der Achsenabschnitt zwischen dem Standard-Volumengewicht und dem Wert Unendlich überrepräsentiert. Dieser Achsenabschnitt ist ohne eine Skalierung des Volumengewichts länger als der Abschnitt zwischen dem Wert Null und dem Standard-Volumengewicht. Das heißt, dass die Variation des spezifischen Volumenverbrauchs bei gleichem spezifischen Gewichtsverbrauch anders dargestellt wird als die Variation des spezifischen Gewichtsverbrauchs bei gleichem spezifischen Volumenverbrauch, d.h. die Dimensionen Gewicht und Volumen sind hinsichtlich des abrechenbaren Gewichts nicht gleichberechtigt. Wie angesichts der dargestellten Sachlage basierend auf dem Volumengewicht eine optimale Klasseneinteilung geschaffen werden kann, mit der sich tatsächlich ähnliche Fracht einander zuordnen lässt, bezeichnet derzeit auch Karaesmen, a.a.O., Seite 60, noch als offen. Nach Karaesmen stehen bislang keine Systeme zur Verfügung, um den Gewichts/Volumenraum adäquat zu unterteilen, die vom Umfang her handhabbar sind und gleichzeitig die Realität angemessen wiedergeben. Vielmehr würden die gegenwärtigen Ansätze nicht darüber hinausgehen, die Probleme im Zusammenhang mit dem Cargo Revenue Management zu umreißen und bestehende Systeme für den Luftfracht- und Passagierverkehr zu vergleichen.

In der US 2003/065542 A1 wird ein Revenue Management System beschrieben, daß sich auch zur Optimierung des Luftfrachttransports einsetzen lassen soll. Als Kapazitätsvariablen gehen in dieses System das Frachtvolumen und das Frachtgewicht ein. Das gemäß der US 2003/065542 A1 zur Anwendung kommende Verfahren basiert auf einer sehr genauen und umfassenden Analyse der Historie vorangegangener Frachttransporte über einen nicht unerheblichen Zeitraum. Die auf diese Weise erhaltenen Wahrscheinlichkeitsaussagen über das Eintreten bestimmter Frachtbuchungsanfragen dienen dazu, entscheiden zu können, ob eine konkrete Buchungsanfrage, die zu einem bestimmten Zeitpunkt des Ladevorgangs eingeht, anzunehmen oder abzulehnen ist. Hierbei werden unter anderem saisonale Einflußfaktoren ebenso berücksichtigt wie die bereits verstrichene Zeit seit Beginn der Buchungsperiode. Das in der US 2003/065542 A1 beschriebene Verfahren stellt sich als sehr komplex und aufwendig in der Implementierung dar. Insbesondere ist eine genaue Kenntnis der Historie vorangegangener Frachttransporte unerläßlich, um zuverlässige Prognosen abgeben zu können. Eine zu obiger Anmeldung korrespondierende Offenbarung findet sich auch bei S. Gliozzi et al. "A New Yield Management Approach for Continuous Multi-Variable Bookings: The Airline Cargo Case" in "Operations Research in Space and Air", T. Ciriani et al. (eds.), 369 - 391, Kluwer, 2003.

Alle bestehenden Systeme und Verfahren zur optimalen Ausnutzung des Frachtraumes in einem Flugzeug haben bislang nicht zu einem zufriedenstellenden Ansatz geführt, um auf möglichst zuverlässige Weise eine optimal die bestehenden Ressourcen ausnutzende Frachtraumbeladung bei optimalem Ertrag zu erhalten.

Der vorliegenden Erfindung liegt daher die Aufgabe zugrunde, ein System bzw. ein Verfahren zur Verfügung zu stellen, mit dem die Frachtkapazität eines jedweden Frachttransportes, insbesondere eines Luftfrachttransportes, insbesondere auch unter Ertragsgesichtspunkten, möglichst optimal ausgenutzt werden kann, ohne dabei auf sehr zeitaufwendige EDV-gestützte Systeme angewiesen zu sein, mit denen versucht wird, die äußerst komplexen sich gegenseitig bedingenden Zusammenhänge beim Frachtverkehr abzubilden.

Demgemäß wurde ein Verfahren gefunden, das sich dadurch auszeichnet, dass

- man für einen Frachttransport eingehende Transportnachfragen für Frachteinheiten n, insbesondere für jede Transportnachfrage, in Bezug auf ihr Volumen $V_n$, vorzugsweise in der Einheit m$^3$, und ihr Gewicht $W_n$, vorzugsweise in der Einheit t, und gegebenenfalls ihre Rate $r_n$ als Preis, vorzugsweise in einer offiziell anerkannten Währungseinheit, pro abrechenbarer Gewichtseinheit cw, vorzugsweise in abrechenbaren kg, erfasst,
- die Volumengewichte $d_n$ der Frachteinheiten n, vorzugsweise in m$^3$/t, bestimmt, wobei,

  - falls das Gewicht $W_n$ der n-ten Frachteinheit > 0 und das Volumen $V_n$ der n-ten Frachteinheit $\geq$ 0, dann das Volumengewicht $d_n = (V_n/W_n)$ ist,
  - falls das Gewicht $W_n$ der n-ten Frachteinheit = 0 und das Volumen $V_n$ der n-ten Frachteinheit > 0, dann das Volumengewicht $d_n = \infty$ ist, und
  - falls das Gewicht $W_n$ der n-ten Frachteinheit = 0 und das Volumen $V_n$ der n-ten Frachteinheit = 0, dann das Volumengewicht $d_n$ unbestimmt ist,

- ausgehend von dem ermittelten Volumengewicht $d_n$ das skalierte Volumengewicht $sd_n$ bestimmt, wobei,

  - falls $d_n = 0$, dann $sd_n = 0$ ist,
  - falls $0 < d_n \leq ds$, dann $sd_n = d_n/2ds$ ist,
  - falls $ds < d_n < \infty$, dann $sd_n = 1 - ds/2d_n$ ist, und
  - falls $d_n = \infty$, dann $sd_n = 1$ ist,

  wobei ds ein gegebenes Standard-Volumengewicht, vorzugsweise in m$^3$/t, ist, das insbesondere dem Standard-Volumengewicht $ds_{IATA}$ der IATA entspricht;

- ermittelt, ob das skalierte Volumengewicht $sd_n$ der Transportnachfrage für die n-te Frachteinheit ein extremes skaliertes Volumengewicht $sd_n$ besitzt, das in einem Bereich von $0 \leq sd_n < 0,5$ oder von $0,5 < sd_n \leq 1$, vorzugsweise in einem Bereich von $0 \leq sd_n \leq 0,4$ oder von $0,6 \leq sd_n \leq 1$ und besonders bevorzugt in einem Bereich von $0 \leq sd_n \leq 0,2$ oder von $0,8 \leq sd_n \leq 1$ liegt, und
- die Transportnachfrage bestätigt, falls diese ein extremes skaliertes Volumengewicht $sd_n$ aufweist, sofern die maximale Kapazität an Frachtvolumen $V_{max}$ und die maximale Kapazität an Frachtgewicht $W_{max}$ mit der Annahme der n-ten Transportnachfrage nicht überschritten werden.

In einer bevorzugten Ausführungsform wird eine Transportnachfrage zusätzlich erst dann bestätigt, wenn bei Annahme dieser Transportnachfrage für eine Frachteinheit n das verbleibende Restvolumen $V_{Rest}$ und das verbleibende Restgewicht $G_{Rest}$, bezogen auf die Gesamtkapazitäten $V_{max}$ und $G_{max}$, ein nicht extremes skaliertes Volumengewicht der theoretisch noch möglichen und/oder erwarteten Gesamtbeladung zulassen, das dem Standard-Volumengewicht ds entspricht oder nahekommt. Auf diese Weise gelingt eine optimierte Bebuchung bzw. Beladung eines Frachttransportes mit Frachteinheiten gemischter Volumengewichte, d.h. ein Frachttransport mit einem so genannten Density-Mix, der das abrechenbare Gewicht maximiert.

Beispielsweise ist es auch vorstellbar, dass sich das Verhältnis von zur Verfügung stehender Restvolumenkapazität $V_{Rest}$ zu der zur Verfügung stehenden Restgewichtskapazität $W_{Rest}$ während des Buchungszeitraums in der Weise verändert, dass eine Beladung mit einem nicht extremen skalierten Volumengewicht über alle buchbaren Frachteinheiten nur noch dann erreichbar ist, wenn entweder Fracht mit sehr niedrigem, z.B. sehr extremem, Volumengewicht mit Fracht kombiniert wird, die ein skaliertes Volumengewicht im Bereich $0,5 < sd < 1$ aufweist, oder wenn Fracht mit sehr hohem, d.h. sehr extremem, Volumengewicht mit Fracht kombiniert wird, die ein skaliertes Volumengewicht im Bereich von $0 \leq sd < 0,5$ aufweist.

Demgemäß zeichnet sich die eine vorteilhafte Weiterbildung des erfindungsgemäßen Verfahrens dadurch aus, dass

- man für einen Frachttransport eingehende Transportnachfragen für Frachteinheiten n, insbesondere für jede Transportnachfrage, in Bezug auf ihr Volumen $V_n$, vorzugsweise in der Einheit $m^3$, und ihr Gewicht $W_n$, vorzugsweise in der Einheit t, und gegebenenfalls ihre Rate $r_n$ als Preis, vorzugsweise in einer offiziell anerkannten Währungseinheit, pro abrechenbarer Gewichtseinheit, vorzugsweise in abrechenbaren kg, erfasst,
- die Volumengewichte $d_n$ der Frachteinheiten n bestimmt, wobei,

  - falls das Gewicht $W_n$ der n-ten Frachteinheit $> 0$ und das Volumen $V_n$ der n-ten Frachteinheit $\geq 0$, dann das Volumengewicht $d_n = (V_n/W_n)$ ist,
  - falls das Gewicht $W_n$ der n-ten Frachteinheit $= 0$ und das Volumen $V_n$ der n-ten Frachteinheit $> 0$, dann das Volumengewicht $d_n = \infty$ ist, und
  - falls das Gewicht $W_n$ der n-ten Frachteinheit $= 0$ und das Volumen $V_n$ der n-ten Frachteinheit $= 0$, dann das Volumengewicht $d_n$ unbestimmt ist,

- ausgehend von dem ermittelten Volumengewicht $d_n$ das skalierte Volumengewicht $sd_n$ bestimmt, wobei,

  - falls $d_n = 0$, dann $sd_n = 0$ ist,
  - falls $0 < d_n \leq ds$, dann $sd_n = d_n/2ds$ ist,
  - falls $ds < d_n < \infty$, dann $sd_n = 1 - ds/2d_n$ ist, und
  - falls $d_n = \infty$, dann $sd_n = 1$ ist,

  wobei ds ein gegebenes Standard-Volumengewicht ist, das insbesondere dem Standard-Volumengewicht $ds_{IATA}$ der IATA entspricht;
- die noch zur Verfügung stehende Kapazität an Volumen $V_{Rest}$ unter Berücksichtigung der maximalen Kapazität an Frachtvolumen $V_{max}$ und die noch zur Verfügung stehende Kapazität an Gewicht $W_{Rest}$ unter Berücksichtigung der maximalen Kapazität an Frachtgewicht $W_{max}$ ermittelt,
- das Volumengewicht $d_k$ der noch verfügbaren Kapazität berechnet über $d_k = V_{Rest}/W_{Rest}$, mit $V_{Rest}$ vorzugsweise in der Einheit $m^3$ und $W_{Rest}$ vorzugsweise in der Einheit t, und

  - falls $d_k = 0$, dann $sd_k = 0$ ist,
  - falls $0 < d_k \leq ds$, dann $sd_k = d_k/2ds$ ist,
  - falls $ds < d_k < \infty$, dann $sd_k = 1 - ds/2d_k$ ist, und
  - falls $d_k = \infty$, dann $sd_k = 1$ ist, wobei $sd_k$ das skalierte Volumengewicht der noch verfügbaren Kapazität $d_k$ darstellt und wobei

- falls das Gewicht $W_{Rest} > 0$ und das Volumen $V_{Rest} \geq 0$, dann das Volumengewicht $d_k = (V_{Rest}/W_{Rest})$ ist,
- falls das Gewicht $W_{Rest} = 0$ und das Volumen $V_{Rest} > 0$, dann das Volumengewicht $d_k = \infty$ ist, und
- falls das Gewicht $W_{Rest} = 0$ und das Volumen $V_{Rest} = 0$, dann das Volumengewicht $d_k$ unbestimmt ist,

- ermittelt, ob das skalierte Volumengewicht $sd_k$ der zur Verfügung stehenden Kapazität kleiner, größer oder gleich 0,5 ist, und

- falls $sd_k < 0,5$, die Transportnachfrage bestätigt, wenn $sd_n < sd_k$ oder wenn $0 \leq sd_n \leq 0,5$, insbesondere $0 \leq sd_n \leq 0,4$ und besonders bevorzugt $0 \leq sd_n \leq 0,2$,
- falls $sd_k > 0,5$, die Transportnachfrage bestätigt, wenn $sd_n > sd_k$ oder wenn $0,5 \leq sd_n \leq 1$, insbesondere $0,6 \leq sd_n \leq 1$ und besonders bevorzugt $0,8 \leq sd_n \leq 1$ und
- falls $sd_k = 0,5$, die Transportnachfrage bestätigt, wenn $0 \leq sd_n < 0,5$ oder $0,5 < sd_n \leq 1$, vorzugsweise $0 \leq sd_n \leq 0,4$ oder $0,6 \leq sd_n \leq 1$ und besonders bevorzugt $0 \leq sd_n \leq 0,2$ oder $0,8 \leq sd_n \leq 1$,

sofern die maximale Kapazität an Frachtvolumen $V_{max}$ und die maximale Kapazität an Frachtgewicht $W_{max}$ mit der Annahme der n-ten Frachtbuchungsnachfrage nicht überschritten werden.

Das Standard-Volumengewicht wird in einer bevorzugten Ausführungsform mit 5 oder 6 $m^1/t$ angesetzt. Bei letzterer Angabe handelt es sich um das von der IATA gegenwärtig festgelegte Standard-Volumengewicht. Das Standard-Volumengewicht spielt deswegen eine so große Rolle, weil es die zentrale Bestimmungsgröße des abrechenbaren Gewichts darstellt. Außerdem spiegelt dieser Wert gegenwärtig die durchschnittlichen tatsächlichen Gegebenheiten wider, d.h. erfahrungsgemäß liegt das Verhältnis von Volumen zu Gewicht zur Zeit bei Luftfrachtgütern bei etwa 6 $m^3/t$ (zukünftig möglicherweise bei etwa 5 $m^3/t$). Dementsprechend sind in der Regel auch die Frachttransporter heutzutage in der Weise konzipiert, dass sie eine verfügbare maximale Volumenkapazität und eine verfügbare maximale Gewichtskapazität aufweisen, die an den vorhergehend genannten Wert der Standard-Volumengewicht angepasst ist. Im Sinne der vorliegenden Erfindung gibt das Standard-Volumengewicht den Volumengewichtswert wieder, bis zu dem (einschließlich) Fracht nach dem Gewicht oder basierend auf dem Gewicht abgerechnet wird und oberhalb dem Fracht nach dem Volumen abgerechnet wird, im vorliegenden Fall ausgedrückt in abrechenbarem Gewicht, insbesondere in abrechenbaren Kilogramm.

Das Volumengewicht dk der noch verfügbaren Kapazität, d.h. des Kapazitätsangebots, ist streng zu unterscheiden von dem Standard-Volumengewicht ds und kann gleich oder ungleich ds sein. Beispielsweise ist es möglich, dass der zur Verfügung stehende Frachttransporter von vornherein nicht in der Weise konzipiert ist, dass dieser ein Verhältnis von verfügbarer maximaler Volumenkapazität zu verfügbarer maximaler Gewichtskapazität aufweist, das dem Standard-Volumengewicht gemäß IATA entspricht.

Eine Frachteinheit im Sinne der vorliegenden Erfindung kann sich aus einem einzelnen Frachtgut oder aus mehreren einzelnen Frachtgütern zusammensetzen, die z.B. als eine Einheit gehandelt bzw. transportiert werden sollen. Der Frachtraum im Sinne der vorliegenden Erfindung umfasst den Frachtraum eines Frachttransporters, z.B. eines Frachtflugzeuges ebenso, wie denjenigen Raum, der in Passagierflugzeugen nach Berücksichtigung des Passagiergepäcks verbleibt, um noch Frachtgut aufzunehmen.

Grundsätzlich spricht man im Kontext der vorliegenden Erfindung im Fall von $0 \leq d < ds$ von einem extremen, hohen Volumengewicht d und im Fall von $ds < d \leq \infty$ von einem extremen, niedrigen Volumengewicht. Falls d gleich ds ist, liegt, wie bereits ausgeführt, das nicht extreme Standard-Volumengewicht vor. Mit dem vorliegenden Verfahren wird erstmalig das Volumengewicht von Frachtsendungen bzw. Frachteinheiten einer die Ressourcen optimal nutzenden Klassenbildung zugänglich gemacht. Hierfür ist es erforderlich, dass anstelle des Volumengewichts das skalierte Volumengewicht eingesetzt wird. Der erfindungsgemäße Erfolg stellt sich insbesondere dann ein, wenn Frachteinheiten für einen Frachtguttransport kombiniert werden, die in ihren jeweiligen skalierten Volumengewichten, wie oben ausgeführt, stark divergieren. Mit dem erfindungsgemäßen Verfahren gelingt regelmäßig ein optimierter Volumengewichts-Mix bzw. Dichte-Mix an aufzunehmenden Frachteinheiten.

Bei Frachtguttransporten kann es vorkommen, dass der Frachttransporter nur auf einer Strecke im Hin- und Rückverkehr eingesetzt wird. Weitaus häufiger ist allerdings der Fall anzutreffen, dass bis zum Ziel ein oder mehrere Zwischenstopps eingelegt werden, bei denen Fracht teilweise oder vollständig abgeladen und neue Fracht hinzugeladen wird. Das gleiche trifft zu auf solche Transporte, bei denen der Transporter über mehrere Zwischenstopps wieder am Ausgangsort eintrifft. Die Verbindung zwischen zwei aufeinanderfolgenden Stopps, d.h. die Strecke zwischen der möglichen oder tatsächlichen Aufnahme eines Transports von einem Ausgangsort oder einem Zwischenstopp und seinem nächsten Stopp, wird im allgemeinen, insbesondere aber im Luftfrachtverkehr, als Leg bezeichnet. Demgemäß lässt sich ein Transport mit ein oder mehreren Zwischenstopps in mehrere aufeinanderfolgende Legs unterteilen. Wird ein Frachtgut über ein oder mehrere solcher aufeinanderfolgenden Legs transportiert, bezeichnet man diese Transportstrecke jeweils auch als Segment. Beispielsweise umfasst ein Frachtflug von A nach D über die Stationen B und

**EP 1 596 317 A1**

C die drei Legs A-B, B-C und C-D sowie die sechs Segmente A-B, A-C, A-D, B-C, B-D und C-D. Ein (Fracht)Flug einer bestimmten Flugnummer lässt sich somit, sofern mindestens ein Zwischenstopp gegeben ist, einteilen in Legs, Segmente und Flug. In gleicher Weise wie die erfindungsgemäßen Verfahren auf Legs, Segmente und Flüge anwendbar sind, können mit diesen auch ganze Flugnetze erfasst werden. Hierbei handelt es sich um mindestens zwei Flüge mit unterschiedlichen Flugnummern. Denn auch bei dem Transport von Frachtgut in einem Flugnetz stellt sich der erfindungsgemäße Erfolg bei Verwendung des skalierten Volumengewichts bzw. der skalierten Dichte ein. Regelmäßig wird der Erlös $R_F$ über den gesamten Flug (Einzelflugoptimierung) oder das Flugnetz (Flugnetzoptimierung) bestimmt, während das Kapazitätsangebot auf der Ebene der einzelnen Legs und die prognostizierte Nachfrage nach Frachtraum für zu transportierende Frachteinheiten auf der Segmentebene, d.h. dem Ursprungs- und Bestimmungsort im Rahmen einer Flugnummer oder auf der O&D-Ebene, d.h. dem Ursprungs- und Bestimmungsort im Rahmen eines Flugnetzes, abgeschätzt bzw. kalkuliert wird. Buchungsanfragen werden demgemäß regelmäßig auf Segmentebene, d.h. innerhalb eines Fluges, oder auf O&D-Ebene, d.h. innerhalb eines Flugnetzes angefragt.

Die erfindungsgemäßen Verfahren und Systeme, wie in der vorliegenden Beschreibung und den Ansprüchen ausgeführt, machen im wesentlichen, d.h. sofern nicht ausdrücklich anderweitig definiert, von den folgenden primären Einheiten Gebrauch:

| Abrechenbares Gewicht cw | [chkg] |
|---|---|
| Gewicht G | [kg] |
| Volumen V | [m$^3$] |
| Währung | [Währungseinheit]. |

Des weiteren kommen die folgenden tatsächlichen und/oder prognostizierten Größen zum Einsatz:

| Frachterlös der n-ten Frachteinheit [Währungseinheit] | $r_n$ |
|---|---|
| Frachterlös eines Fluges oder | V |
| eines Flugnetzes [Währungseinheit] $R_F$ | |
| Volumen [m$^3$] oder auch [Abrechnungsgewicht (ch kg)] | |
| Gewicht [kg] oder auch [Abrechnungsgewicht (ch kg)] | W |
| Volumengewicht [m$^3$/t] | d |
| Rate [Währungseinheit/Abrechnungsgewicht (chkg)] | $r_n$ |
| Bid-Preis [Währungseinheit/Abrechnungsgewicht (chkg)] | bp |
| Gewichts-Bid-Preis | bpw |
| [Währungseinheit/Abrechnungsgewicht (chkg)] | |
| Volumen-Bid-Preis | bpv |
| [Währungseinheit/Abrechnungsgewicht (chkg)] | |
| Profitabilität | p |
| [Währungseinheit/Abrechnungsgewicht (chkg)] | |

Diese vorangehend spezifizierten primären und sekundären Einheiten und Größen können sich sowohl auf eine bestimmte Nachfrageprognose und eine konkrete Buchungsanfrage sowie auf ein Leg, ein Segment, einen Flug oder ein Flugnetz beziehen. Für den Fall, dass es bei den erfindungsgemäßen Verfahren und Systemen auf eine solche konkrete Bezugnahme ankommt, wird dieses entsprechend kenntlich gemacht. Im allgemeinen wird der Frachterlös in Bezug auf einen (Gesamt-)Flug ermittelt. Bei der Buchungsanfrage bzw. der prognostizierten Nachfrage stellt man hingegen regelmäßig ab auf einzelne Segmente eines Fluges. Volumen- und Gewichtskapazitäten werden wiederum regelmäßig in Bezug auf ein Leg bestimmt. Die vorhergehend beschriebenen Zuordnungen sind bevorzugterweise auch für die Ausführungsformen der vorliegenden Erfindung einschlägig.

Die erfindungsgemäßen Verfahren und Systeme können sowohl auf einzelne Legs, auf Segmente wie auch auf den gesamten Transportweg vom Ausgangs- bis zum Zielort angewendet werden.

Wenngleich die vorliegende Beschreibung vornehmlich auf das Volumengewicht bzw. das skalierte Volumengewicht von Frachtgut bzw. Frachtguteinheiten abstellt, kann selbstverständlich in gleicher Weise auch deren Dichte bzw. skalierte Dichte als Bezugsgröße herangezogen werden. Für diesen Fall sind sämtliche Angaben, die sich auf das Volumengewicht beziehen, in entsprechender Weise auf eine Dichteangabe als Bezugsgröße umzuändern. Da Dichte und Volumengewicht sich reziprok zueinander verhalten, ist der Übergang vom Volumengewicht auf die Dichte und vice versa in den vorliegend beanspruchten Verfahren und Systemen für den Fachmann ohne weiteres möglich.

Die der Erfindung zugrunde liegende Aufgabe wird des weiteren durch ein Verfahren gelöst, bei dem

- man für einen Frachttransport eingehende Transportnachfragen für Frachteinheiten n in Bezug auf ihr Volumen $V_n$, insbesondere in der Einheit $m^3$, ihr Gewicht $W_n$, insbesondere in der Einheit t, ihr abrechenbares Gewicht cw, vorzugsweise in abrechenbaren kg, und ihre Rate $r_n$ pro abrechenbares Gewicht cw der Frachteinheit n erfasst bzw. abbildet,
- das Volumengewicht $d_n$ der Frachteinheiten n bestimmt, wobei,

  - falls das Gewicht $W_n$ der n-ten Frachteinheit $\geq 0$ und das Volumen $V_n$ der n-ten Frachteinheit $\geq 0$, dann das Volumengewicht $d_n = (V_n/W_n)$ ist,
  - falls das Gewicht $W_n$ der n-ten Frachteinheit $= 0$ und das Volumen $V_n > 0$, dann das Volumengewicht $d_n = \infty$ ist, und
  - falls das Gewicht $W_n$ der n-ten Frachteinheit $= 0$ und das Volumen $V_n = 0$, dann das Volumengewicht $d_n$ unbestimmt ist,

- ausgehend von dem ermittelten Volumengewicht $d_n$ das skalierte Volumengewicht $sd_n$ bestimmt, wobei,

  - falls $d_n = 0$, dann $sd_n = 0$ ist,
  - falls $0 < d_n \leq ds$, dann $sd_n = d_n/2ds$ ist,
  - falls $ds < d_n < \infty$, dann $sd_n = 1 - ds/2d_n$ ist, und
  - falls $d_n = \infty$, dann $sd_n = 1$ ist,

  wobei ds ein Standard-Volumengewicht ist, das insbesondere dem Standard-Volumengewicht $ds_{-IATA}$ der IATA entspricht;
- auf der Grundlage der ermittelten Menge an skalierten Volumengewichten $sd_n$ mindestens zwei, insbesondere mindestens vier, Volumengewichtsklassen $K_x$ mit unteren und oberen Klassengrenzen dg bildet, wobei keine Klasse $K_x$ gebildet wird, die eine untere Grenze mit einem sd-Wert < 0,5 und eine obere Grenze mit einem sd- Wert> 0,5 aufweist,
- die Volumengewichte der Klassengrenzen dg in der Weise berechnet, dass,

  - falls sdg = 0, dann dg = 0 ist,
  - falls $0 < sdg \leq 0,5$, dann $dg = 2\, sdg \times ds$ ist,
  - falls $0,5 < sdg < 1$, dann $dg = ds/(2 - 2sdg)$ ist, und
  - falls sdg = 1, dann $dg = \infty$ ist, und

- die Frachtguteinheiten n den ermittelten Volumengewichtsklassen $K_x(d_n)$ zuordnet.

Eine Weiterbildung des vorangehend geschilderten Verfahrens zeichnet sich dadurch aus, dass über jede Klasse $K_x$ das abrechenbare Gesamtgewicht mittels Addition des abrechenbaren Gewichts der in einer Klasse eingeordneten Frachtguteinheiten n ermittelt wird.

Bevorzugt werden die Klassengrenzen dabei derart ausgewählt, dass die Klassengrenzen dg von Klassen $K_x$, die kein abrechenbares Gewicht enthalten bzw. denen kein abrechenbares Gewicht zugewiesen werden kann, weitestmöglich voneinander beabstandet sind.

In einer alternativen Ausführungsform werden die Klassengrenzen in im wesentlichen äquidistanten Abständen gewählt, basierend auf dem skalierten Volumengewicht. Insbesondere hat sich hierbei die Bildung von maximal 12 aufeinanderfolgende Klassen in den Grenzen Null bis Eins, bezogen auf das skalierte Volumengewicht sd, mit jeweils gleicher Klassenbreite als sehr geeignet erwiesen. Benachbarte Klassen weisen dabei jeweils eine gemeinsame Klassengrenze auf.

Weiterhin ist es nicht schädlich, wenn bei der Wahl äquidistanter Klassengrenzen eine oder mehrere von diesen durch eine Anhäufung bzw. einen Cluster an Volumengewichtswerten $sd_n$ verlaufen.

Die der Erfindung zugrunde liegende Aufgabe wird des weiteren durch ein Verfahren gelöst, bei dem

- man für einen Frachttransport prognostizierte Transportmengen in Bezug auf ihr Volumen $V_m$, insbesondere in der Mengeneinheit $m^3$, ihr Gewicht $W_m$, insbesondere in der Mengeneinheit t, und ihren Nachfragepreis $r_m$ für das abrechenbare Gewicht cw, vorzugsweise in abrechenbaren kg, der Frachtmenge m erfasst,
- das Volumengewicht $d_m$ der Frachtmengen m bestimmt, wobei,

  - falls das Gewicht $W_m$ der Frachtmenge m $\geq 0$ und das Volumen $V_m$ der Frachtmenge m $\geq 0$, dann das Volumengewicht $d_m = (V_m/W_m)$ ist,
  - falls das Gewicht $W_m$ der Frachtmenge m $= 0$ und das Volumen $V_m > 0$, dann das Volumengewicht $d_m = \infty$

ist, und

- falls das Gewicht $W_m$ der Frachtmenge m = 0 und das Volumen $V_m$ = 0, dann das Volumengewicht $d_m$ unbestimmt ist,

- ausgehend von dem ermittelten Volumengewicht $d_m$ das skalierte Volumengewicht $sd_m$ bestimmt, wobei,

  - falls $d_m$ = 0, dann $sd_m$ = 0 ist,
  - falls $0 < d_m \leq ds$, dann $sd_m$ = $d_m$/2ds ist,
  - falls $ds < d_m < \infty$, dann $sd_m$ = 1 - ds/2$d_m$ ist, und
  - falls $d_m$ = $\infty$, dann $sd_m$ = 1 ist,

  wobei ds ein Standard-Volumengewicht ist, das insbesondere dem Standard-Volumengewicht $ds_{IATA}$ der IATA entspricht;
- auf der Grundlage der prognostizierten Menge mit den skalierten Volumengewichten $sd_m$ mindestens zwei, insbesondere mindestens vier, Volumengewichtsklassen $K_z$ mit unteren und oberen Klassengrenzen $d_f$ bildet, wobei keine Klasse $K_z$ gebildet wird, die eine untere Grenze mit einem sd-Wert < 0,5 und eine obere Grenze mit einem sd-Wert > 0,5 aufweist,
- die Volumengewichte $d_f$ der Klassengrenzen in der Weise berechnet, dass,

  - falls $sd_f$ = 0, dann $d_f$ = 0 ist,
  - falls $0 < sd_f \leq 0,5$, dann $d_f$ = 2 $sd_f$ x ds ist,
  - falls $0,5 < sd_f < 1$, dann $d_f$ = ds/(2 - 2$sd_f$) ist, und
  - falls $sd_f$ = 1, dann $d_f$ = $\infty$ ist, und
  - die Frachtmengen m den ermittelten Volumengewichtsklassen $K_z(d_m)$ zuordnet.

Eine Weiterbildung des vorangehend geschilderten Verfahrens zeichnet sich dadurch aus, dass über jede Klasse $K_z$ das abrechenbare Gesamtgewicht aller in einer Klasse einordbaren Frachtmengen m ermittelt wird.

Bevorzugt werden die Klassengrenzen dabei derart ausgewählt, dass die Klassengrenzen $d_f$ von Klassen $K_z$, die kein abrechenbares Gewicht enthalten bzw. denen kein abrechenbares Gewicht zugewiesen werden kann, weitestmöglich voneinander beabstandet sind.

Weiterhin ist es nicht schädlich, wenn bei der Wahl äquidistanter Klassengrenzen eine oder mehrere von diesen durch eine Anhäufung bzw. einen Cluster an Volumengewichtswerten $sd_f$ verlaufen.

Im Sinne der vorliegenden Erfindung wird der Begriff Frachtmenge m im Zusammenhang mit prognostizierter bzw. erwarteter Fracht verwendet. Eine erwartete Frachtmenge kann, z.B. basierend auf statistisch aufbereiteten historischen Werten, hinsichtlich ihres Volumengewichtes $d_m$ und ihrer Rate $r_m$ klassifiziert werden, wobei diese Werte nicht als akkurate Werte, sondern eher als verschmierte Werte aufgefasst werden. Somit ist es ebenfalls möglich, dass eine Frachtmenge m bereits eine Klasse $K_z$ definiert.

Die erfindungsgemäße Klassenbildung von Volumengewichten basierend auf dem skalierten Volumengewicht ermöglicht es erstmalig, auch Buchungsanfragen bzw. insbesondere Buchungs-Updates, denen ein Gewicht von 0 t oder ein Volumen von 0 m$^3$ zugewiesen worden ist, in realistischer Weise zu berücksichtigen. Auch gelingt es über das skalierte Volumengewicht, die Ähnlichkeit bzw. Unähnlichkeit von Fracht, die nach Volumen abgerechnet wird, mit Fracht, die nach Gewicht abgerechnet wird, festzustellen. Auf diese Weise wird eine optimierte Beladung eines Frachtguttransporters ermöglicht. Denn zum einen kann verlässlich ermittelt werden, ob Frachteinheiten als ähnlich einzustufen sind, und zum anderen kann ebenso verlässlich festgestellt werden, ob die Volumengewichte von Frachteinheiten sich hinreichend stark unterscheiden. Eine tatsächliche Transportnachfrage kann sodann bestätigt werden, wenn diese eine Frachteinheit zum Gegenstand hat, deren Volumengewicht einer Volumengewichtsklasse $K_x$ bzw. $K_z$ zuzuordnen ist, deren Volumengewichtswerte als extrem zu klassifizieren sind, sofern die maximale Kapazität an Frachtvolumen $V_{max}$ und die maximale Kapazität an Frachtgewicht $W_{max}$ mit der Annahme der Frachtbuchungsnachfrage nicht überschritten werden.

Gemäß einer besonders bevorzugten Ausführungsform des erfindungsgemäßen Verfahrens, insbesondere zur Optimierung des Frachterlöses, ist vorgesehen, dass das abrechenbare Gewicht cw bzw. indirekt die Rate $r_n$ für eine Frachteinheit n basierend auf dem Gewicht $G_n$ bestimmt wird, wenn das skalierte Volumengewicht $sd_n$ < 0,5 ist, und basierend auf dem Volumen $V_n$ bestimmt wird, wenn das skalierte Volumengewicht $sd_n \geq 0,5$ ist.

Erfindungsgemäß kann dabei weiterhin vorgesehen sein, dass das Abrechnungsgewicht cw wie folgt definiert ist:

- falls das Gewicht $W_n$ in t gleich 0 und das Volumen $V_n$ in m$^3$ gleich 0 ist, dann ist cw = 0,
- falls $0 \leq d_n \leq ds$, dann ist cw = $W_n \times 1000$ und

- falls ds < $d_n \leq \infty$, dann ist cw = $V_n \times$ 1000/ds.

Die der Erfindung zugrunde liegende Aufgabe wird des weiteren gelöst durch ein Verfahren, bei dem

- man eine Menge von eingehenden Frachtguttransportnachfragen über die jeweiligen Nachfragevolumina $V_n$, Nachfragegewichte $W_n$ und erzielbaren Raten $r_n$, ausgedrückt als Preis des abrechenbaren Gewichts cw, vorzugsweise in abrechenbaren kg, sowie das Volumengewicht $d_n$ und das skalierte Volumengewicht $sd_n$ definiert; wobei
- das Volumengewicht $d_n$ einer Frachteinheit n wie folgt bestimmt wird:

  - falls das Gewicht $W_n$ der n-ten Frachteinheit > 0 und das Volumen $V_n$ der n-ten Frachteinheit $\geq$ 0, dann das Volumengewicht $d_n = (V_n/W_n)$ ist,
  - falls das Gewicht $W_n$ der n-ten Frachteinheit = 0 und das Volumen $V_n$ der n-ten Frachteinheit > 0, dann das Volumengewicht $d_n = \infty$ ist, und
  - falls das Gewicht $W_n$ der n-ten Frachteinheit = 0 und das Volumen $V_n$ der n-ten Frachteinheit = 0, dann das Volumengewicht $d_n$ unbestimmt ist, und man

- ausgehend von dem ermittelten Volumengewicht $d_n$ das skalierte Volumengewicht $sd_n$ bestimmt, wobei,

  - falls $d_n$ = 0, dann $sd_n$ = 0 ist,
  - falls 0 < $d_n \leq$ ds, dann $sd_n = d_n$/2ds ist,
  - falls ds < $d_n < \infty$, dann $sd_n$ = 1 - ds/2$d_n$ ist, und
  - falls $d_n = \infty$, dann $sd_n$ = 1 ist,

- wobei ds ein gegebenes Standard-Volumengewicht ist, das insbesondere dem Standard-Volumengewicht $ds_{IATA}$ der IATA entspricht;
- einen zweidimensionalen Bereich, umfassend zwei sich schneidende Koordinatenachsen, definiert, dessen erste Dimension unmittelbar oder mittelbar den in Frachtgutbuchungsnachfragen nachfragbaren Bereich des skalierten Volumengewichts $sd_n$ und dessen zweite Dimension die Nachfragerate $r_n$, definiert als Preis pro abrechenbarem Gewichts cw, wiedergibt, wobei der Betrag des abrechenbaren bzw. Abrechnungsgewichts cw, vorzugsweise in abrechenbaren kg, wie folgt definiert ist:

  - falls das Gewicht $W_n$ = 0 und das Volumen $V_n$ = 0, dann ist cw = 0,
  - falls 0 $\leq d_n \leq$ ds, dann ist cw = $W_n \times$ 1000 und
  - falls ds < $d_n \leq \infty$, dann ist cw = $V_n \times$ 1000/ds,

- den Wertepaaren, gebildet aus dem skalierten Volumengewicht $sd_n$ einer angefragten n-ten Frachteinheit und deren Nachfragerate $r_n$, in dem zweidimensionalen Bereich jeweils einen korrespondierenden Wertepaarpunkt zuweist in dem durch die Koordinatenachsen gebildeten Koordinatensystem und die Abstände zwischen Wertepaarpunkten, deren zugehöriges skaliertes Volumengewicht $sd_n$ in dem Bereich 0 < $sd_n \leq$ 0,5 liegt, sowie die Abstände zwischen Wertepaarpunkten, deren zugehöriges skaliertes Volumengewicht $sd_n$ in dem Bereich 0,5 < $sd_n \leq$ 1 liegt, jeweils ermittelt und Wertepaarpunkte innerhalb dieser Grenzen, insbesondere solche die einen geringen Abstand zueinander aufweisen, mittels Bildung von Clustern zusammenfasst und jeweils einem Unterbereich i (r/sd-Klasse) mit Bereichsgrenzen, innerhalb derer die Wertepaare eines Clusters vorliegen, zuordnet.

Gemäß einer weiteren Ausgestaltung des vorangehend dargestellten Verfahrens addiert man für jeden Unterbereich die Abrechnungsgewichte der einzelnen Frachtguttransportnachfragen, die zu diesem Unterbereich gehören, und weist die Summe dem zugehörigen Unterbereich zu. Auf diese Weise kann für jeden Unterbereich, der vorzugsweise ein Cluster beherbergt aber auch einen weiter unterteilten Cluster umfassen kann, eine historische Bewertung des angefragten Gesamtabrechnungsgewichts $D_i$ getroffen werden. Diese historischen Daten, gegebenenfalls auch statistisch aufbereitet, können sodann als Prognosewerte für die erwartete Nachfrage $D_i$ bei zukünftigen Transporten, z.B. Transportflügen, eingesetzt werden, um als Basis für zukünftige Buchungsentscheidungen verwandt zu werden. Selbstverständlich kann die Prognose bzw. der Forecast auch auf andere Art und Weise zustande kommen. Beispielsweise können aktuell absehbare Geschehnisse oder Marktaktivitäten bei der Erstellung einer Prognose berücksichtigt werden, die dann zu einem ganz anderen Ergebnis führt als bei Anwendung des historischen Ansatzes.

Das der Erfindung zugrunde liegende Problem wird des weiteren gelöst durch ein Verfahren, gemäß dem

- man für einen Frachttransport prognostizierte Transportmengen m in Bezug auf ihr Volumen $V_m$, insbesondere in

der Mengeneinheit m$^3$, ihr Gewicht $W_m$, insbesondere in der Mengeneinheit t, und ihren Nachfragepreis $r_m$, ausgedrückt als Preis des abrechenbaren Gewichts cw, vorzugsweise in abrechenbaren kg, sowie ihr Volumengewicht $d_m$ und ihr skaliertes Volumengewicht $sd_m$ definiert,

- das Volumengewicht $d_m$ der Frachtmengen m bestimmt, wobei,

    - falls das Gewicht $W_m$ Frachteinheit m > 0 und das Volumen $V_m$ der Frachteinheit m ≥ 0, dann das Volumengewicht $d_m = (V_m/W_m)$ ist,
    - falls das Gewicht $W_m$ der Frachteinheit m = 0 und das Volumen $V_m$ der Frachteinheit m > 0, dann das Volumengewicht $d_m = \infty$ ist, und
    - falls das Gewicht $W_m$ der Frachteinheit m = 0 und das Volumen $V_m$ der Frachteinheit m = 0, dann das Volumengewicht $d_m$ unbestimmt ist, und man
- ausgehend von dem ermittelten Volumengewicht $d_m$ das skalierte Volumengewicht $sd_m$ bestimmt, wobei,

    - falls $d_m = 0$, dann $sd_m = 0$ ist,
    - falls $0 < d_m \le ds$, dann $sd_m = d_m/2ds$ ist,
    - falls $ds < d_m < \infty$, dann $sd_m = 1 - ds/2d_m$ ist, und
    - falls $d_m = \infty$, dann $sd_m = 1$ ist,

    - wobei ds ein gegebenes Standard-Volumengewicht ist, das insbesondere dem Standard-Volumengewicht $ds_{IATA}$ der IATA entspricht;

- einen zweidimensionalen Bereich, umfassend zwei sich schneidende Koordinatenachsen, definiert, dessen erste Dimension unmittelbar oder mittelbar den in Frachtgutbuchungsnachfragen nachfragbaren Bereich des skalierten Volumengewichts sd und dessen zweite Dimension die Nachfragerate r, definiert als Preis des abrechenbaren Gewichts cw, wiedergibt, wobei das abrechenbare bzw. Abrechnungsgewicht cw, vorzugsweise in abrechenbaren kg, wie folgt definiert ist:

    - falls das Gewicht $W_m = 0$ und das Volumen $V_m = 0$, dann ist cw = 0,
    - falls $0 \le d_m \le ds$, dann ist $cw = W_m \times 1000$ und
    - falls $ds < d_m \le \infty$, dann ist $cw = V_m \times 1000/ds$, und

- den Wertepaaren, gebildet aus dem skalierten Volumengewicht $sd_m$ einer prognostizierten Frachteinheit m und deren prognostizierter Nachfragerate $r_m$, in dem zweidimensionalen Bereich des durch die Koordinatenachsen gebildeten Koordinatensystems jeweils einen korrespondierenden Wertepaarpunkt zuweist und die Abstände zwischen Wertepaarpunkten, deren zugehöriges skaliertes Volumengewicht $sd_m$ in dem Bereich $0 < sd_m \le 0,5$ liegt, sowie die Abstände zwischen Wertepaarpunkten, deren zugehöriges skaliertes Volumengewicht $sd_m$ in dem Bereich $0,5 < sd_n \le 1$ liegt, jeweils ermittelt und Wertepaarpunkte innerhalb dieser Grenzen, insbesondere solche die einen geringen Abstand zueinander aufweisen, mittels Bildung von Clustern zusammenfasst und jeweils einem Unterbereich i (r/sd-Klasse) mit Bereichsgrenzen, innerhalb derer die Wertepaare eines Clusters vorliegen, zuordnet.

Dabei kann erfindungsgemäß vorgesehen sein, dass man auf der Grundlage der ermittelten Cluster mindestens acht, insbesondere 16, r/sd-Unterklassen i, insbesondere mit äquidistanten Volumengewichtsklassengrenzen und/oder mit äquidistanten Ratenklassengrenzen, bildet, wobei keine r/sd-Unterklasse i gebildet wird, die eine untere Grenze mit einem sd-Wert < 0,5 und eine obere Grenze mit einem sd-Wert > 0,5 aufweist. Demgemäß zeichnet sich eine bevorzugte Ausführungsform dadurch aus, dass sämtlich Unterklassen i in dem Koordinatensystem in etwa die gleiche Fläche ausfüllen. Benachbarte Klassen weisen dabei jeweils eine gemeinsame Klassengrenze auf. Weiterhin ist es nicht schädlich, wenn bei der Wahl äquidistanter Klassengrenzen eine oder mehrere von diesen durch eine Anhäufung bzw. einen Cluster an r/sd-Wertepaaren verlaufen.

Eine Weiterbildung des vorangehend geschilderten Verfahrens zeichnet sich dadurch aus, dass über jede r/sd-Unterklasse i das abrechenbare Gesamtgewicht $D_i$ mittels Addition des abrechenbaren Gewichts cw der in einer Klasse eingeordneten Frachtguteinheiten n bzw. prognostizierten Frachtmengen m ermittelt wird.

In einer alternativen Ausführungsform werden sd- und r-Unterklassengrenzen derart ausgewählt, dass diejenigen Unterklassen, denen kein abrechenbares Gewicht zugewiesen werden kann, eine größtmögliche Fläche, insbesondere auch wenn der/die Unterbereiche parallele Klassengrenzen aufweisen, annimmt.

Zweckmäßigerweise ist dabei in einer weiteren Ausführungsform vorgesehen, dass benachbarte Unterbereiche gemeinsame Bereichsgrenzen bzw. Begrenzungslinien aufweisen und dass sämtliche Unterbereiche eine Fläche durchgängig bedecken, die von den sich schneidenden Koordinatenachsen begrenzt wird. Stehen diese Koordinatenachsen senkrecht aufeinander nehmen die Unterbereiche vorzugsweise eine rechteckige oder quadratische Fläche ein. Stehen die Koordinatenachsen hingegen nicht senkrecht aufeinander, weisen die Unterbereiche vorzugsweise die Form eines Parallelogramms auf. Gemäß einer pragmatischen Ausgestaltung kann die das skalierte Volumengewicht repräsentierende Koordinatenachse in mindestens vier, insbesondere zehn, vorzugsweise gleich große, Abschnitte unterteilt werden, während die die Rate repräsentierende Koordinatenachse in mindestens drei, insbesondere mindestens fünf, zum Beispiel fünf bis zehn Abschnitte, unterteilt werden kann. Auf diese Weise ergeben sich beispielsweise 20 bis 100 Unterbereiche bzw. r/sd-Klassen.

Mit der Verwendung des skalierten Volumengewichts nach dem erfindungsgemäßen Verfahren geht der wesentliche Vorteil einher, dass man ein zweidimensionales Koordinatensystem als Bezugssystem erhält und dass sich Veränderungen des spezifischen Volumenverbrauchs sowie Veränderungen des spezifischen Gewichtsverbrauchs auf der Koordinate des skalierten Volumengewichts in einander vergleichbarer Weise abbilden lassen. So nimmt der spezifische Gewichtsverbrauch bei Volumengewichtswerten über dem Standard-Volumengewicht ds in dem Maße ab, wie der spezifische Volumenverbrauch bei Volumengewichtswerten unter dem Standard-Volumengewicht ds zunimmt. Somit führt jede Bewegung auf der Koordinate, in der Regel der Abszisse, des skalierten Volumengewichts - sofern sie nur gleich lang ist - zur gleichen Unähnlichkeit eines abrechenbaren Kilogramms hinsichtlich seines spezifischen Gewichts- und Volumenverbrauchs. Beispielsweise zieht die Bewegung von einem Volumengewicht mit dem Wert 9 zu einem Wert 12 die gleiche Unähnlichkeit nach sich, wie die Bewegung von einem Volumengewichtswert 0 zu einem Volumengewichtswert von 1. Denn im ersten Fall sinkt der spezifische Gewichtsverbrauch um 1/6 anrechenbares Kilogram, im zweiten Fall steigt der spezifische Volumenverbrauch um 1/6 anrechenbares Kilogramm, legt man ein Standard-Volumengewicht von 6 $m^3$/t zugrunde.

Für die Ermittlung geeigneter Unterbereiche bzw. r/sd-Klassen kann auf bekannte Cluster-Verfahren zurückgegriffen werden. Beispielsweise kann auf hierachische Cluster-Verfahren wie dem Clustern gemäß "Average Linkage", "Single Linkage", "Complete Linkage", der Centroid-Methode oder dem Verfahren der Minimumvarianz nach Ward's zurückgegriffen werden. Ferner kommt als Cluster-Verfahren das so genannte K-Means Clustering für die Bildung von Unterbereichen in Betracht. Die vorangehend beschriebenen Cluster-Verfahren sind dem Fachmann bekannt und finden sich z.B. im JMP® Statistics and Graphics Guide, Version 4, (ISBN: 1-58025-631-7), des SAS Institute Inc., Cary, NC, USA, 2000, beschrieben. Unter Beachtung der vorangehend genannten Vorgaben lassen sich z.B. mit diesen Cluster-Verfahren die prognostizierten Buchungsnachfragen in Klassen abbilden, die sodann bei jeder neu eingehenden Buchungsanfrage für die Optimierung bzw. Maximierung der Auslastung, des Erlöses, des abrechenbaren Gewichts, der Kapazitäten und/oder des Frachtraums eines Frachtguttransportes herangezogen werden können.

Mit der vorangehend geschilderten Einordnung der prognostizierten Frachtmengen in Raten/skalierte Volumengewichte-Klassen ist es möglich, ein überschaubares, d.h. mit nicht zu vielen Variablen versehenes, Optimierungsproblem zu generieren, das dennoch annähernd exakte Lösungswerte, z.B. für einen optimierten Ertrag, liefert. Insbesondere eignet sich die überschaubare Anzahl an Klassen dazu, anstelle eine Gesamtprognose verwenden zu müssen, Nachfrageprognosen für jede einzelne Klasse erstellen zu können. Die Prognose auf der Ebene einer isolierten, spezifischen Buchungsnachfrage hingegen ließe sich im übrigen kaum verlässlich vorhersagen und würde zudem einen unverhältnismäßig großen Rechenaufwand erfordern. Die Grenzen der Unterbereiche (r/sd-Klassen), auch Domains genannt, sind dabei derart zu wählen, dass einerseits nicht zu große Unterbereiche und andererseits nicht zu kleine Unterbereiche gebildet werden. Zu kleine Unterbereiche sind für eine wirkungsvolle Optimierung hinderlich, während zu groß gewählte Unterbereiche keine präzise Voraussage der Nachfrage im Hinblick auf die Rate und das Volumengewicht mehr erlauben. Insbesondere gestaltet sich die Optimierung bei zu kleinen Bereichen aufgrund der in der Regel sehr geringen prognostizierbaren Mengen sowie der Vielzahl an Variablen sehr schwierig. Allerdings lassen sich bei kleinen Domains gleichwohl der Bidpreis und das bevorzugte extreme Volumengewicht bei der Maximierung des abrechenbaren Gewichts cw sehr akkurat bestimmen. Hingegen lassen sich bei großen Bereichen die Optimierung und die Prognose leichter bewerkstelligen, allerdings erhält man weniger exakte Angaben zu den bevorzugten extremen Volumengewichten bei der Maximierung des abrechenbaren Gewichts cw sowie weniger akkurate Bidpreise und einen weniger exakten Revenue.

Das vorangehend beschriebene zweidimensionale System kann auch als Raten/Volumengewicht-Diagramm bzw. r/sd-Diagramm bezeichnet werden, insbesondere wenn benachbarte Unterbereiche, sofern sie nicht an den Rändern des Diagramms liegen, nach allen Seiten über aneinander anstoßende Grenzlinien verfügen. Selbstverständlich kann für jeden Frachtstrom, sei es auf einem Flug, bestehend aus nur einem Leg, sei es auf einem Flug, bestehend aus mehreren Legs, z.B. auf Segmentebene, oder sei es auf einem Flugnetz ein eigenes, charakteristisches Raten/Volumengewicht-Diagramm mit insbesondere jeweils eigener Aufteilung der Domains erstellt bzw. verwendet werden.

Bevorzugterweise wird für eine Frachteinheit n bzw. eine Frachtmenge m mit einem Gewicht $W_n$ bzw. $W_m$, jeweils gerechnet in t, und einem Volumen $V_n$ bzw. $V_m$, jeweils gerechnet in $m^3$, als abrechenbares Gewicht cw derjenige Wert, insbesondere in kg, angesetzt, der vom Betrag her der größere unter den nachfolgenden zwei Werten ist

(1) $W_{n/m}$ x 1000 und

(2) $V_{n/m}$ x 1000/ds ist,

wobei ds ein Standard-Volumengewicht ist, das insbesondere dem Standard-Volumengewicht $ds_{IATA}$ der IATA entspricht.

Die der Erfindung zugrunde liegende Aufgabe wird des weiteren durch ein Verfahren gelöst, gemäß dem

- man einen zweidimensionalen Bereich, umfassend zwei sich schneidende Koordinatenachsen, definiert, dessen erste Dimension unmittelbar oder mittelbar den in Frachtgutbuchungsnachfragen nachfragbaren Bereich des skalierten Volumengewichts sd und dessen zweite Dimension die Rate r, ausgedrückt als Preis des abrechenbaren Gewichts cw, wiedergibt;

- benachbarte Unterbereiche i mit gemeinsamen Grenzabschnitten in dem zweidimensionalen Bereich bildet, die vorzugsweise eine durchgehende Fläche bilden, welche entlang zweier Seiten von den sich schneidenden Koordinatenachsen begrenzt wird, wobei die Unterbereiche i hinsichtlich ihrer Werte für das skalierte Volumengewicht sd in dem Bereich $0 < sd \leq 0,5$ oder in dem Bereich $0,5 < sd \leq 1$ liegen, und

- den Unterbereichen i jeweils einen erwarteten Gesamtwert $D_i$ an abrechenbarem Gewicht cw, vorzugsweise in abrechenbaren kg, zuweist, der sich aus der Summe der erwarteten Einzelfrachttransportnachfragen ergibt, deren zugehörige Wertepaare, gebildet aus der Rate r pro abrechenbarem Gewicht cw und dem skalierten Volumengewicht sd, einem Unterbereich zuordbar sind.

Der einem Unterbereich i zuordbare Gesamtwert $D_i$ an erwartetem abrechenbaren Gewicht cw kann aus historischen Daten, wie vorangehend beschrieben, und/oder auf der Basis prognostizierter Werte festgesetzt werden.

Mit der vorangehend geschilderten Bildung von so genannten r/sd-Unterbereichen oder Domänen i kann die Vorhersage erwarteter Frachbuchungen mit einer bestimmten Ausprägung wesentlich effizienter gestaltet werden. Denn zum einen lassen sich die Unterbereichsgrenzen breit genug wählen, so dass das zu lösende Problem bei der Frage, ob eine Buchungsanfrage abgelehnt oder angenommen werden soll, mit überschaubarem Aufwand gelöst werden kann, und zum anderen sind die Unterbereichsgrenzen gleichwohl eng genug zu wählen, so dass der zugrunde gelegte Erwartungswert noch eine praktikable Größe darstellt und der Bidpreis für das Gewicht bpw und der Bidpreis für das Volumen bpv noch akkurat zu bestimmen sind.

Die Bildung von r/sd-Diagrammen, enthaltend eine Vielzahl an r/sd-Unterbereichen i, dient somit dazu, die erwartete Nachfrage an Transportaufträgen auf Segment- oder O&D-Ebene, sofern der Transport über mehrere Flüge angefragt ist, handhabbar zu machen bzw. zu optimieren. Demgemäß ist beispielsweise für jedes Segment eines Fluges bzw. jedes O&D eines Flugnetzes ein spezifisches r/sd-Diagramm zugrunde zu legen.

Die der Erfindung zugrunde liegende Aufgabe wird des weiteren dadurch gelöst, dass

- man eine eingehende Transportnachfrage für eine Frachteinheit n annimmt, wenn die zu erwartende Rate $r_n$ größer ist als der mit der Akzeptanzentscheidung, insbesondere voraussichtlich, einhergehende entgangene Gewinn $bp_n$, d.h. der Bid-Preis, sofern die maximale Kapazität an Frachtvolumen $V_{max}$ bzw. die Restvolumenkapazität $V_{Rest}$ und die maximale Kapazität an Frachtgewicht $W_{max}$ bzw. die Restgewichtskapazität $W_{Rest}$ mit der Annahme der Frachtbuchungsnachfrage nicht überschritten werden, und ansonsten ablehnt, wobei der entgangene Gewinn $bp_n$ ermittelt bzw. abgeschätzt wird über die Gleichung

$$bp_n = w_n \times bpw + v_n \times pbv, \text{ wobei}$$

$bp_n$ für den Bidpreis einer Einheit eines abrechenbaren Gewichts cw, insbesondere eines abrechenbaren kg, der angefragten Frachteinheit bzw. -menge, bpw für den Preis einer Einheit eines abrechenbaren Gewichts cw, insbesondere eines abrechenbaren kg, die bzw. das vorzugsweise lediglich aus Gewicht besteht, d.h. ein Volumengewicht von $d = 0$ aufweist, bpv für den Preis einer Einheit eines abrechenbaren Gewichts cw, insbesondere eines abrechenbaren kg, die bzw. das vorzugsweise lediglich aus Volumen besteht, d.h. ein Volumengewicht von $d = \infty$ aufweist, $w_n$ für den spezifischen Gewichtsverbrauch und $v_n$ für den spezifischen Volumenverbrauch stehen, wobei der spezifische Gewichts- bzw. der spezifische Volumenverbrauch wie folgt definiert sind:

- falls $0 \leq d_n \leq ds$, dann ist $w_n = 1$ und $v_n = d_n/ds$,
- falls $ds < d_n < \infty$, dann ist $w_n = ds/d_n$ und $v_n = 1$,
- falls $d_n = \infty$, dann ist $w_n = 0$ und $v_n = 1$ und

wobei $d_n$ das Volumengewicht einer Frachteinheit- bzw. -menge und ds das Standard-Volumengewicht wiedergeben, und wobei die bpw und bpv ermittelt werden durch Lösen des folgenden Problems, insbesondere mittels

Linearen Programmierens:
Minimiere

$$R_F = W_{Rest} \times bpw + V_{Rest} \times bpv + \sum_i D_i \times p_i$$

bezüglich

$w_i \times bpw + v_i \times bpv + p_i \geq r_i$, für alle (i)

$bpv, bpw, p_i \geq 0$, für alle (i)

wobei $R_F$ den Erlös, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumen- gewicht von d = ∞ aufweist, $D_i$ die prognostizierte Nachfrage der Prognosedomäne bzw. des Unterbereichs (r/sd- Klasse) i, ausgedrückt in abrechenbarem Gewicht cw, insbesondere abrechenbaren kg, und $p_i$ die Profitabilität der Prognosedomäne i, ausgedrückt in Währungseinheit pro abrechenbarem Gewicht cw, insbesondere abrechen- baren kg, und $r_i$, ausgedrückt als Preis, vorzugsweise in einer offiziell anerkannten Währungseinheit, pro abrechenbaren Gewicht cw, insbesondere abrechenbaren kg, die Rate der Prognosedomäne i spezifizieren, und wobei die Gewichts- und Volumenkoeffizienten $w_i$ und $v_i$ wie folgt definiert sind:

- falls $0 \leq d_i \leq ds$, dann ist $w_i = 1$ und $v_i = d_i/ds$,
- falls $ds < d_i < \infty$, dann ist $w_i = ds/d_i$ und $v_i = 1$,
- falls $d_i = \infty$, dann ist $w_i = 0$ und $v_i = 1$ und wobei $d_i$ einen Volumengewichtswert aus der Domäne i, insbesondere einen Mittelwert oder gewichteten Mittelwert, darstellt.

Mit der vorangehend beschriebenen Vorgehensweise lässt sich der Ertrag aus der Nutzung der zur Verfügung stehenden Gewichts- und Volumenkapazitäten besonders effektiv maximieren. Unter Bid-Preisen sind Opportunitätskosten zu verstehen, d.h. Bid-Preise stellen die voraussichtlichen Kosten des entgangenen Gewinns aus einer Akzeptanzentscheidung dar.

In einer zweckmäßigen Ausgestaltung wird der Bid-Preis $bp_n$ einer möglichen angefragten Frachtbuchung n wie folgt angewandt:

- falls $r_n \geq bp_n$ ist, dann ist die Buchungsanfrage n anzunehmen, sofern die maximale Kapazität an Frachtvolumen $V_{max}$ bzw. die Restvolumenkapazität $V_{Rest}$ und die maximale Kapazität an Frachtgewicht $W_{max}$ bzw. die Rechts- gewichtskapazität $G_{Rest}$ mit der Annahme der n-ten Frachtbuchungsnachfrage nicht überschritten werden, und
- falls $r_n < bp_n$ ist, dann ist die Buchungsanfrage n abzulehnen, wobei der Bid-Preis $bp_n$ sich wie folgt ergibt: $w_n \times bpw + v_n \times bpv$, und wobei $r_n$ die Rate pro abrechenbarem Gewicht, $w_n$ den spezifischen Gewichtsverbrauch bzw. den Gewichtskoef- fizienten einer Buchungsanfrage, $v_n$ den spezifischen Volumenverbrauch bzw. den Volumenkoeffizienten einer Buchungsanfrage, bpw den Preis einer Einheit eines abrechenbaren Gewichts cw, das lediglich aus Gewicht besteht, und bpv den Preis einer Einheit eines abrechenbaren Gewichts cw, das lediglich aus Volumen besteht, spezifizieren und wobei sich die Gewichts- und Volumenkoeffizienten wie folgt bestimmen:

- falls $0 \leq d_n \leq ds$, dann ist $w_n = 1$ und $v_n = d_n/ds$,
- falls $ds < d_n < \infty$, dann ist $w_n = ds/d_n$ und $v_n = 1$ und
- falls $d_n = \infty$, dann ist $W_n = 0$ und $V_n = 1$.

Ferner zeichnet sich das erfindungsgemäße Verfahren auch dadurch aus, dass der Bid-Preis bp als Funktion des Volumengewichts allgemein wie folgt dargestellt werden kann:

- falls $0 \leq d \leq ds$, dann ist $bp = bpw + (d/ds) \times bpv$,
- falls $ds < d < \infty$, dann ist $bp = ds \times bpw/d + bpv$,
- falls $d = \infty$, dann ist $bp = bpv$, wobei bp den Bid-Preis, bpw den Preis einer Einheit eines abrechenbaren Gewichts cw, ausgedrückt in Einheiten einer Währung pro abrechenbarem Gewicht, das lediglich aus Gewicht besteht, und bpv den Preis einer Einheit eines abrechenbaren Gewichts cw, ausgedrückt in Einheiten einer Währung pro abrechenbarem Gewicht, das lediglich aus Volumen besteht, d das Volumengewicht im Allgemeinen und ds das Standard-Volumengewicht spezifizieren.

Alternativ kann der Bid-Preis bp auch als Funktion des skalierten Volumengewichts wie folgt dargestellt werden:

- falls $0 \leq sd \leq 0,5$, dann ist bp = bpw + 2 sd $\times$ bpv,
- falls $0,5 < sd < 1$, dann ist bp = 2(1- sd)bpw + bpv,
- falls sd = 1, dann ist bp = bpv,
- wobei bp den Bid-Preis, ausgedrückt in Einheiten einer Währung pro abrechenbarem Gewicht, bpw den Preis einer Einheit eines abrechenbaren Gewichts cw, ausgedrückt in Einheiten einer Währung pro abrechenbarem Gewicht, das lediglich aus Gewicht besteht, und bpv den Preis einer Einheit eines abrechenbaren Gewichts cw, ausgedrückt in Einheiten einer Währung pro abrechenbarem Gewicht, das lediglich aus Volumen besteht, sd das skalierte Volumengewicht im Allgemeinen und ds das Standard-Volumengewicht spezifizieren.

Der Ertrag $R_F$ eines Transportes oder Frachtfluges lässt sich in einer bevorzugten Ausführungsform mit Hilfe der Linearen Optimierung wie folgt maximieren:

Maximiere

$$R_F = \sum_i r_i \, x_i$$

bezüglich

$$\sum_i w_i \, x_i \leq W_{Rest}$$

$$\sum_i v_i \, x_i \leq V_{Rest}$$

$x_i \leq D_i$, für alle (i) und
$x_i \geq 0$, für alle (i),
wobei der Index i die Prognosedomäne bzw. den Unterbereich (r/sd-Klasse), x; die zu akzeptierende Nachfrage der Prognosedomäne i, ausgedrückt in abrechenbarem Gewicht cw, $D_i$ die prognostizierte Nachfrage der Prognosedomäne i, ausgedrückt in abrechenbarem Gewicht cw, $w_i$ den Gewichtskoeffizienten der Prognosedomäne i, $v_i$ den Volumenkoeffizienten der Prognosedomäne i, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = $\infty$ aufweist, und $r_i$ die Rate der Prognosedomäne i, insbesondere in Form eines Mittelwerts oder eines gewichteten Mittelwerts, ausgedrückt als Preis, vorzugsweise in einer offiziell anerkannten Währungseinheit, pro abrechenbaren Gewicht cw, insbesondere abrechenbaren kg, spezifizieren, und wobei die Gewichts- und Volumenkoeffizienten $w_i$ und v; wie folgt definiert sind:

- falls $0 \leq d_i \leq ds$, dann ist $w_i = 1$ und $v_i = d_i/ds$,
- falls $ds < d_i < \infty$, dann ist $w_i = ds/d_i$ und $v_i = 1$,
- falls $d_i = \infty$, dann ist $w_i = 0$ und $v_i = 1$ und wobei

$d_i$ einen Volumengewichtswert aus der Domäne i, insbesondere einen Mittelwert oder gewichteten Mittelwert, darstellt.

Unter Einführung von Schlupfvariablen sv und sw für die Volumen- bzw. Gewichtsberechnung stellt sich das obige Problem wie folgt dar (LP-Problem I):

Maximiere

$$R_F = \sum_i r_i \, x_i$$

bezüglich

$$\sum_i w_i \, x_i + sw = W_{Rest,}$$

$$\sum_i v_i \, x_i + sv = V_{Rest,}$$

$x_i + s_i = D_i$, für alle (i) und

$s;$, sv, sw, $x_i \geq 0$, für alle (i),

wobei $R_F$ den Erlös über einen Leg eines Transportes, insbesondere Flugs, der Index i die Prognosedomäne bzw. den Unterbereich (r/sd-Klasse), $x_i$ die zu akzeptierende Nachfrage der Prognosedomäne i, ausgedrückt in abrechenbarem Gewicht cw, $D_i$ die prognostizierte Nachfrage der Prognosedomäne i, ausgedrückt in abrechenbarem Gewicht cw, $w_i$ den Gewichtskoeffizienten der Prognosedomäne i, $v_i$ den Volumenkoeffizienten der Prognosedomäne i, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, sowie s;, sv und sw die Schlupfvariablen für die Nachfrage der Prognosedomäne i, des Volumens, insbesondere in Form eines abrechenbaren Gewichts, insbesondere eines abrechenbaren kg, die bzw. das vorzugsweise lediglich aus Volumen besteht, d.h. ein Volumengewicht von d = ∞ aufweist, bzw. des Gewichts, insbesondere in Form eines abrechenbaren Gewichts cw, insbesondere eines abrechenbaren kg, die bzw. das vorzugsweise lediglich aus Gewicht besteht, d.h. ein Volumengewicht von d = 0 aufweist, und $r_i$ die Rate der Prognosedomäne i, insbesondere in Form eines Mittelwerts oder eines gewichteten Mittelwerts, ausgedrückt als Preis, vorzugsweise in einer offiziell anerkannten Währungseinheit, pro abrechenbaren Gewicht cw, insbesondere eines abrechenbaren kg, spezifizieren, und wobei die Gewichts- und Volumenkoeffizienten $w_i$ und $v_i$ wie folgt definiert sind:

- falls $0 \leq d_i \leq ds$, dann ist w; = 1 und $v_i = d_i/ds$,
- falls $ds < d_i < \infty$, dann ist $w_i = ds/d_i$ und $v_i = 1$,
- falls d; = ∞, dann ist $w_i = 0$ und $v_i = 1$ und wobei $d_i$ einen Volumengewichtswert aus der Domäne i, insbesondere einen Mittelwert oder gewichteten Mittelwert, darstellt.

Hierbei wird die erwartete Nachfrage nach Transportleistungen einer bestimmten Raten/Volumengewichtsklasse i mit $D_i$ angesetzt. Die der Raten/Volumengewichtsklasse i entsprechende Rate beträgt $r_i$. Diese kann einen beliebigen Wert aus der Klasse i annehmen, stellt jedoch bevorzugt einen Mittelwert oder gewichteten Mittelwert dar. Entsprechendes gilt für $d_i$.

Der Wert der Schlupfvariablen sv gibt Auskunft über die zu erwartende ungenutzte Kapazität in Gewicht und der Wert der Schlupfvariablen sw gibt Auskunft über die zu erwartende ungenutzte Kapazität in Volumen, vorliegend jeweils ausgedrückt in abrechenbarem Gewicht des Volumengewichts 0 bzw. ∞.

Für den Fall, dass die Frachtkapazität noch überhaupt nicht in Anspruch genommen worden ist, gilt $W_{Rest}$ = Wmax und $V_{Rest} = V_{max}$.

Mit dem vorliegenden Verfahren gelingt es, die vorhergesagte Nachfrage hinsichtlich ihrer Rate und ihres spezifischen Gewichts- und Volumenverbrauchs so auszuwählen, dass der Ertrag oder das abrechenbare Gewicht maximal ist, und das verfügbare Gewicht und das verfügbare Volumen nicht überschritten werden. Grundsätzlich gelingt es mit dem vorangehend beschriebenen Verfahren, den Revenue bzw. Ertrag der jeweils noch verfügbaren Frachtkapazität, basierend auf den zu erwartenden Buchungsnachfragen zu berechnen bzw. abzuschätzen. Ebenfalls lassen sich die zu erwartenden Leerkapazitäten berechnen bzw. abschätzen.

Ferner kann in einer weiteren Ausführungsform ein Verfahren zur Optimierung der Auslastung und/oder der Maximierung des Erlöses eines Frachtraumes eines Frachttransportes sich dadurch auszeichnen, dass der Ertrag $R_F$ für ein Leg eines Transportes oder Frachtfluges und/oder der Bid-Preis bpw für eine Einheit eines abrechenbaren Gewichts cw, das lediglich aus Gewicht besteht, und/oder der Bid-Preis bpv für eine Einheit eines abrechenbaren Gewichts cw, das lediglich aus Volumen besteht, mit Hilfe der Linearen Optimierung wie folgt bestimmt wird:

Minimiere

$$R_F = W_{Rest} \times bpw + V_{Rest} \times bpv + \sum_i D_i \times p_i$$

bezüglich

$w_i \times bpw + v_i \times bpv + P_i \geq r_i$, für alle (i)

$bpv, bpw, p_i \geq 0$, für alle (i)

wobei $R_F$ den Erlös, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, bpw den Preis einer Einheit eines abrechenbaren Gewichts cw, das lediglich aus Gewicht besteht, und bpv den Preis einer Einheit eines abrechenbaren Gewichts cw, das lediglich aus Volumen besteht, $D_i$ die prognostizierte Nachfrage der Prognosedomäne bzw. des Unterbereichs (r/sd-Klasse) i, insbesondere ermittelt nach dem erfindungsgemäßen Verfahren ausgedrückt in abrechenbarem Gewicht cw, insbesondere abrechenbaren kg, $w_i$ den Gewichtskoeffizienten für die Prognosedomäne i, v; den Volumenkoeffizienten für die Prognosedomäne i sowie $p_i$ die Profitabilität der Prognosedomäne i, ausgedrückt in Währungseinheit pro abrechenbarem Gewicht cw, insbesondere abrechenbaren kg, und $r_i$, ausgedrückt als Preis, vorzugsweise in einer offiziell anerkannten Währungseinheit, pro abrechenbaren Gewicht cw, insbesondere abrechenbaren kg, die Rate der Prognosedomäne i spezifizieren, wobei die Gewichts- und Volumenkoeffizienten w; und $v_i$ wie folgt definiert sind:

- falls $0 \leq d_i \leq ds$, dann ist $w_i = 1$ und $v_i = d_i/ds$,
- falls $ds < d_i < \infty$, dann ist $w_i = ds/d_i$ und v; = 1,
- falls $d_i = \infty$, dann ist w; = 0 und $v_i = 1$ und wobei

$d_i$ einen Volumengewichtswert aus der Domäne i, insbesondere einen Mittelwert oder gewichteten Mittelwert, darstellt.

Das unmittelbar vorangehend beschriebene Verfahren stellt einen Lösungsansatz gemäß dem Dualen Modell dar, während das zuvor beschriebene lineare Optimierungsproblem einen Lösungsansatz gemäß dem Primalen Modell liefert.

Die Technik der Linearen Optimierung ist dem Fachmann hinlänglich bekannt und findet sich beispielsweise bei H.A. Eiselt, G. Pederzoli, C.L. Sandblom in "Continuous Optimization Models (Operation Research: Theory, Techniques, Applications)", Walter de Gruyter, Inc., 1987, oder in dem Beitrag "Lineare Optimierung" von H.G. Bartels im Handwörterbuch der Betriebswirtschaftslehre, Teilband 2, 5. Aufl., Sp. 2953 bis 2968, Poeschel Verlag, 1993, beschrieben.

Für den Fall, dass vorangehend das abrechenbare Gewicht cw einer Frachteinheit mit einem Volumengewicht d = 0 dessen tatsächlichem Gewicht in z.B. kg gegenübergestellt bzw. mit diesem verglichen wird oder dass die Frachteinheit nicht in abrechenbarem Gewicht, sondern in tatsächlichem Gewicht ausgedrückt werden soll, entspricht ein so genanntes abrechenbares kg dem tatsächlichen Gewicht, d.h. einem kg. Für den Fall, dass vorangehend für eine Frachteinheit das abrechenbare Gewicht cw einer Frachteinheit mit einem Volumengewicht d = ∞ angesetzt wird, ergibt sich ein so genanntes abrechenbares kg aus dem Produkt Volumen der Frachteinheit in $m^3$ x 1000, dividiert durch den Betrag des Standard-Volumengewichts, insbesondere des Standard-Volumengewichts $ds_{IATA}$ der IATA, der zur Zeit 6 ist. Die vorangehend beschriebene Umrechnungsmodus kann insbesondere bei einer Gegenüberstellung von $V_n$ und $V_{Rest}$ sowie von $W_n$ und $W_{Rest}$ herangezogen werden.

Die vorangehend beschriebenen erfindungsgemäßen Verfahren, z.B. unter Nutzung des Primalen bzw. des Dualen Modells, liefern Lösungen für Transportflüge, die einen Flug mit nur einem Leg und damit auch mit nur einem Segment umfassen. Selbstverständlich können diese Verfahren ohne weiteres dahingehend erweitert werden, dass sie auch einen Flug mit mehreren Legs und damit auch mit mehreren Segmenten berücksichtigen. Auch können die erfindungsgemäßen Verfahren auf mehrere Flüge simultan bzw. auf ein Flugnetz, so genannte O&D-Steuerungen, angewandt werden. Beispielsweise stellt sich die Lösung des Primalen Modells zur Ermittlung der erwarteten freien Kapazität für einen Frachttransport mit mehreren Legs und Segmenten wie folgt dar:

Maximiere

$$R_F = \sum_i \sum_j r_{ij}\, x_{ij}$$

bezüglich

$$\sum_i \sum_j a_{kj}\, w_{ij}\, x_{ij} + sw_k = W_{k\text{-Rest}}, \text{ für alle } k$$

$$\sum_i \sum_j a_{kj}\, v_{ij}\, x_{ij} + sv_k = V_{k\text{-Rest}}, \text{ für alle } k$$

$x_{ij} + s_{ij} = D_{ij}$, für alle (i, j) und
$s_{ij}, sv_k, sw_k, x_{ij} \geq 0$, für alle (i, j) und k,
wobei $R_F$ den Erlös über einen Flug, der Index k das Leg eines Transportes, insbesondere Fluges, j das Segment eines Transportes, i die Prognosedomäne bzw. den Unterbereich (r/d-Klasse) eines Segments, $x_{ij}$ die zu akzeptierende Nachfrage für die Prognosedomäne i des Segments j, ausgedrückt in abrechenbarem Gewicht cw, insbesondere abrechenbaren kg, $D_{ij}$ die prognostizierte Nachfrage der Prognosedomäne i des Segments j, ausgedrückt in abrechenbarem Gewicht cw, insbesondere abrechenbaren kg, $a_{kj}$ den Indexkoeffizienten des Legs k auf dem Segment j darstellt, wobei $a_{kj} = 0$, wenn das Leg k nicht Bestandteil des Segments j ist und wobei $a_{kj} = 1$, wenn das Leg k Bestandteil des Segments j ist, $w_{ij}$ den Gewichtskoeffizienten für die Prognosedomäne i des Segments j, $v_{ij}$ den Volumenkoeffizienten für die Prognosedomäne i, $W_k$-Rest die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, des Legs k und $V_{k\text{-Rest}}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, des Legs k sowie $s_{ij}$, $sv_k$ und $sw_k$ die Schlupfvariablen für die Nachfrage der Prognosedomäne i auf dem Segment j, des Volumen des Legs k, insbesondere in Form eines abrechenbaren Gewichts cw, insbesondere eines abrechenbaren kg, die bzw. das vorzugsweise lediglich aus Volumen besteht, d.h. ein Volumengewicht von d = ∞ aufweist, bzw. des Gewichts des Legs k, insbesondere in Form eines abrechenbaren Gewichts cw, insbesondere eines abrechenbaren kg, die bzw. das vorzugsweise lediglich aus Gewicht besteht, d.h. ein Volumengewicht von d = 0 aufweist, spezifizieren und $r_{ij}$ die Rate der Prognosedomäne i des Segments j, ausgedrückt als Preis, vorzugsweise in einer offiziell anerkannten Währungseinheit, pro abrechenbaren Gewicht cw, insbesondere abrechenbaren kg, spezifizieren, wobei die Gewichts- und Volumenkoeffizienten $w_{ij}$ und $v_{ij}$ wie folgt definiert sind:

- falls $0 \leq d_{ij} \leq ds$, dann ist $w_{ij} = 1$ und $v_{ij} = d_{ij}/ds$,
- falls $ds < d_{ij} < \infty$, dann ist $w_{ij} = ds/d_{ij}$ und $v_{ij} = 1$,
- falls $d_{ij} = \infty$, dann ist $w_{ij} = 0$ und $v_{ij} = 1$ und wobei

$d_{ij}$ einen Volumengewichtswert aus der Domäne i des Segments j, insbesondere einen Mittelwert oder gewichteten Mittelwert, darstellt.

Gemäß den voranstehend beschriebenen Verfahren lässt sich neben dem Ertrag $R_f$ auch die voraussichtlich ungenutzt bleibende Kapazität, insbesondere die voraussichtlich ungenutzte Gewichts- und/oder Volumenkapazität, für einen Transport oder Frachtflug mit mindestens einem Segment bestimmen.
Auch der vorangehend dargestellte Lösungsansatz des Primalen Modells findet eine Entsprechung in dem nachfolgenden Dualen Modell, gemäß dem der Ertrag $R_F$ und/oder der Bid-Preis, insbesondere der volumenspezifische Bid-Preis bpv und/oder der gewichtsspezifische Bid-Preis bpw, für einen Transport oder Frachtflug mit mindestens einem Segment mit Hilfe der Linearen Optimierung wie folgt bestimmt wird:

Minimiere

$$R_F = \sum_k W_{k\text{-Rest}} \times bpw_k + \sum_k V_{k\text{-Rest}} \times bpv_k + \sum_i \sum_j D_{ij} \times p_{ij}$$

bezüglich

$\Sigma \, a_{kj} \, w_{ij} \times bpw_k + \Sigma \, a_{kj} \, v_{ij} \times bpv_k + p_{ij} \geq r_{ij}$, für alle (i, j)

$bpv_k, bpw_k, p_{ij} \geq 0$, für alle (i, j) und k,

wobei $R_F$ den Erlös über einen Flug, $W_{k\text{-Rest}}$ die noch verfügbare Gewichtskapazität des Legs k, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{k\text{-Rest}}$ die noch verfügbare Volumenkapazität des Legs k, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, $bpw_k$ den Bid-Preis der Gewichtskapazität des Legs k, $bpv_k$ den Bid-Preis der Volumenkapazität des Legs k, $D_{ij}$ die prognostizierte Nachfrage der Prognosedomäne bzw. des Unterbereichs (r/d-Klasse) i des Segments j, ausgedrückt in abrechenbarem Gewicht cw, insbesondere abrechenbaren kg, $w_{ij}$ den Gewichtskoeffizienten für die Prognosedomäne i des Segments j, $v_{ij}$ den Volumenkoeffizienten für die Prognosedomäne i des Segments j, $a_{kj}$ den Indexkoeffizienten des Legs k auf dem Segment j darstellt, wobei $a_{kj} = 0$, wenn das Leg k nicht Bestandteil des Segments j ist und wobei $a_{kj} = 1$, wenn das Leg k Bestandteil des Segments j ist, sowie $p_{ij}$ die Profitabilität der Prognosedomäne i des Segments j, ausgedrückt in abrechenbarem Gewicht cw, insbesondere abrechenbaren kg, und $r_{ij}$ die Rate der Prognosedomäne i des Segments j, ausgedrückt als Preis, vorzugsweise in einer offiziell anerkannten Währungseinheit, pro abrechenbaren Gewicht cw, insbesondere abrechenbaren kg, spezifizieren, wobei

die Gewichts- und Volumenkoeffizienten $w_{ij}$ und $v_{ij}$ wie folgt definiert sind:

- falls $0 \leq d_{ij} \leq ds$, dann ist $w_{ij} = 1$ und $v_{ij} = d_{ij}/ds$,
- falls $ds < d_{ij} < \infty$, dann ist $w_{ij} = ds/d_{ij}$ und $V_{ij} = 1$,
- falls $d_{ij} = \infty$, dann ist $w_{ij} = 0$ und $v_{ij} = 1$ und wobei

$d_{ij}$ einen Volumengewichtswert aus der Domäne i des Segments j, insbesondere einen Mittelwert oder gewichteten Mittelwert, darstellt.

Anstatt die ermittelten skalierten Volumengewichtswerte für die Frachteinheiten n auf einer Koordinate des zweidimensionalen Koordinatensystems abzutragen, kann man aus Gründen der Veranschaulichung die dazu korrespondierenden unskalierten Volumengewichtswerte wiedergeben. Die Abstände zwischen zwei Volumengewichtswerten basieren dabei noch stets auf der Differenz der korrespondierenden skalierten Volumengewichte. In gleicher Weise kann man zur Visualisierung der skalierten Volumengewichte äquidistante Positionen auf der Volumengewichtskoordinate festlegen. Ein bevorzugtes Verfahren zeichnet sich demgemäß dadurch aus, dass das unskalierte Volumengewicht wie folgt wiedergegeben wird:

i) dem Volumengewichtsbereich 0 bis ∞ (Volumen/Gewicht) wird eine ganzzahlige, endliche, äquidistant angeordnete Anzahl von 1 bis p Position zugeordnet;

ii) jeder Position wird auf der Skala an der Stelle der entsprechenden Position ein auf dem skalierten Volumengewicht beruhendes Volumengewicht $d_{Position}$ zugeordnet, wobei

| | |
|---|---|
| für Position = 1 | $d_{Position} = 0$ ist, |
| für $1 < $ Position $\leq (p - 1)/2 + 1$ | $d_{Position} = 2 \, (\text{Position} - 1)/ (p - 1) \times ds$ ist, |
| für $(p - 1)/2 + 1 \leq$ Position $< p$ | $d_{Position} = [(p - 1)/2(p - \text{Position})] \times ds$ ist, |
| für Position = p | $d_{position} = \infty$. |

Ein weiteres Verfahren zur Optimierung der Auslastung und/oder der Maximierung des Erlöses eines Frachtraumes eines aus mindestens einem Segment j mit mindestens einem Leg k bestehenden Frachtguttransportes und der Ermittlung der freien Kapazität für einen Frachttransport, bezogen auf das Volumengewicht einer Frachteinheit, zeichnet sich dadurch aus, dass

a) für eingehende Buchungsanfragen für Frachteinheiten n mit der Rate $r_n$, dem Volumen $V_n$, vorzugsweise in [m³], dem Gewicht $W_n$, vorzugsweise in [t], und dem Volumengewicht $d_n$ zunächst die freie Kapazität $fc_j$ eines Segments j in Abhängigkeit von dem Volumengewicht $d_n$ ermittelt wird über:

- falls $0 < sw_j \leq sv_j$ und $0 \leq d_n \leq ds$ ist, dann ist $fc_j = sw_j$,

- falls $0 < sw_j \leq sv_j$ und $ds < d_n \leq ds \times (sv_j/sw_j)$ ist, dann ist $fc_j = (d/ds) \times sw_j$,
- falls $0 < sw_j \leq sv_j$ und $ds \times (sv_j/sw_j) < d_n \leq \infty$ ist, dann ist $fc_j = sv_j$,
- falls $sw_j > sv_j > 0$ und $0 \leq d_n \leq ds \times (sv_j/sw_j)$ ist, dann ist $fc_j = sw_j$,
- falls $sw_j > sv_j > 0$ und $ds \times (sv_j/sw_j) < d_n \leq ds$ ist, dann ist $fc_j = (ds/d_n) \times sv_j$,
- falls $sw_j > sv_j > 0$ und $ds < d_n \leq \infty$ ist, dann ist $fc_j = sv_j$,
- falls $sw_j = 0$ und $sv_j > 0$ und $0 \leq d_n < \infty$ ist, dann ist $fc_j = 0$,
- falls $sw_j = 0$ und $sv_j > 0$ und $d_n = \infty$ ist, dann ist $fc_j = sv_j$,
- falls $sw_j > 0$ und $sv_j = 0$ und $d_n = 0$ ist, dann ist $fc_j = sw_j$,
- falls $sw_j > 0$ und $sv_j = 0$ und $0 < d_n \leq \infty$ ist, dann ist $fc_j = 0$, und
- falls $sw_j = 0$ und $sv_j = 0$ ist, dann ist $fc_j = 0$,

wobei die vorangehenden Parameter die folgende Bedeutung haben:

$sw_j$    die erwartungsgemäß ungenutzte Gewichtskapazität eines Segments j, ausge drückt in abrechenbarem Gewicht cw, insbesondere abrechenbaren kg mit dem Volumengewicht $d = 0$, wobei $sw_j$ definiert ist als Min $\{sw_k$, für alle k, für die gilt $ak_j = 1\}$,

$sv_j$    die erwartungsgemäß ungenutzte Volumenkapazität eines Segments j, ausgedrückt in abrechenbarem Gewicht cw, insbesondere abrechenbaren kg mit dem Volumengewicht $d = \infty$, wobei $sv_j$ definiert ist als Min $\{sv_k$, für alle k, für die gilt $ak_j = 1\}$, wobei

$ak_j = 1$, wenn das Leg k in dem Segment j enthalten ist und wobei

$ak_j = 0$, wenn das Leg k nicht in dem Segment j enthalten ist, und wobei

$cw_n$    das abrechenbare Gewicht cw der Buchungsanfrage n, ausgedrückt in abre chenbaren kg, darstellt,

$fc_j$    die frei verfügbare Kapazität mit dem Volumengewicht $d_n$, ausgedrückt in abrechenbarem Gewicht cw, insbesondere abrechenbaren kg, und

$d$    das Volumengewicht, vorzugsweise in $m^3/t$,

$d_n$    das Volumengewicht einer Frachteinheit n, vorzugsweise in $m^3/t$, das wie folgt bestimmt wird:

- falls das Gewicht $W_n$ der Frachteinheit $n > 0$ und das Volumen $V_n$ der Frachteinheit $n \geq 0$, dann ist das Volumengewicht $d_n = (V_n/W_n)$,
- falls das Gewicht $W_n$ der Frachteinheit $= 0$ und das Volumen $V_n$ der Frachteinheit $> 0$, dann ist das Volumengewicht $d_n = \infty$, und
- falls das Gewicht $W_n$ der Frachteinheit $= 0$ und das Volumen $V_n$ der Frachteinheit $= 0$, dann ist das Volumengewicht $d_n$ unbestimmt,

$ds$    das Standard-Volumengewicht darstellt;

b) das abrechenbare Gewicht $cw_n$ der Buchungsanfrage n ermittelt wird gemäß:

- falls das Gewicht $W_n$ in t gleich 0 und das Volumen $V_n$ in $m^3$ gleich 0 ist, dann ist $cw_n = 0$,
- falls $0 \leq d_n \leq ds$, dann ist $cw_n = W_n \times 1000$ und
- falls $ds < d_n \leq \infty$, dann ist $cw_n = V_n \times 1000/ds$; und

c) falls das abrechenbare Gewicht $cw_n \leq fc_j$, die Buchungsanfrage bestätigt und, falls das abrechenbare Gewicht $cw_n > fc_j$, die Buchungsanfrage bestätigt, wenn für die Buchungsanfrage einer Frachteinheit n der Bid-Preis $bp_n \leq r_n$ und wenn $V_n \leq V_{Rest}$ und $W_n \leq W_{Rest}$, und ansonsten die Buchungsanfrage ablehnt.

Dabei kann erfindungsgemäß vorgesehen sein, dass der Bid-Preis $bp_j$ ermittelt wird über die Gleichung

$$bp_j = w_n \times bpw_j + v_n \times bpv_j,$$

wobei

$bp_j$ für den Bidpreis einer Einheit eines abrechenbaren Gewichts cw, insbesondere eines abrechenbaren kg, der angefragten Frachteinheit bzw. -mengen für ein Segment j bei einem Volumengewicht $d_n$, $bpw_j$ für den Gewichtska-pazitätszugangspreis des Segments j, ausgedrückt in Preis pro abrechenbarem Gewicht cw, insbesondere pro abrechenbaren kg mit dem Volumengewicht $d_n = 0$ (Preis der Gewichtskapazität des Segments j), $bpv_j$ für den Volumens-kapazitätszugangspreis des Segments j, ausgedrückt in Preis pro abrechenbarem Gewicht cw, insbesondere pro abrechenbaren kg mit dem Volumengewicht $d_n = oo$(Preis der Volumenkapazität des Segments j) stehen, wobei $bpw_j$

definiert ist als die Summe der Gewichts-Bid-Preise von allen Legs k, die auf dem Segment j liegen, d.h. $bpw_j = \Sigma_k a_{kj}$ x $bpw_k$, und wobei $bpv_j$ definiert ist als die Summe der Volumen-Bid-Preise von allen Legs k, die auf dem Segment j liegen, d.h. $bpv_j = \Sigma_k a_{kj}$ x $bpv_k$, wobei $ak_j = 1$, wenn das Leg k in dem Segment j enthalten ist und wobei $ak_j = 0$, wenn das Leg k nicht in dem Segment j enthalten ist, und wobei $w_n$ für den spezifischen Gewichtsverbrauch und $v_n$ für den spezifischen Volumenverbrauch stehen, wobei der spezifische Gewichts- bzw. der spezifische Volumenverbrauch wie folgt definiert sind:

- falls $0 \leq d_n \leq ds$, dann ist $w_n = 1$ und $v_n = d_n/ds$,
- falls $ds < d_n < \infty$, dann ist $w_n = ds/d_n$ und $v_n = 1$,
- falls $d_n = \infty$, dann ist $w_n = 0$ und $v_n = 1$ und

wobei $d_n$ das Volumengewicht einer Frachteinheit- bzw. -menge und ds das Standard-Volumengewicht wiedergeben, und wobei die $bpw_k$ und $bpv_k$ ermittelt werden durch Lösen des folgenden Problems, insbesondere mittels Linearen Programmierens:

Minimiere

$$R_F = \sum_k W_{k\text{-Rest}} \times bpw_k + \sum_k V_{k\text{-Rest}} \times bpv_k + \sum_i \sum_j D_{ij} \times p_{ij}$$

bezüglich
$\Sigma a_{kj} w_{ij} \times bpw_k + \Sigma a_{kj} v_{ij} \times bpv_k + p_{ij} \geq r_{ij}$, für alle (i,j)
$bpv_k, bpw_k, p_{ij} \geq 0$, für alle (i, j) und k,

wobei $R_F$ den Erlös über einen Flug, $W_{k\text{-Rest}}$ die noch verfügbare Gewichtskapazität des Legs k, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{k\text{-Rest}}$ die noch verfügbare Volumenkapazität des Legs k, ausgedrückt in abrechenbarem Gewicht cw, insbesondere abrechenbaren kg, die bzw. das vorzugsweise lediglich aus Volumen besteht, d.h. ein Volumengewicht von d = $\infty$ aufweist, $bpw_k$ den Bid-Preis der Gewichtskapazität des Legs k, $bpv_k$ den Bid-Preis der Volumenkapazität des Legs k, $D_{ij}$ die prognostizierte Nachfrage der Prognosedomäne bzw. des Unterbereichs (r/d-Klasse) i des Segments j, ausgedrückt in abrechenbarem Gewicht cw, insbesondere abrechenbaren kg, $w_{ij}$ den Gewichtskoeffizienten für die Prognosedomäne i des Segments j, $v_{ij}$ den Volumenkoeffizienten für die Prognosedomäne i des Segments j, $a_{kj}$ den Indexkoeffizienten des Legs k auf dem Segment j darstellt, wobei $a_{kj} = 0$, wenn das Leg k nicht Bestandteil des Segments j ist und wobei $a_{kj} = 1$, wenn das Leg k Bestandteil des Segments j ist, sowie $p_{ij}$ die Profitabilität der Prognosedomäne i des Segments j, ausgedrückt in abrechenbarem Gewicht cw, insbesondere abrechenbaren kg, und $r_{ij}$, insbesondere in Form eines Mittelwerts oder gewichteten Mittelwerts, die Rate der Prognosedomäne i des Segments j, ausgedrückt als Preis, vorzugsweise in einer offiziell anerkannten Währungseinheit, pro abrechenbaren Gewicht cw, insbesondere abrechenbaren kg, spezifizieren, wobei die Gewichts- und Volumenkoeffizienten $w_{ij}$ und $v_{ij}$ wie folgt definiert sind:

- falls $0 \leq d_{ij} \leq ds$, dann ist $w_{ij} = 1$ und $v_{ij} = d_{ij}/ds$,
- falls $ds < d_{ij} < \infty$, dann ist $w_{ij} = ds/d_{ij}$ und $v_{ij} = 1$,
- falls $d_{ij} = \infty$, dann ist $w_{ij} = 0$ und $v_{ij} = 1$ und wobei $d_{ij}$ einen Volumengewichtswert aus der Domäne i des Segments j, insbesondere einen Mittelwert oder gewichteten Mittelwert, darstellt.

Ferner kann hierbei gemäß einer weiteren erfindungsgemäßen Ausführungsform vorgesehen sein, dass die erwartungsgemäß ungenutzte Gewichtskapazität $sw_j$ eines Segments j, ausgedrückt in abrechenbarem Gewicht cw, insbesondere abrechenbaren kg mit dem Volumengewicht d = 0, und die erwartungsgemäß ungenutzte Volumenkapazität $sv_j$ eines Segments j, ausgedrückt in abrechenbarem Gewicht cw, insbesondere abrechenbaren kg mit dem Volumengewicht d = $\infty$, ermittelt werden über Min {$sw_k$, für alle k, für die gilt $ak_j = 1$} und Min {$sv_k$, für alle k, für die gilt $ak_j = 1$} und wobei die Werte für $sw_k$ und $sv_k$ durch Lösung des nachfolgenden Problems mit Hilfe der Linearen Optimierung bestimmt werden:

Maximiere

$$R_F = \sum_i \sum_j r_{ij} \, x_{ij}$$

bezüglich

$$\sum_i \sum_j a_{kj} \, w_{ij} \, x_{ij} + sw_k = W_{k\text{-Rest}}, \text{ für alle } k$$

$$\sum_i \sum_j a_{kj} \, v_{ij} \, x_{ij} + sv_k = V_{k\text{-Rest}}, \text{ für alle } k$$

$X_{ij} + S_{ij} = D_{ij}$, für alle (i, j) und
$S_{ij}, SV_k, SW_k, X_{ij} \geq 0$, für alle (i, j) und k,

wobei $R_F$ den Erlös über einen Flug, der Index k das Leg eines Transportes, insbesondere Fluges, j das Segment eines Transportes, i die Prognosedomäne bzw. den Unterbereich (r/d-Klasse) eines Segments, $X_{ij}$ die zu akzeptierende Nachfrage für die Prognosedomäne i des Segments j, ausgedrückt in abrechenbarem Gewicht cw, insbesondere abrechenbaren kg, $D_{ij}$ die prognostizierte Nachfrage der Prognosedomäne i des Segments j, ausgedrückt in abrechenbarem Gewicht cw, insbesondere abrechenbaren kg, $a_{kj}$ den Indexkoeffizienten des Legs k auf dem Segment j darstellt, wobei $a_{kj} = 0$, wenn das Leg k nicht Bestandteil des Segments j ist und wobei $a_{kj} = 1$, wenn das Leg k Bestandteil des Segments j ist, $w_{ij}$ den Gewichtskoeffizienten für die Prognosedomäne i des Segments j, $v_{ij}$ den Volumenkoeffizienten für die Prognosedomäne i, $W_{k\text{-Rest}}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, des Legs k und $V_{k\text{-Rest}}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, des Legs k sowie $s_{ij}$, $sv_k$ und $sw_k$ die Schlupfvariablen für die Nachfrage der Prognosedomäne i auf dem Segment j, des Volumen des Legs k, insbesondere in Form eines abrechenbaren Gewichts cw, insbesondere eines abrechenbaren kg, die bzw. das vorzugsweise lediglich aus Volumen besteht, d.h. ein Volumengewicht von d = ∞ aufweist, bzw. des Gewichts des Legs k, insbesondere in Form eines abrechenbaren Geichts cw, insbesondere eines abrechenbaren kg, die bzw. das vorzugsweise lediglich aus Gewicht besteht, d.h. ein Volumengewicht von d = 0 aufweist, spezifizieren und $r_{ij}$ die Rate der Prognosedomäne i des Segments j, insbesondere in Form eines Mittelwerts oder gewichteten Mittelwerts, ausgedrückt als Preis, vorzugsweise in einer offiziell anerkannten Währungseinheit, pro abrechenbaren Gewicht cw, insbesondere abrechenbaren kg, spezifizieren, wobei die Gewichts- und Volumenkoeffizienten $w_{ij}$ und $v_{ij}$ wie folgt definiert sind:

- falls $0 \leq d_{ij} \leq ds$, dann ist $w_{ij} = 1$ und $v_{ij} = d_{ij}/ds$,
- falls $ds < d_{ij} < \infty$, dann ist $w_{ij} = ds/d_{ij}$ und $v_{ij} = 1$,
- falls $d_{ij} = \infty$, dann ist $w_{ij} = 0$ und $v_{ij} = 1$ und wobei

$d_{ij}$ einen Volumengewichtswert aus der Domäne i des Segments j, insbesondere einen Mittelwert oder gewichteten Mittelwert, darstellt.

Des weiteren lässt sich die Optimierung der Auslastung und/oder die Maximierung des Erlöses eines Frachtraumes eines aus mindestens einem Segment j mit mindestens einem Leg k bestehenden Frachtguttransportes durch Ermittlung der freien Kapazität für einen Frachttransport, bezogen auf das skalierte Volumengewicht einer Frachteinheit, dadurch bewerkstelligen, dass

a) für eingehende Buchungsanfragen für Frachteinheiten n mit der Rate $r_n$, dem Volumen $V_n$, vorzugsweise in [m$^3$], dem Gewicht $W_n$, vorzugsweise in [t], dem abrechenbaren Gewicht $cw_n$, dem Volumengewicht $d_n$ und dem skalierten Volumengewicht $sd_n$ zunächst die freie Kapazität $fc_j$ eines Segments in Abhängigkeit von dem skalierten Volumengewicht $sd_n$ ermittelt wird über:

- falls $0 < sw_j \leq sv_j$ und $0 \leq sd_n \leq 0,5$ ist, dann ist $fc_j = sw_j$,
- falls $0 < sw_j \leq sv_j$ und $0,5 < sd_n \leq 0,5 \times (sv_j/sw_j)$ ist, dann ist $fc_j = sw_j /(2(1-Sd_n))$,
- falls $0 < sw_j \leq sv_j$ und $0,5 \times (sv_j/sw_j) < sd_n \leq 1$ ist, dann ist $fc_j = sv_j$,

- falls $sw_j > sv_j > 0$ und $0 \leq sd_n \leq 0{,}5 \times (sv_j/sw_j)$ ist, dann ist $fc_j = sw_j$,
- falls $sw_j > sv_j > 0$ und $0{,}5 \times (sv_j/sw_j) < sd_n \leq 0{,}5$ ist, dann ist $fc_j = sv_j/2\,sd_n$,
- falls $sw_j > sv_j > 0$ und $0{,}5 < sd_n \leq 1$ ist, dann ist $fc_j = sv_j$,
- falls $sw_j = 0$ und $sv_j > 0$ und $0 \leq sd_n < 1$ ist, dann ist $fc_j = 0$,
- falls $sw_j = 0$ und $sv_j > 0$ und $sd_n = 1$ ist, dann ist $fc_j = sv_j$,
- falls $sw_j > 0$ und $sv_j = 0$ und $sd_n = 0$ ist, dann ist $fc_j = sw_j$,
- falls $sw_j > 0$ und $sv_j = 0$ und $0 < sd_n \leq 1$ ist, dann ist $fc_j = 0$, und
- falls $sw_j = 0$ und $sv_j = 0$ ist, dann ist $fc_j = 0$,

wobei die vorangehenden Parameter die folgende Bedeutung haben:

$sw_j$ die erwartungsgemäß ungenutzte Gewichtskapazität eines Segments j, ausgedrückt in abrechenbarem Gewicht cw, insbesondere abrechenbaren kg mit dem Volumengewicht $d = 0$, wobei $sw_j$ definiert ist als Min $\{sw_k$, für alle k, für die gilt $ak_j = 1\}$,

$sv_j$ die erwartungsgemäß ungenutzte Volumenkapazität eines Segments j, ausgedrückt in abrechenbarem Gewicht cw, insbesondere abrechenbaren kg mit dem Volumengewicht $d = \infty$, wobei $sv_j$ definiert ist als Min $\{sv_k$, für alle k, für die gilt $ak_j = 1\}$, wobei

$ak_j = 1$, wenn das Leg k in dem Segment j enthalten ist und wobei

$ak_j = 0$, wenn das Leg k nicht in dem Segment j enthalten ist,

$cw_n$ das abrechenbare Gewicht cw der Buchungsanfrage n, ausgedrückt in abrechenbaren kg, darstellt,

$fc_j$ die frei verfügbare Kapazität mit dem skalierten Volumengewicht $sd_n$, ausgedrückt in abrechenbarem Gewicht cw, insbesondere abrechenbaren kg,

$d_n$ das Volumengewicht einer Frachteinheit n, vorzugsweise in $m^3/t$, das wie folgt bestimmt wird:

- falls das Gewicht $W_n$ der Frachteinheit $> 0$ und das Volumen $V_n$ der Frachteinheit $\geq 0$, dann ist das Volumengewicht $d_n = (V_n/W_n)$,
- falls das Gewicht $W_n$ der Frachteinheit $= 0$ und das Volumen $V_n$ der Frachteinheit $> 0$, dann ist das Volumengewicht $d_n = \infty$, und
- falls das Gewicht $W_n$ der Frachteinheit $= 0$ und das Volumen $V_n$ der Frachteinheit $= 0$, dann ist das Volumengewicht $d_n$ unbestimmt,

- ausgehend von dem ermittelten Volumengewicht $d_n$ das skalierte Volumengewicht $sd_n$ bestimmt, wobei,

- falls $d_n = 0$, dann $sd_n = 0$ ist,
- falls $0 < d_n \leq ds$, dann $sd_n = d_n/2ds$ ist,
- falls $ds < d_n < \infty$, dann $sd_n = 1 - ds/2d_n$ ist, und
- falls $d_n = \infty$, dann $sd_n = 1$ ist,

wobei ds ein gegebenes Standard-Volumengewicht, vorzugsweise in $m^3/t$, ist, das insbesondere dem Standard-Volumengewicht $ds_{IATA}$ der IATA entspricht;

b) das abrechenbare Gewicht cw ermittelt wird gemäß:

- falls das Gewicht $W_n$ in t gleich 0 und das Volumen $V_n$ in $m^3$ gleich 0 ist, dann ist $cw_n = 0$,
- falls $0 \leq sd_n \leq 0{,}5$, dann ist $cw_n = W_n \times 1000$ und
- falls $0{,}5 < sd_n \leq 1$, dann ist $cw_n = V_n \times 1000/ds$; und

c) falls das abrechenbare Gewicht $cw_n \leq fc_j$, die Buchungsanfrage bestätigt und, falls das abrechenbare Gewicht $cw_n > fc_j$, die Buchungsanfrage bestätigt, wenn für die Buchungsanfrage einer Frachteinheit n der Bid-Preis $bp_n \leq r_n$ und wenn $V_n \leq V_{Rest}$ und $W_n \leq W_{Rest}$, und ansonsten die Buchungsanfrage ablehnt.

Hierbei ist vorzugsweise zu berücksichtigen, dass die Volumenkapazität V, insbesondere die Restvolumenkapazität $V_{Rest}$ und/oder die maximale Volumenkapazität $V_{max}$, ausgedrückt werden als abrechenbares Gewicht cw, insbesondere abrechenbare kg, mit dem Volumengewicht $d = \infty$ und/oder dass die Gewichtskapazität W, insbesodere die Restgewichtskapazität $W_{Rest}$ und/oder die maximale Gewichtskapazität $W_{max}$, ausgedrückt werden als abrechenbares Gewicht cw, insbesondere abrechenbare kg, mit dem Volumengewicht $d = 0$.

Ferner gelingt die Optimierung der Auslastung und/oder die Maximierung des Erlöses eines Frachtraumes eines aus mindestens einem Segment j mit mindestens einem Leg g bestehenden Frachtguttransportes durch Ermittlung des Ertrages aus den niedrigstwertigen Unterbereichen von erwarteten Frachtgutbuchungsnachfragen (Bid-Preis) für ein Segment in Abhängigkeit von dem Volumengewicht d, dadurch, dass

a) für eingehende Buchungsanfragen für Frachteinheiten n mit der Rate $r_n$, dem Volumen $V_n$, dem Gewicht $W_n$ und dem Volumengewicht $d_n$ der Bid-Preis $bp_j$ wie folgt bestimmt wird:

- falls $0 \leq d_n \leq ds$ ist, dann ist $bp_j = bpw_j + (d_n/ds) \times bpv_j$,
- falls $ds < d_n < \infty$ ist, dann ist $bp_j = (ds/d_n) \times bpw_j + bpv_j$, und
- falls $d_n = \infty$ ist, dann ist $bp_j = bpv_j$,

wobei die vorangehenden Parameter die folgende Bedeutung haben:

$d_n$ Volumengewicht der Buchungsanfrage
ds Standard-Volumengewicht
$bp_j$ Bid-Preis des Segments j bei einem Volumengewicht $d_n$
$bpw_j$ Gewichtskapazitätszugangspreis des Segments j, ausgedrückt in Preis pro abrechenbarem Gewicht cw, insbesondere pro abrechenbaren kg mit dem Volumengewicht $d_n = 0$ (Preis der Gewichtskapazität des Segments j),
$bpv_j$ Volumenskapazitätszugangspreis des Segments j, ausgedrückt in Preis pro abrechenbarem Gewicht cw, insbesondere pro abrechenbaren kg mit dem Volumengewicht $d_n = \infty$ (Preis der Volumenkapazität des Segments j),

wobei $bpw_j$ definiert ist als die Summe der Gewichts-Bid-Preise von allen Legs k, die auf dem Segment j liegen, d.h. $bpw_j = \Sigma_k a_{kj} \times bpw_k$, und wobei $bpv_j$ definiert ist als die Summe der Volumen-Bid-Preise von allen Legs k, die auf dem Segment j liegen, d.h. $bpv_j = \Sigma_k a_{kj} \times bpv_k$, wobei
$ak_j = 1$, wenn das Leg k in dem Segment j enthalten ist und wobei
$ak_j = 0$, wenn das Leg k nicht in dem Segment j enthalten ist, und wobei
das Volumengewicht einer Frachteinheit n, vorzugsweise in $m^3/t$, darstellt und wie
folgt bestimmt wird:

- falls das Gewicht $W_n$ der Frachteinheit $> 0$ und das Volumen $V_n$ der Frachteinheit $\geq 0$, dann ist das Volumengewicht $d_n = (V_n/W_n)$,
- falls das Gewicht $W_n$ der Frachteinheit $= 0$ und das Volumen $V_n$ der Frachteinheit $> 0$, dann ist das Volumengewicht $d_n = \infty$, und
- falls das Gewicht $W_n$ der Frachteinheit $= 0$ und das Volumen $V_n$ der Frachteinheit $= 0$, dann ist das Volumengewicht $d_n$ unbestimmt, und

b) das abrechenbare Gewicht $cw_n$ der Buchungsanfrage n ermittelt gemäß:

- falls das Gewicht $W_n$ in t gleich 0 und das Volumen $V_n$ in $m^3$ gleich 0 ist, dann ist $cw_n = 0$,
- falls $0 \leq d_n \leq ds$, dann ist $cw_n = W_n \times 1000$ und
- falls $ds < d_n \leq \infty$, dann ist $cw_n = V_n \times 1000/ds$; und

c) falls die Rate $r_n \geq bpj$ und falls $V_n \leq V_{Rest}$ und $W_n \leq W_{Rest}$, die Buchungsanfrage bestätigt und, falls die Rate $r_n < bp_j$, die Buchungsanfrage ablehnt.

Schließlich ist erfindungsgemäß zur Optimierung der Auslastung und/oder der Maximierung des Erlöses eines Frachtraumes eines aus mindestens einem Segment j mit mindestens einem Leg k bestehenden Frachtguttransportes über die Ermittlung des Ertrages aus den niedrigstwertigen Unterbereichen von erwarteten Frachtgutbuchungsnachfragen ebenfalls möglich auf das skalierte Volumengewicht sd abzustellen. Dabei kann vorgesehen sein, dass

a) für eingehende Buchungsanfragen für Frachteinheiten n mit der Rate $r_n$, dem Volumen $V_n$, dem Gewicht $W_n$, dem Volumengewicht $d_n$ und dem skalierten Volumengewicht $sd_n$ der Bid-Preis $bp_j$ wie folgt bestimmt wird:

- falls $0 \leq sd_n \leq 0,5$ ist, dann ist $bp_j = bpw_j + 2\,sd_n \times bpv_j$,
- falls $0,5 < sd_n < 1$ ist, dann ist $bp_j = 2(1 - sd_n) \times bpw_j + bpv_j$, und
- falls $d_n = 1$ ist, dann ist $bp_j = bpv_j$,

wobei die vorangehenden Parameter die folgende Bedeutung haben:

$d_n$ Volumengewicht der Buchungsanfrage

$sd_n$ das skalierte Volumengewicht der Buchungsanfrage

$bp_j$ Bid-Preis des Segments j bei einem skalierten Volumengewicht $sd_n$

$bpw_j$ Gewichtskapazitätszugangspreis des Segments j, ausgedrückt in Preis pro abrechenbarem Gewicht cw, insbesondere pro abrechenbaren kg mit dem Volumengewicht $d_n = 0$ (Preis der Gewichtskapazität des Segments j),

$bpv_j$ Volumenskapazitätszugangspreis des Segments j, ausgedrückt in Preis pro abrechenbarem Gewicht cw, insbesondere pro abrechenbaren kg mit dem Volumengewicht $d_n = \infty$ (Preis der Volumenkapazität des Segments j),

wobei $bpw_j$ definiert ist als die Summe der Gewichts-Bid-Preise von allen Legs k, die auf dem Segment j liegen, d.h. $bpw_j = \Sigma_k a_{kj} \times bpw_k$, und wobei $bpv_j$ definiert ist als die Summe der Volumen-Bid-Preise von allen Legs k, die auf dem Segment j liegen, d.h. $bpv_j = \Sigma_k a_{kj} \times bpv_k$, wobei

$ak_j = 1$, wenn das Leg k in dem Segment j enthalten ist und wobei

$ak_j = 0$, wenn das Leg k nicht in dem Segment j enthalten ist,

und wobei

das Volumengewicht einer Frachteinheit n, vorzugsweise in $m^3/t$, darstellt und wie folgt bestimmt wird:

- falls das Gewicht $W_n$ der Frachteinheit > 0 und das Volumen $V_n$ der Frachteinheit $\geq 0$, dann ist das Volumengewicht $d_n = (V_n/W_n)$,
- falls das Gewicht $W_n$ der Frachteinheit = 0 und das Volumen $V_n$ der Frachteinheit > 0, dann ist das Volumengewicht $d_n = \infty$, und
- falls das Gewicht $W_n$ der Frachteinheit = 0 und das Volumen $V_n$ der Frachteinheit = 0, dann ist das Volumengewicht $d_n$ unbestimmt, und

ausgehend von dem ermittelten Volumengewicht d das skalierte Volumengewicht $sd_n$ wie folgt bestimmt:

- falls $d_n = 0$, dann $sd_n = 0$ ist,
- falls $0 < d_n \leq ds$, dann $sd_n = d_n/2ds$ ist,
- falls $ds < d_n < \infty$, dann $sd_n = 1 - ds/2d_n$ ist, und
- falls $d_n = \infty$, dann $sd_n = 1$ ist,

wobei ds ein gegebenes Standard-Volumengewicht, vorzugsweise in $m^3/t$, ist, das insbesondere dem Standard-Volumengewicht $ds_{IATA}$ der IATA entspricht;

b) das abrechenbare Gewicht $cw_n$ der Buchungsanfrage n ermittelt gemäß:

- falls das Gewicht $W_n$ in t gleich 0 und das Volumen $V_n$ in $m^3$ gleich 0 ist, dann ist $cw_n = 0$,
- falls $0 \leq sd_n \leq 0,5$, dann ist $cw_n = W_n \times 1000$ und
- falls $0,5 < sd_n \leq 1$, dann ist $cw_n = V_n \times 1000/ds$; und

c) falls die Rate $r_n \geq bp_j$ und falls $V_n \leq V_{Rest}$ und $W_n \leq W_{Rest}$, die Buchungsanfrage bestätigt und, falls die Rate $r_n < bp_j$, die Buchungsanfrage ablehnt.

Die erfindungsgemäßen Verfahren sind selbstverständlich einer computergestützten bzw. computerimplementierten Bearbeitung zugänglich und können auf einem Computersystem vorliegen bzw. mit einem solchen System umgesetzt werden. Demgemäß sind von der vorliegenden Erfindung auch solche Systeme umfasst, die die vorangehend geschilderten Verfahren umsetzen bzw. verkörpern.

Folglich umfasst die vorliegende Erfindung ebenfalls ein Computerprogramm mit Programmcode-Mitteln, um alle Schritte gemäß den erfindungsgemäßen Verfahren durchzuführen, wenn das Programm auf einem Computer ausgeführt wird. Ebenfalls umfasst von der vorliegenden Erfindung ist ein Computerprogramm mit den vorangehend geschilderten Programmcode-Mitteln, die auf einem computerlesbaren Medium oder Datenträger gespeichert sind. Schließlich betrifft die Erfindung ein Computerprogramm-Produkt mit auf einem maschinenlesbaren Medium oder Träger gespeicherten Programmcode-Mitteln, um alle Schritte gemäß den erfindungsgemäßen Verfahren durchzuführen, wenn das Programm auf einem Computer ausgeführt wird.

Die nachfolgenden Abbildungen veranschaulichen besondere Ausführungsformen der vorliegenden Erfindung, ohne deren Gegenstand einzuschränken. Im einzelnen zeigt

Fig. 1    ein r/sd-Diagramm für ein spezielles Segment eines Fluges;

Fig. 2 mehrere mögliche Skalierungen des Volumengewichts;

Fig. 3 ein Diagramm, betreffend den spezifischen Volumenverbrauch und den spezifischen Gewichtsverbrauch bezogen auf das Abrechnungsgewicht cw als Funktion des skalierten Volumengewichts bzw. als Funktion des unskalierten Volumengewichts für Fracht mit Volumengewichtswerten kleiner dem Standard-Volumengewicht;

Fig. 4 ein Diagramm, betreffend den spezifischen Volumenverbrauch und den spezifischen Gewichtsverbrauch bezogen auf das Abrechnungsgewicht cw als Funktion des unskalierten Volumengewichts für Fracht mit Volumengewichtswerten größer dem Standard-Volumengewicht;

Fig. 5 ein Diagramm, betreffend den spezifischen Volumenverbrauch und den spezifischen Gewichtsverbrauch bezogen auf das Abrechnungsgewicht cw als Funktion des skalierten Volumengewichts für Fracht mit Volumengewichtswerten größer dem Standard -Volumengewicht;

Fig. 6 ein r/sd-Diagramm, enthaltend eine Bidpreis-Kurve eines bestimmten Flugsegments als Funktion des skalierten Volumengewichts für Fracht mit Volumengewichtswerten zwischen dem Wert Null und dem Wert Unendlich;

Fig. 7 ein cw/sd-Diagramm (ein sog. primaler Graph), bei dem das voraussichtlich ungenutzt bleibende Abrechnungsgewicht cw eines bestimmten Flugsegments als Funktion des skalierten Volumengewichts abgetragen ist;

Fig. 8 ein cw/sd-Diagramm (ein sog. primaler Graph), bei dem das voraussichtlich ungenutzt bleibende Abrechnungsgewicht cw eines bestimmten Flugsegments als Funktion des skalierten Volumengewichts abgetragen ist;

Fig. 9 ein r/sd-Diagramm (ein sog. dualer Graph), bei dem der Kapazitätszugangspreis (der sog. Bid-Preis) eines bestimmten Flugsegments als Funktion des skalierten Volumen gewichts abgetragen ist;

Fig. 10 ein r/sd-Diagramm (ein sog. dualer Graph), bei dem der Kapazitätszugangspreis (der sog. Bid-Preis) eines bestimmten Flugsegments als Funktion des skalierten Volumengewichts abgetragen ist;

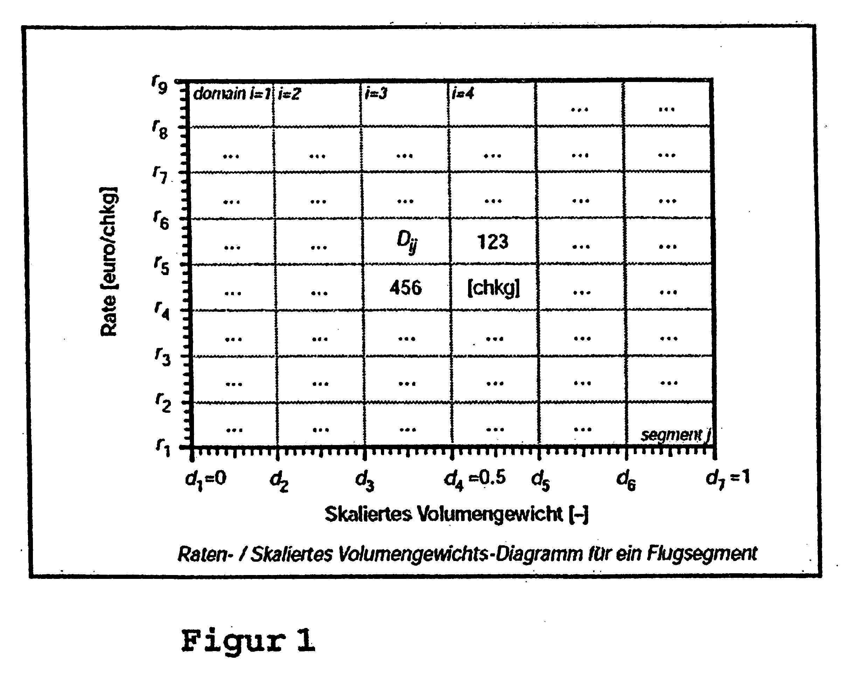

Fig. 1 zeigt ein r/sd-Diagramm für ein Segment eines Fluges. Auf der Abszisse ist das skalierte Volumengewicht abgetragen, während die Ordinate die Rate von Frachteinheiten in der Einheit Euro pro abrechenbarem Kilogramm wiedergibt. Zur besseren Veranschaulichung sind auf der Abszisse nur ausgewählte Werte des skalierten Volumengewichts gezeigt (d1 = 0, d4 = 0.5, d7 = 1). Dazwischen sind in gleichen Abständen die Platzhalter d2 und d3 bzw. d5 und d6 für die skalierten Volumengewichtswerte d wiedergeben, die Grenzwerte für ausgewählte Unterbereiche bilden. Folglich beruhen die Abstände zwischen Unterbereichsgrenzen auf der Abszisse auf dem skalierten Volumengewicht und nicht auf dem Volumengewicht. Insgesamt wird das abgebildete r/sd-Diagramm durch die Wahl der Unterbereichsgrenzen d1 bis d7 in acht Spalten unterteilt. Durch Festlegung von Grenzwerten für die Raten r auf der Ordinate erhält man im vorliegenden Fall insgesamt 48 Unterbereiche i, die alle eine identische Rechteckform aufweisen. Besonders günstig ist es, wenn kein Unterbereich i von sd-Werten begrenzt wird, die den Wert 0,5, der das Standard-Volumengewicht repräsentiert, einschließen. Demgemäß verlaufen die Unterbereichsgrenzen entlang dem Wert 0,5, d.h. kein Unterbereich beherbergt gleichzeitig Frachteinheiten niedriger und hoher Dichte. Den einzelnen Unterbereichen i kann nun eine erwartete Gesamtnachfrage Di an für ein Segment zu transportierendem Abrechnungsgewicht cw zugewiesen werden. Im vorliegenden Ausführungsbeispiel ist dem Unterbereich 22 der Wert 123 abrechenbare Kilogramm zugeordnet worden, d.h. es wird davon ausgegangen, dass Frachttransportanfragen betreffend Frachteinheiten mit einem skalierten Volumengewicht in den Grenzen d4 und d5 mit einer Rate in den Grenzen r5 und r6 für das in Rede stehende Segment insgesamt 123 abrechenbare Kilogramm ausmachen werden. Selbstverständlich kann es in dem Diagramm auch Unterbereiche i geben, denen der Wert 0 abrechenbare Kilogramm zugeordnet wird. Für diesen Fall wird keine Fracht erwartet mit einem skalierten Volumengewicht und einer Rate, die diesem Unterbereich zugeordnet werden könnte. Die erwartete Gesamtnachfragekapazität Di eines Unterbereichs i kann aus historischen Daten abgeleitet sein, insbesondere auch auf einer statistischen Auswertung beruhen. Beispielsweise können die Grenzen der jeweiligen Unterbereiche derart geschnitten sein, dass sie Wertepaar-Cluster abbilden bzw. umschließen. Andererseits können die Werte Di auch aufgrund anderer, z.B. aktueller Gegebenheiten abgeschätzt bzw. vorgegeben werden. Bei Frachtflügen reichen in der Regel maximal 100 Unterbereiche aus, um in Frage kommende Wertepaar-Cluster hinreichend genau abzubilden. Berücksichtigt man, dass ein Frachtflug in der Regel nicht mehr als 15 Segmente umfasst, stehen für einen Frachtflug insgesamt 1500 Unterbereiche i zur Verfügung.

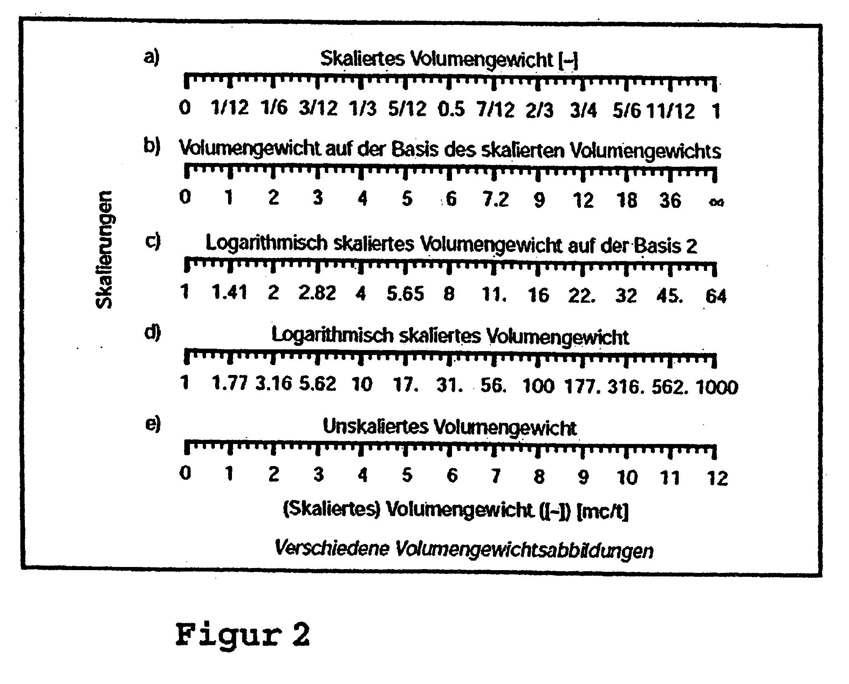

Fig. 2 sind übereinander mehrere Abszissendarstellungen zu entnehmen, die auf unterschiedliche Art und Weise das Volumengewicht einer Fracht abbilden. Zeile a) gibt das Volumengewicht als skaliertes Volumengewicht wieder; Zeile b) zeigt das unskalierte Volumengewicht, ausgerichtet an den korrespondierenden Werten der Zeile a), wobei zwecks Berechnung ein Standard-Volumengewicht von 6 Kubikmeter pro Tonne angesetzt worden ist. Die Zeilen c) und d) zeigen das logarithmisch skalierte Volumengewicht, während in Zeile e) das unskalierte Volumengewicht abgebildet ist.

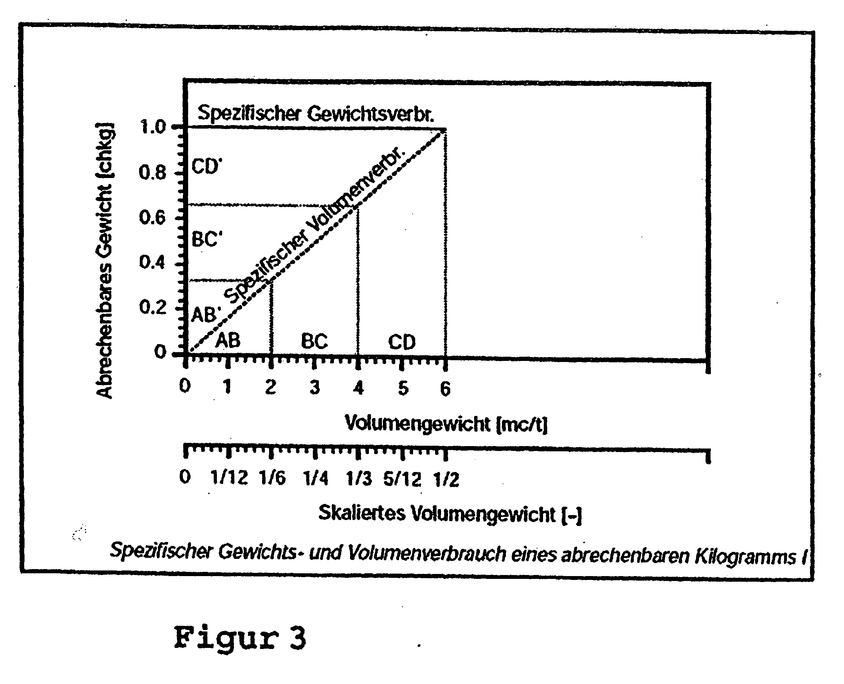

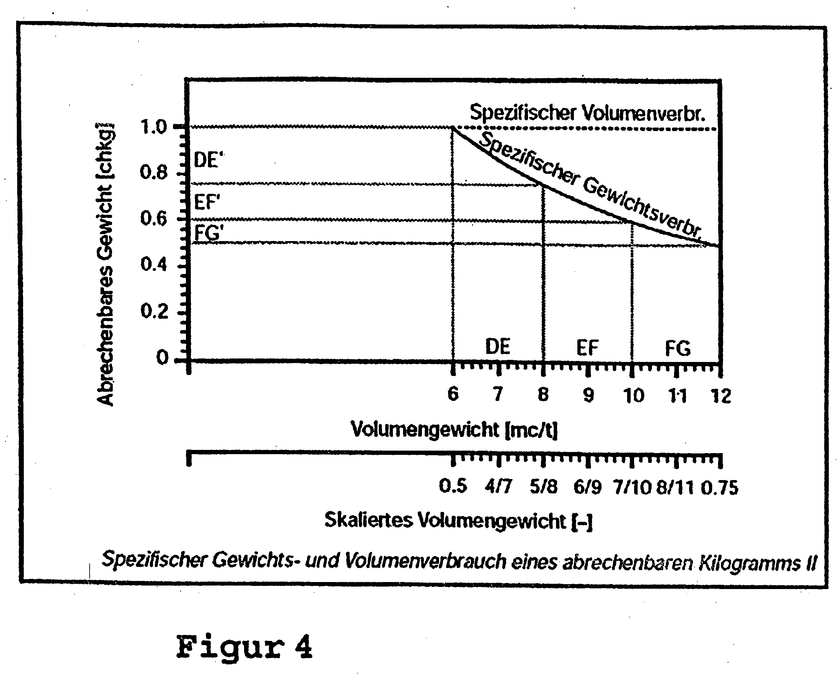

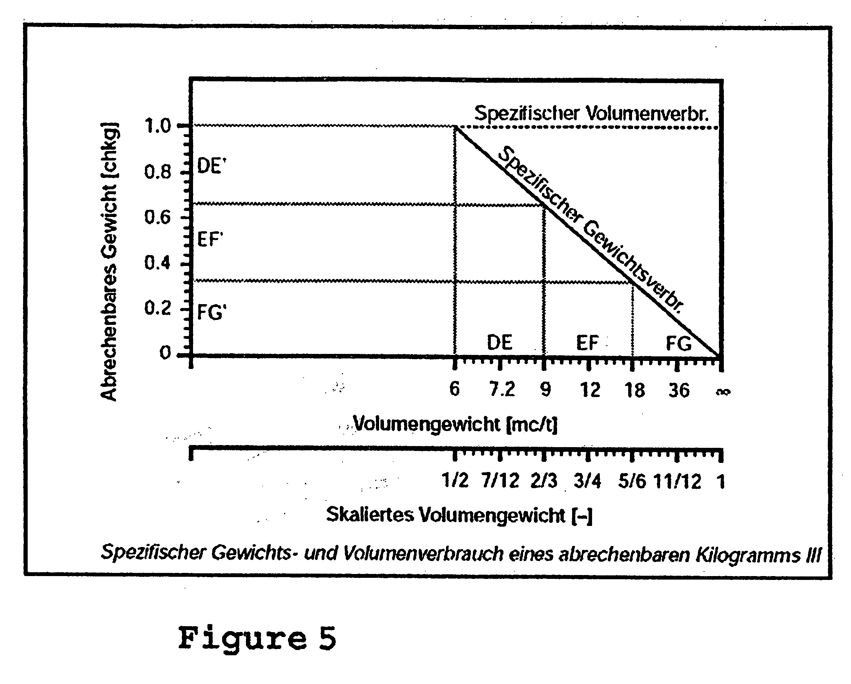

Fig. 3 zeigt ein Diagramm, bei dem auf der Abszisse das Volumengewicht und parallel dazu das korrespondierende skalierte Volumengewicht abgebildet ist und bei dem auf der Ordinate sowohl der Gewichtsverbrauch als auch der Volumenverbrauch eines abrechenbaren Kilogramms abgebildet ist. Aus Gründen der Gleichbehandlung von Gewicht und Volumen ist der spezifische Verbrauch jeweils in abrechenbaren Kilogramm (statt in Kilogramm und Kubikmeter angegeben). Solange die Fracht ein Volumengewicht aufweist, das kleiner oder gleich dem Standard-Volumengewicht ist (im vorliegenden Fall 6 Kubikmeter pro Tonne), verläuft der spezifische Volumenverbrauch linear, und der spezifische Gewichtsverbrauch beträgt stets 1 abrechenbares Kilogramm mit dem Volumengewicht 0. Legt man auch bei Fracht mit Volumengewichtswerten, die größer als das Standard-Volumengewicht sind, das unskalierte Volumengewicht zugrunde, nimmt bei steigendem Volumengewicht der spezifische Gewichtsverbrauch nicht linear ab (s.a. Fig. 4). Erst wenn man für diese Fracht mit hohem Volumengewicht die skalierten Volumengewichtswerte verwendet, mit denen auch ein unendliches Volumengewicht adäquat abgebildet werden kann, ergibt sich, wie in Fig. 5 gezeigt, ein linearer Abfall bei dem spezifischen Gewichtsverbrauch.

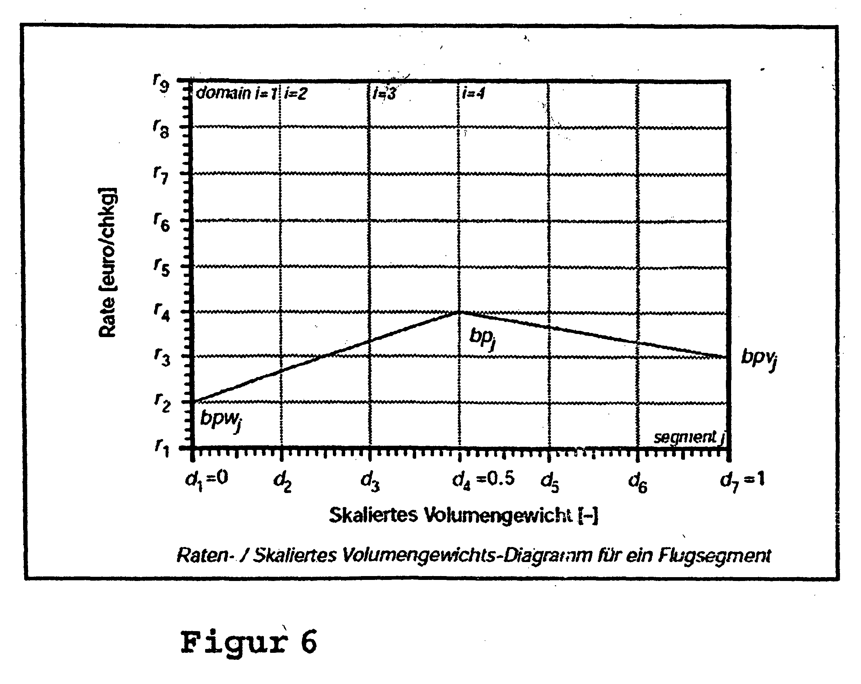

Fig. 6 stellt ein r/sd-Diagramm dar, in das eine mit Hilfe des Linearen Programmierens unter Anwendung des Dualen Modells erstellte Bidpreis-Kurve eingezeichnet worden ist. Danach sind Frachttransportanfragen, deren Wertepaarpunkte aus Rate und skaliertem Volumengewicht auf oder unterhalb dieser Bidpreis-Kurve liegen, abzulehnen, alle anderen Buchungsanfragen können angenommen werden, solange die maximale Gewichts- und Volumenkapazitäten nicht überschritten werden. Mit dem in Fig. 6 gezeigten Diagramm gelingt es auf einfache Weise, den Bidpreis als Funktion des skalierten Volumengewichts darzustellen. Dabei liefern die Schnittpunkte dieser Bidpreis-Kurve mit der Koordinatenachse bei einem skalierten Volumengewicht von 0 den Bidpreis bpw eines Segments für Fracht, die nur aus Gewicht besteht, und bei einem skalierten Volumengewicht von 1 den Bidpreis bpv eines Segments für Fracht, die nur aus Volumen besteht.

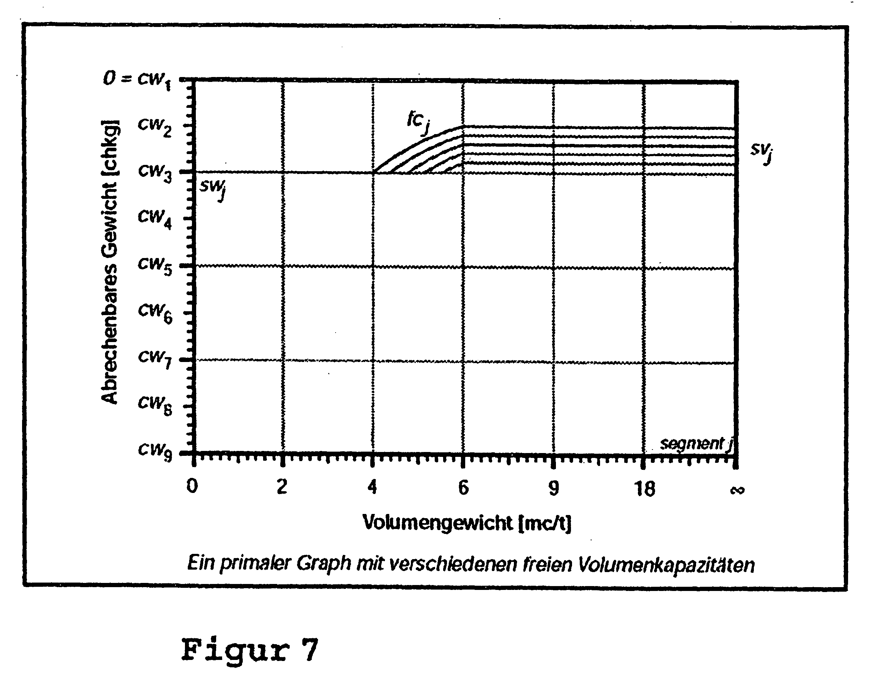

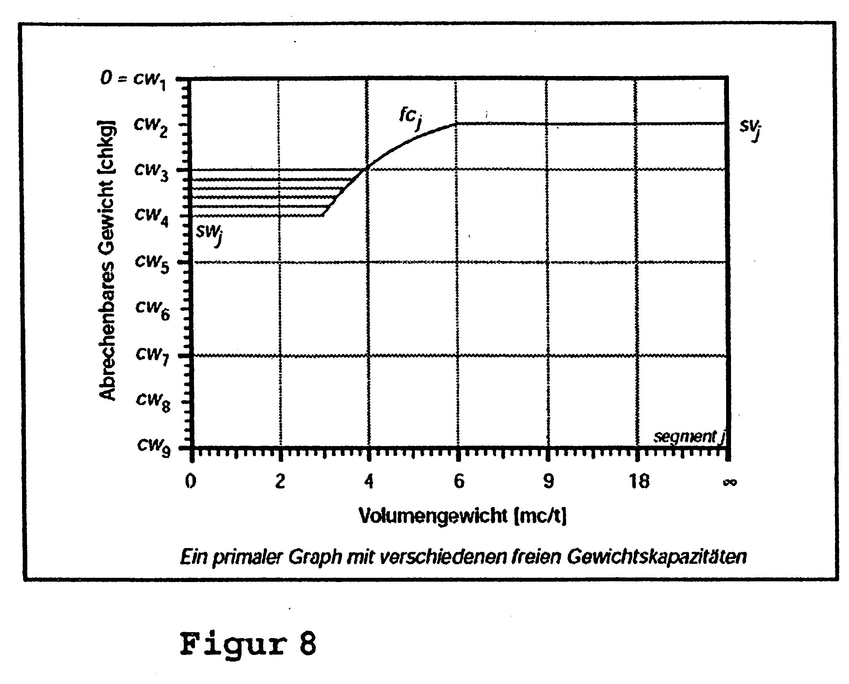

Fig. 7 und 8 stellen jeweils ein Diagramm dar, in das mit Hilfe des Linearen Programmierens unter Anwendung des primalen Modells erstellte Entscheidungskurven eingezeichnet worden sind. Die Entscheidungskurve ergibt sich z.B. mit Hilfe der LP-Problemlösung gemäß den Ansprüchen 27, 30, 32 bzw. 33 und gibt Auskunft über das voraussichtlich ungenutzt bleibende Abrechnungsgewicht in Abhängigkeit von seinem Volumengewicht. Frachttransportanfragen, deren Wertepaarpunkte aus ihrem abrechenbaren Gewicht und ihrem skaliertem Volumengewicht auf oder über dieser Entscheidungskurve liegen, sind stets anzunehmen. Mit dem in Fig. 7 und 8 gezeigten Diagramm gelingt es auf einfache Weise, während der laufenden Buchungsperiode zu entscheiden, welche Frachtbuchungsanfragen stets anzunehmen sind und welche stets abzulehnen sind. Die Frachtbuchungsanfragen, die gemäß dieser Regel stets anzunehmen sind, sind als vorteilhaft zu betrachten, da sie in andernfalls voraussichtlich ungenutzt bleibende Kapazität gebucht werden können. Der Unterschied zwischen Fig. 7 und Fig. 8 ist, dass in Fig. 7 zu Demonstrationszwecken die voraussichtlich ungenutzt bleibende Volumenkapazität variiert wurde, während in Fig. 8 die voraussichtlich ungenutzt bleibende Gewichtskapazität variiert wurde. Selbstverständlich ist den Abszissen der Fig. 7 und 8, die das Volumengewicht zeigen, die Skala des skalierten Volumengewichts unterlegt, entsprechend den Zeilen a) und b) der Fig. 2. Insoweit sich in Fig. 7 das voraussichtlich ungenutzt bleibende Abrechnungsgewicht aus dem voraussichtlich ungenutzt bleibenden Gewicht und dem voraussichtlich ungenutzt bleibenden Volumen zusammensetzt, ist die Funktion für verschiedene Werte des voraussichtlich ungenutzt bleibenden Volumens abgetragen. Auf diese Weise erhält man einen Überblick möglicher Funktionsverläufe in Abhängigkeit des Parameters des voraussichtlich ungenutzt bleibenden Volumens. Insoweit sich in Fig. 8 das voraussichtlich ungenutzt bleibende Abrechnungsgewicht aus dem voraussichtlich ungenutzt bleibenden Gewicht und dem voraussichtlich ungenutzt bleibenden Volumen zusammensetzt, ist die Funktion für verschiedene Werte des voraussichtlich ungenutzt bleibenden Gewichtes abgetragen. Auf diese Weise erhält man einen Überblick möglicher Funktionsverläufe in Abhängigkeit des Parameters des voraussichtlich ungenutzt bleibenden Gewichts.

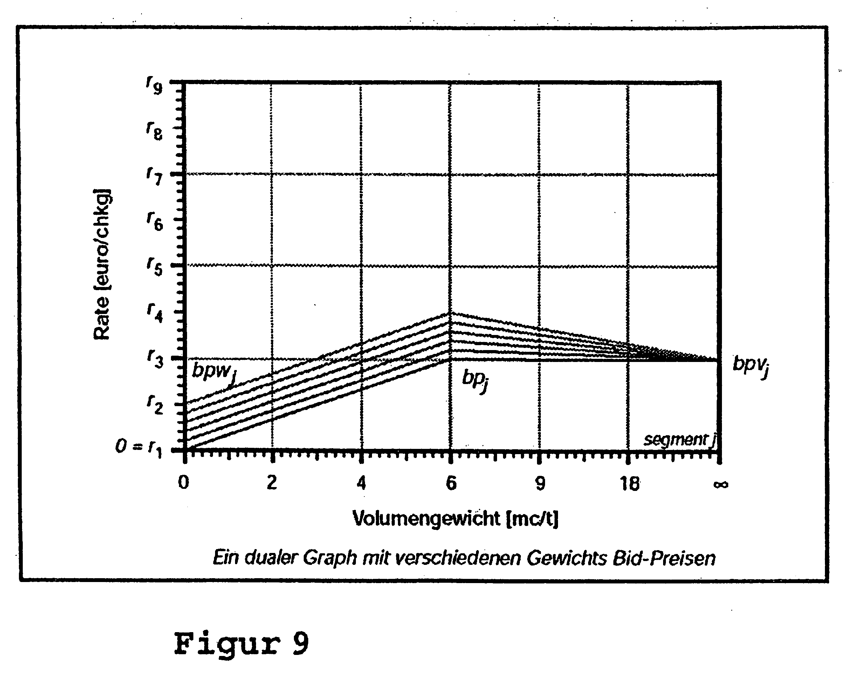

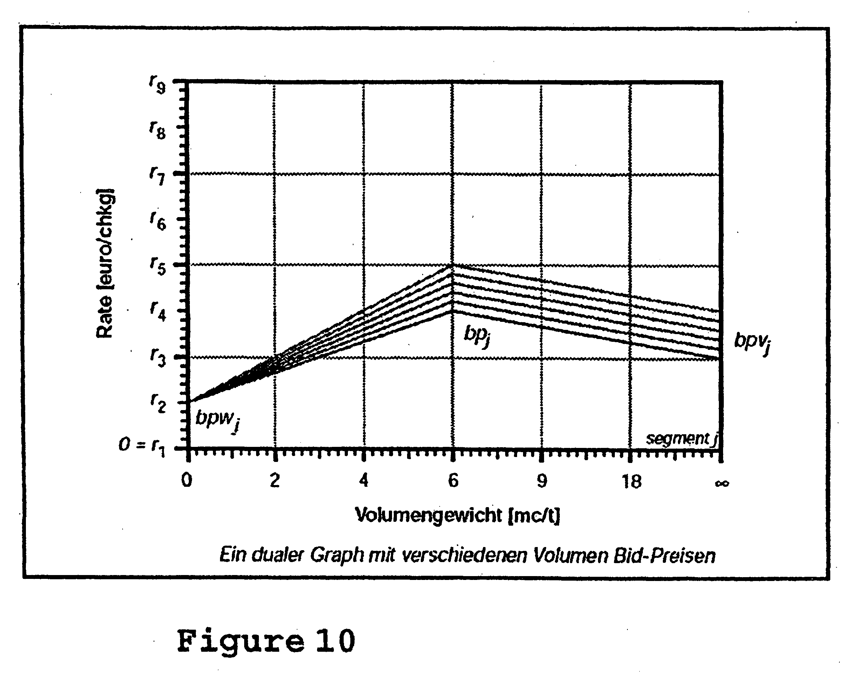

Fig. 9 und 10 stellen jeweils ein Diagramm dar, in das mit Hilfe des Linearen Programmierens unter Anwendung des dualen Modells erstellte Entscheidungskurven eingezeichnet worden sind. Die Entscheidungskurve ergibt sich z.B. mit Hilfe der LP-Problemlösung gemäß den Ansprüchen 28, 31, 35 bzw. 36 und gibt Auskunft über den optimalen Kapazitätszugangspreis eines abrechenbaren Kilogramms in Abhängigkeit von seinem Volumengewicht. Frachttransportanfragen, deren Wertepaarpunkte aus ihrer Rate pro abrechenbaren Gewicht und ihrem skaliertem Volumengewicht auf oder über dieser Entscheidungskurve liegen, sind stets anzunehmen. Mit dem in Fig. 9 und 10 gezeigten Diagramm gelingt es auf einfache Weise, während der laufenden Buchungsperiode zu entscheiden, welche Frachtbuchungsanfragen stets anzunehmen sind (soweit die maximale Volumen- und Gewichtskapazität eingehalten werden kann) und welche stets abzulehnen sind. Die Frachtbuchungsanfragen, die gemäß dieser Regel stets anzunehmen sind, sind als vorteilhaft zu betrachten, da ihre Rate pro abrechenbarem Gewicht über dem Bid-Preis pro abrechenbarem Gewicht (der die voraussichtlichen Verdrängungskosten darstellt) liegt. Der Unterschied zwischen Fig. 9 und Fig. 10 ist, dass in Fig. 9 zu Demonstrationszwecken der Bid-Preis Gewicht variiert wurde, während in Fig. 10 der Bid-Preis Volumen variiert wurde. Selbstverständlich ist den Abszissen der Fig. 9 und 10, die das Volumengewicht zeigen, die Skala des skalierten Volumengewichts unterlegt, entsprechend den Zeilen a) und b) der Fig. 2. Insoweit sich in Fig. 9 der Kapazitätszugangspreis aus dem Kapazitätszugangspreis Gewicht und dem Kapazitätszugangspreis Volumen zusammensetzt, ist die Funktion für verschiedene Werte des Kapazitätszugangspreises Gewicht abgetragen. Auf diese Weise erhält man einen Überblick möglicher Funktionsverläufe in Abhängigkeit des Parameters des Kapazitätszugangspreises Gewicht. Insoweit sich in Fig. 10 der Kapazitätszugangspreis aus dem Kapazitätszugangspreis Gewicht und dem Kapazitätszugangspreis Volumen zusammensetzt, ist die Funktion für verschiedene Werte des Kapazitätszugangspreises Volumen abgetragen. Auf diese Weise erhält man einen Überblick möglicher Funktionsverläufe in Abhängigkeit des Parameters des Kapazitätszugangspreises Volumen.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

**Patentansprüche**

1.  Verfahren zur Optimierung der Auslastung und/oder der Maximierung des Erlöses eines Frachtraumes für einen Frachttransport, **dadurch gekennzeichnet, dass**

    - man für einen Frachttransport eingehende Transportnachfragen für Frachteinheiten n, insbesondere für jede Transportnachfrage, in Bezug auf ihr Volumen $V_n$, vorzugsweise in der Einheit $m^3$, und ihr Gewicht $W_n$, vorzugsweise in der Einheit t, und gegebenenfalls ihre Rate $r_n$ als Preis, vorzugsweise in einer offiziell anerkannten Währungseinheit, pro abrechenbarer Gewichtseinheit cw, vorzugsweise in abrechenbaren kg, erfasst,
    - die Volumengewichte $d_n$ der Frachteinheiten n, vorzugsweise in $m^3/t$, bestimmt, wobei,

        - falls das Gewicht $W_n$ der n-ten Frachteinheit > 0 und das Volumen $V_n$ der n-ten Frachteinheit $\geq 0$, dann das Volumengewicht $d_n = (V_n/W_n)$ ist,
        - falls das Gewicht $W_n$ der n-ten Frachteinheit = 0 und das Volumen $V_n$ der n-ten Frachteinheit > 0, dann das Volumengewicht $d_n = \infty$ ist, und
        - falls das Gewicht $W_n$ der n-ten Frachteinheit = 0 und das Volumen $V_n$ der n-ten Frachteinheit = 0, dann das Volumengewicht $d_n$ unbestimmt ist,

    - ausgehend von dem ermittelten Volumengewicht $d_n$ das skalierte Volumengewicht $sd_n$ bestimmt, wobei,

        - falls $d_n = 0$, dann $sd_n = 0$ ist,
        - falls $0 < d_n \leq ds$, dann $sd_n = d_n/2ds$ ist,
        - falls $ds < d_n < \infty$, dann $sd_n = 1 - ds/2d_n$ ist, und
        - falls $d_n = \infty$, dann $sd_n = 1$ ist,

    wobei ds ein gegebenes Standard-Volumengewicht, vorzugsweise in $m^3/t$, ist, das insbesondere dem Standard-Volumengewicht $ds_{IATA}$ der IATA entspricht;
    - ermittelt, ob das skalierte Volumengewicht $sd_n$ der Transportnachfrage für die n-te Frachteinheit ein extremes skaliertes Volumengewicht $sd_n$ besitzt, das in einem Bereich von $0 \leq sd_n < 0,5$ oder von $0,5 < sd_n \leq 1$, vorzugsweise in einem Bereich von $0 \leq sd_n \leq 0,4$ oder von $0,6 \leq sd_n \leq 1$ und besonders bevorzugt in einem Bereich von $0 \leq sd_n \leq 0,2$ oder von $0,8 \leq sd_n \leq 1$ liegt, und
    - die Transportnachfrage bestätigt, falls diese ein extremes skaliertes Volumengewicht $sd_n$ aufweist, sofern die maximale Kapazität an Frachtvolumen $V_{max}$ und die maximale Kapazität an Frachtgewicht $W_{max}$ mit der Annahme der n-ten Transportnachfrage nicht überschritten werden.

2.  Verfahren nach Anspruch 1, **dadurch gekennzeichnet, dass**

    - man für einen Frachttransport eingehende Transportnachfragen für Frachteinheiten n, insbesondere für jede Transportnachfrage, in Bezug auf ihr Volumen $V_n$, vorzugsweise in der Einheit $m^3$, und ihr Gewicht $W_n$, vorzugsweise in der Einheit t, und gegebenenfalls ihre Rate $r_n$ als Preis, vorzugsweise in einer offiziell anerkannten Währungseinheit, pro abrechenbarer Gewichtseinheit, vorzugsweise in abrechenbaren kg, erfasst,
- die Volumengewichte $d_n$ der Frachteinheiten n bestimmt, wobei,

  - falls das Gewicht $W_n$ der n-ten Frachteinheit > 0 und das Volumen $V_n$ der n-ten Frachteinheit $\geq$ 0, dann das Volumengewicht $d_n = (V_n/W_n)$ ist,
  - falls das Gewicht $W_n$ der n-ten Frachteinheit = 0 und das Volumen $V_n$ der n-ten Frachteinheit > 0, dann das Volumengewicht $d_n = \infty$ ist, und
  - falls das Gewicht $W_n$ der n-ten Frachteinheit = 0 und das Volumen $V_n$ der n-ten Frachteinheit = 0, dann das Volumengewicht $d_n$ unbestimmt ist,

- ausgehend von dem ermittelten Volumengewicht $d_n$ das skalierte Volumengewicht $sd_n$ bestimmt, wobei,

  - falls $d_n$ = 0, dann $sd_n$ = 0 ist,
  - falls 0 < $d_n$ $\leq$ ds, dann $sd_n = d_n/2ds$ ist,
  - falls ds < $d_n$ < $\infty$, dann $sd_n = 1 - ds/2d_n$ ist, und
  - falls $d_n = \infty$, dann $sd_n$ = 1 ist,

  wobei ds ein gegebenes Standard-Volumengewicht ist, das insbesondere dem Standard-Volumengewicht $ds_{IATA}$ der IATA entspricht;

- die noch zur Verfügung stehende Kapazität an Volumen $V_{Rest}$ unter Berücksichtigung der maximalen Kapazität an Frachtvolumen $V_{max}$ und die noch zur Verfügung stehende Kapazität an Gewicht $W_{Rest}$ unter Berücksichtigung der maximalen Kapazität an Frachtgewicht $W_{max}$ ermittelt,
- das Volumengewicht $d_k$ der noch verfügbaren Kapazität berechnet über $d_k = V_{Rest}/W_{Rest}$, mit $V_{Rest}$ vorzugsweise in der Einheit m$^3$ und $W_{Rest}$ vorzugsweise in der Einheit t, und

  - falls $d_k$ = 0, dann $sd_k$ = 0 ist,
  - falls 0 < $d_k$ $\leq$ ds, dann $sd_k = d_k/2ds$ ist,
  - falls ds < $d_k$ < $\infty$, dann $sd_k = 1 - ds/2d_k$ ist, und
  - falls $d_k = \infty$, dann $sd_k$ = 1 ist, wobei $sd_k$ das skalierte Volumengewicht der noch verfügbaren Kapazität $d_k$ darstellt und wobei

    - falls das Gewicht $W_{Rest}$ > 0 und das Volumen $V_{Rest}$ $\geq$ 0, dann das Volumengewicht $d_k = (V_{Rest}/W_{Rest})$ ist,
    - falls das Gewicht $W_{Rest}$ = 0 und das Volumen $V_{Rest}$ > 0, dann das Volumengewicht $d_k = \infty$ ist, und
    - falls das Gewicht $W_{Rest}$ = 0 und das Volumen $V_{Rest}$ = 0, dann das Volumengewicht $d_k$ unbestimmt ist,

- ermittelt, ob das skalierte Volumengewicht $sd_k$ der zur Verfügung stehenden Kapazität kleiner, größer oder gleich 0,5 ist, und

  - falls $sd_k$ < 0,5, die Transportnachfrage bestätigt, wenn $sd_n$ < $sd_k$ oder wenn 0 $\leq sd_n \leq$ 0,5, insbesondere 0 $\leq sd_n \leq$ 0,4 und besonders bevorzugt 0 $\leq sd_n \leq$ 0,2,
  - falls $sd_k$ > 0,5, die Transportnachfrage bestätigt, wenn $sd_n$ > $sd_k$ oder wenn 0,5 $\leq sd_n \leq$ 1, insbesondere 0,6 $\leq sd_n \leq$ 1 und besonders bevorzugt 0,8 $\leq sd_n \leq$ 1 und
  - falls $sd_k$ = 0,5, die Transportnachfrage bestätigt, wenn 0 $\leq sd_n$ < 0,5 oder 0,5 < $sd_n \leq$ 1, vorzugsweise 0 $\leq sd_n \leq$ 0,4 oder 0,6 $\leq sd_n \leq$ 1 und besonders bevorzugt 0 $\leq sd_n \leq$ 0,2 oder 0,8 $\leq sd_n \leq$ 1,

  sofern die maximale Kapazität an Frachtvolumen $V_{max}$ und die maximale Kapazität an Frachtgewicht $W_{max}$ mit der Annahme der n-ten Frachtbuchungsnachfrage nicht überschritten werden.

3. Verfahren zur Optimierung der Auslastung und/oder zur Maximierung des Erlöses eines Frachtraumes eines Frachttransportes, insbesondere nach einem der vorangehenden Ansprüche, **dadurch gekennzeichnet, dass**

   - man für einen Frachttransport eingehende Transportnachfragen für Frachteinheiten n in Bezug auf ihr Volumen $V_n$, insbesondere in der Einheit m$^3$, ihr Gewicht $W_n$, insbesondere in der Einheit t, ihr abrechenbares Gewicht cw, vorzugsweise in abrechenbaren kg, und ihre Rate $r_n$ pro abrechenbares Gewicht cw der Frachteinheit n erfasst bzw. abbildet,
   - das Volumengewicht $d_n$ der Frachteinheiten n bestimmt, wobei,

- falls das Gewicht $W_n$ der n-ten Frachteinheit $\geq 0$ und das Volumen $V_n$ der n-ten Frachteinheit $\geq 0$, dann das Volumengewicht $d_n = (V_n/W_n)$ ist,
- falls das Gewicht $W_n$ der n-ten Frachteinheit = 0 und das Volumen $V_n$ > 0, dann das Volumengewicht $d_n = \infty$ ist, und
- falls das Gewicht $W_n$ der n-ten Frachteinheit = 0 und das Volumen $V_n$ = 0, dann das Volumengewicht $d_n$ unbestimmt ist,

- ausgehend von dem ermittelten Volumengewicht $d_n$ das skalierte Volumengewicht $sd_n$ bestimmt, wobei,

- falls $d_n$ = 0, dann $sd_n$ = 0 ist,
- falls $0 < d_n \leq ds$, dann $sd_n = d_n/2ds$ ist,
- falls $ds < d_n < \infty$, dann $sd_n = 1 - ds/2d_n$ ist, und
- falls $d_n = \infty$, dann $sd_n$ = 1 ist,

wobei ds ein Standard-Volumengewicht ist, das insbesondere dem Standard-Volumengewicht $ds_{-IATA}$ der IATA entspricht;
- auf der Grundlage der ermittelten Menge an skalierten Volumengewichten $sd_n$ mindestens zwei, insbesondere mindestens vier, Volumengewichtsklassen $K_x$ mit unteren und oberen Klassengrenzen dg bildet, wobei keine Klasse $K_x$ gebildet wird, die eine untere Grenze mit einem sd-Wert < 0,5 und eine obere Grenze mit einem sd-Wert > 0,5 aufweist,
- die Volumengewichte der Klassengrenzen dg in der Weise berechnet, dass,
- falls sdg = 0, dann dg = 0 ist,
- falls $0 < sd_g \leq 0,5$, dann dg = 2 sdg $\times$ ds ist,
- falls 0,5 < sdg < 1, dann dg = ds/(2 - 2sdg) ist, und
- falls sdg = 1, dann dg = $\infty$ ist, und
- die Frachtguteinheiten n den ermittelten Volumengewichtsklassen $K_x(d_n)$ zuordnet.

4. Verfahren zur Optimierung der Auslastung und/oder zur Maximierung des Erlöses eines Frachtraumes eines Frachttransportes, insbesondere nach einem der vorangehenden Ansprüche, **dadurch gekennzeichnet, dass**

- man für einen Frachttransport prognostizierte Transportmengen in Bezug auf ihr Volumen $V_m$, insbesondere in der Mengeneinheit $m^3$, ihr Gewicht $W_m$, insbesondere in der Mengeneinheit t, und ihren Nachfragepreis $r_m$ für das abrechenbare Gewicht cw, vorzugsweise in abrechenbaren kg, der Frachtmenge m erfasst,
- das Volumengewicht $d_m$ der Frachtmengen m bestimmt, wobei,

- falls das Gewicht $W_m$ der Frachtmenge m $\geq 0$ und das Volumen $V_m$ der Frachtmenge m $\geq 0$, dann das Volumengewicht $d_m = (V_m/W_m)$ ist,
- falls das Gewicht $W_m$ der Frachtmenge m = 0 und das Volumen $V_m$ > 0, dann das Volumengewicht $d_m = \infty$ ist, und
- falls das Gewicht $W_m$ der Frachtmenge m = 0 und das Volumen $V_m$ = 0, dann das Volumengewicht $d_m$ unbestimmt ist,

- ausgehend von dem ermittelten Volumengewicht $d_m$ das skalierte Volumengewicht $sd_m$ bestimmt, wobei,

- falls $d_m$ = 0, dann $sd_m$ = 0 ist,
- falls $0 < d_m \leq ds$, dann $sd_m = d_m/2ds$ ist,
- falls $ds < d_m < \infty$, dann $sd_m = 1 - ds/2d_m$ ist, und
- falls $d_m = \infty$, dann $sd_m$ = 1 ist,

wobei ds ein Standard-Volumengewicht ist, das insbesondere dem Standard-Volumengewicht $ds_{IATA}$ der IATA entspricht;
- auf der Grundlage der prognostizierten Menge mit den skalierten Volumengewichten $sd_m$ mindestens zwei, insbesondere mindestens vier, Volumengewichtsklassen $K_z$ mit unteren und oberen Klassengrenzen $d_f$ bildet, wobei keine Klasse $K_z$ gebildet wird, die eine untere Grenze mit einem sd-Wert < 0,5 und eine obere Grenze mit einem sd-Wert > 0,5 aufweist,
- die Volumengewichte $d_f$ der Klassengrenzen in der Weise berechnet, dass,

- falls $sd_f$ = 0, dann $d_f$ = 0 ist,

- falls $0 < sd_f \leq 0{,}5$, dann $d_f = 2\, sd_f \times ds$ ist,
- falls $0{,}5 < sd_f < 1$, dann $d_f = ds/(2 - 2sd_f)$ ist, und
- falls $sd_f = 1$, dann $d_f = \infty$ ist, und

- die Frachtmengen m den ermittelten Volumengewichtsklassen $K_z(d_m)$ zuordnet.

5. Verfahren zur Optimierung der Auslastung und/oder zur Maximierung des Erlöses eines Frachtraumes eines Frachttransportes, insbesondere nach einem der vorangehenden Ansprüche, **dadurch gekennzeichnet, dass**

- man eine Menge von eingehenden Frachtguttransportnachfragen über die jeweiligen Nachfragevolumina $V_n$, Nachfragegewichte $W_n$ und erzielbaren Raten $r_n$, ausgedrückt als Preis des abrechenbaren Gewichts cw, vorzugsweise in abrechenbaren kg, sowie das Volumengewicht $d_n$ und das skalierte Volumengewicht $sd_n$ definiert; wobei
- das Volumengewicht $d_n$ einer Frachteinheit n wie folgt bestimmt wird:

  - falls das Gewicht $W_n$ der n-ten Frachteinheit > 0 und das Volumen $V_n$ der n-ten Frachteinheit $\geq 0$, dann das Volumengewicht $d_n = (V_n/W_n)$ ist,
  - falls das Gewicht $W_n$ der n-ten Frachteinheit = 0 und das Volumen $V_n$ der n-ten Frachteinheit > 0, dann das Volumengewicht $d_n = \infty$ ist, und
  - falls das Gewicht $W_n$ der n-ten Frachteinheit = 0 und das Volumen $V_n$ der n-ten Frachteinheit = 0, dann das Volumengewicht $d_n$ unbestimmt ist, und man

- ausgehend von dem ermittelten Volumengewicht $d_n$ das skalierte Volumengewicht $sd_n$ bestimmt, wobei,

  - falls $d_n = 0$, dann $sd_n = 0$ ist,
  - falls $0 < d_n \leq ds$, dann $sd_n = d_n/2ds$ ist,
  - falls $ds < d_n < \infty$, dann $sd_n = 1 - ds/2d_n$ ist, und
  - falls $d_n = \infty$, dann $sd_n = 1$ ist,

- wobei ds ein gegebenes Standard-Volumengewicht ist, das insbesondere dem Standard-Volumengewicht $ds_{IATA}$ der IATA entspricht;
- einen zweidimensionalen Bereich, umfassend zwei sich schneidende Koordinatenachsen, definiert, dessen erste Dimension unmittelbar oder mittelbar den in Frachtgutbuchungsnachfragen nachfragbaren Bereich des skalierten Volumengewichts $sd_n$ und dessen zweite Dimension die Nachfragerate $r_n$, definiert als Preis pro abrechenbarem Gewichts cw, wiedergibt, wobei der Betrag des abrechenbaren bzw. Abrechnungsgewichts cw, vorzugsweise in abrechenbaren kg, wie folgt definiert ist:

  - falls das Gewicht $W_n = 0$ und das Volumen $V_n = 0$, dann ist cw = 0,
  - falls $0 \leq d_n \leq ds$, dann ist $cw = W_n \times 1000$ und
  - falls $ds < d_n \leq \infty$, dann ist $cw = V_n \times 1000/ds$,

  den Wertepaaren, gebildet aus dem skalierten Volumengewicht $sd_n$ einer angefragten n-ten Frachteinheit und deren Nachfragerate $r_n$, in dem zweidimensionalen Bereich jeweils einen korrespondierenden Wertepaarpunkt zuweist in dem durch die Koordinatenachsen gebildeten Koordinatensystem und die Abstände zwischen Wertepaarpunkten, deren zugehöriges skaliertes Volumengewicht $sd_n$ in dem Bereich $0 < sd_n \leq 0{,}5$ liegt, sowie die Abstände zwischen Wertepaarpunkten, deren zugehöriges skaliertes Volumengewicht $sd_n$ in dem Bereich $0{,}5 < sd_n \leq 1$ liegt, jeweils ermittelt und Wertepaarpunkte innerhalb dieser Grenzen, insbesondere solche die einen geringen Abstand zueinander aufweisen, mittels Bildung von Clustern zusammenfasst und jeweils einem Unterbereich i (r/sd-Klasse) mit Bereichsgrenzen, innerhalb derer die Wertepaare eines Clusters vorliegen, zuordnet.

6. Verfahren zur Optimierung der Auslastung und/oder zur Maximierung des Erlöses eines Frachtraumes eines Frachttransportes, insbesondere nach einem der vorangehenden Ansprüche, **dadurch gekennzeichnet, dass**

- man für einen Frachttransport prognostizierte Transportmengen m in Bezug auf ihr Volumen $V_m$, insbesondere in der Mengeneinheit $m^3$, ihr Gewicht $W_m$, insbesondere in der Mengeneinheit t, und ihren Nachfragepreis $r_m$, ausgedrückt als Preis des abrechenbaren Gewichts cw, vorzugsweise in abrechenbaren kg, sowie ihr Volumengewicht $d_m$ und ihr skaliertes Volumengewicht $sd_m$ definiert,

- das Volumengewicht $d_m$ der Frachtmengen m bestimmt, wobei,

  - falls das Gewicht $W_m$ Frachteinheit m > 0 und das Volumen $V_m$ der Frachteinheit m ≥ 0, dann das Volumengewicht $d_m = (V_m/W_m)$ ist,
  - falls das Gewicht $W_m$ der Frachteinheit m = 0 und das Volumen $V_m$ der Frachteinheit m > 0, dann das Volumengewicht $d_m = \infty$ ist, und
  - falls das Gewicht $W_m$ der Frachteinheit m = 0 und das Volumen $V_m$ der Frachteinheit m = 0, dann das Volumengewicht $d_m$ unbestimmt ist, und man
- ausgehend von dem ermittelten Volumengewicht $d_m$ das skalierte Volumengewicht $sd_m$ bestimmt, wobei,

  - falls $d_m = 0$, dann $sd_m = 0$ ist,
  - falls $0 < d_m \leq ds$, dann $sd_m = d_m/2ds$ ist,
  - falls $ds < d_m < \infty$, dann $sd_m = 1 - ds/2d_m$ ist, und
  - falls $d_m = \infty$, dann $sd_m = 1$ ist,

  - wobei ds ein gegebenes Standard-Volumengewicht ist, das insbesondere dem Standard-Volumengewicht $ds_{IATA}$ der IATA entspricht;

- einen zweidimensionalen Bereich, umfassend zwei sich schneidende Koordinatenachsen, definiert, dessen erste Dimension unmittelbar oder mittelbar den in Frachtgutbuchungsnachfragen nachfragbaren Bereich des skalierten Volumengewichts sd und dessen zweite Dimension die Nachfragerate r, definiert als Preis des abrechenbaren Gewichts cw, wiedergibt, wobei das abrechenbare bzw. Abrechnungsgewicht cw, vorzugsweise in abrechenbaren kg, wie folgt definiert ist:

  - falls das Gewicht $W_m = 0$ und das Volumen $V_m = 0$, dann ist cw = 0,
  - falls $0 \leq d_m \leq ds$, dann ist cw = $W_m \times 1000$ und
  - falls $ds < d_m \leq \infty$, dann ist cw = $V_m \times 1000/ds$, und

- den Wertepaaren, gebildet aus dem skalierten Volumengewicht $sd_m$ einer prognostizierten Frachteinheit m und deren prognostizierter Nachfragerate $r_m$, in dem zweidimensionalen Bereich des durch die Koordinatenachsen gebildeten Koordinatensystems jeweils einen korrespondierenden Wertepaarpunkt zuweist und die Abstände zwischen Wertepaarpunkten, deren zugehöriges skaliertes Volumengewicht $sd_m$ in dem Bereich $0 < sd_m \leq 0,5$ liegt, sowie die Abstände zwischen Wertepaarpunkten, deren zugehöriges skaliertes Volumengewicht $sd_m$ in dem Bereich $0,5 < sd_n \leq 1$ liegt, jeweils ermittelt und Wertepaarpunkte innerhalb dieser Grenzen, insbesondere solche die einen geringen Abstand zueinander aufweisen, mittels Bildung von Clustern zusammenfasst und jeweils einem Unterbereich i (r/sd-Klasse) mit Bereichsgrenzen, innerhalb derer die Wertepaare eines Clusters vorliegen, zuordnet.

7. Verfahren nach einem der Ansprüche 5 oder 6, **dadurch gekennzeichnet, dass** für eine Frachteinheit n bzw. eine Frachtmenge m mit einem Gewicht $W_n$ bzw. $W_m$, jeweils gerechnet in t, und einem Volumen $V_n$ bzw. $V_m$, jeweils gerechnet in m$^3$, als abrechenbares Gewicht cw derjenige Wert, insbesondere in kg, angesetzt wird, der vom Betrag her der größere unter den nachfolgenden zwei Werten ist

   (1) $W_{n/m}$x 1000 und
   (2) $V_{n/m}$x 1000/ds ist,

   wobei ds ein Standard-Volumengewicht ist, das insbesondere dem Standard-Volumengewicht $ds_{IATA}$ der IATA entspricht.

8. Verfahren zur Optimierung der Auslastung und/oder der Maximierung des Erlöses eines Frachtraumes eines Frachttransportes, insbesondere nach einem der vorangehenden Ansprüche, **dadurch gekennzeichnet, dass**

   - man einen zweidimensionalen Bereich, umfassend zwei sich schneidende Koordinatenachsen, definiert, dessen erste Dimension unmittelbar oder mittelbar den in Frachtgutbuchungsnachfragen nachfragbaren Bereich des skalierten Volumengewichts sd und dessen zweite Dimension die Rate r, ausgedrückt als Preis des abrechenbaren Gewichts cw, wiedergibt;
   - benachbarte Unterbereiche i mit gemeinsamen Grenzabschnitten in dem zweidimensionalen Bereich bildet, die vorzugsweise eine durchgehende Fläche bilden, welche entlang zweier Seiten von den sich schneidenden Koordinatenachsen begrenzt wird, wobei die Unterbereiche i hinsichtlich ihrer Werte für das skalierte Volumengewicht sd in dem Bereich $0 < sd \leq 0{,}5$ oder in dem Bereich $0{,}5 < sd \leq 1$ liegen, und

- den Unterbereichen i jeweils einen erwarteten Gesamtwert $D_i$ an abrechenbarem Gewicht cw, vorzugsweise in abrechenbaren kg, zuweist, der sich aus der Summe der erwarteten Einzelfrachttransportnachfragen ergibt, deren zugehörige Wertepaare, gebildet aus der Rate r pro abrechenbarem Gewicht cw und dem skalierten Volumengewicht sd, einem Unterbereich zuordbar sind.

9. Verfahren zur Optimierung der Auslastung und/oder der Maximierung des Erlöses eines Frachtraumes eines Frachttransportes, insbesondere nach einem der vorangehenden Ansprüche, **dadurch gekennzeichnet, dass**

- man eine eingehende Transportnachfrage für eine Frachteinheit n annimmt, wenn die zu erwartende Rate $r_n$ größer ist als der mit der Akzeptanzentscheidung, insbesondere voraussichtlich, einhergehende entgangene Gewinn $bp_n$, d.h. der Bid-Preis, sofern die maximale Kapazität an Frachtvolumen $V_{max}$ bzw. die Restvolumenkapazität $V_{Rest}$ und die maximale Kapazität an Frachtgewicht $W_{max}$ bzw. die Restgewichtskapazität $W_{Rest}$ mit der Annahme der Frachtbuchungsnachfrage nicht überschritten werden, und ansonsten ablehnt, wobei der entgangene Gewinn $bp_n$ ermittelt bzw. abgeschätzt wird über die Gleichung

$$bp_n = w_n \times bpw + v_n \times pbv, \text{ wobei}$$

$bp_n$ für den Bidpreis einer Einheit eines abrechenbaren Gewichts cw, insbesondere eines abrechenbaren kg, der angefragten Frachteinheit bzw. -menge, bpw für den Preis einer Einheit eines abrechenbaren Gewichts cw, insbesondere eines abrechenbaren kg, die bzw. das vorzugsweise lediglich aus Gewicht besteht, d.h. ein Volumengewicht von $d = 0$ aufweist, bpv für den Preis einer Einheit eines abrechenbaren Gewichts cw, insbesondere eines abrechenbaren kg, die bzw. das vorzugsweise lediglich aus Volumen besteht, d.h. ein Volumengewicht von $d = \infty$ aufweist, $w_n$ für den spezifischen Gewichtsverbrauch und $v_n$ für den spezifischen Volumenverbrauch stehen, wobei der spezifische Gewichts- bzw. der spezifische Volumenverbrauch wie folgt definiert sind:

- falls $0 \leq d_n \leq ds$, dann ist $w_n = 1$ und $v_n = d_n/ds$,
- falls $ds < d_n < \infty$, dann ist $w_n = ds/d_n$ und $v_n = 1$,
- falls $d_n = \infty$, dann ist $w_n = 0$ und $v_n = 1$ und
  wobei $d_n$ das Volumengewicht einer Frachteinheit- bzw. -menge und ds das Standard-Volumengewicht wiedergeben, und wobei die bpw und bpv ermittelt werden durch Lösen des folgenden Problems, insbesondere mittels Linearen Programmierens:
  Minimiere

$$R_F = W_{Rest} \times bpw + V_{Rest} \times bpv + \sum_i D_i \times p_i$$

bezüglich
$w_i \times bpw + v_i \times bpv + p_i \geq r_i$, für alle (i)
$bpv, bpw, p_i \geq 0$, für alle (i)
wobei $R_F$ den Erlös, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von $d = 0$ aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von $d = \infty$ aufweist, $D_i$ die prognostizierte Nachfrage der Prognosedomäne bzw. des Unterbereichs (r/sd-Klasse) i, ausgedrückt in abrechenbarem Gewicht cw, insbesondere abrechenbaren kg, und $p_i$ die Profitabilität der Prognosedomäne i, ausgedrückt in Währungseinheit pro abrechenbarem Gewicht cw, insbesondere abrechenbaren kg, und $r_i$, ausgedrückt als Preis, vorzugsweise in einer offiziell anerkannten Währungseinheit, pro abrechenbaren Gewicht cw, insbesondere abrechenbaren kg, die Rate der Prognosedomäne i spezifizieren, und wobei die Gewichts- und Volumenkoeffizienten $w_i$ und $v_i$ wie folgt definiert sind:

- falls $0 \leq d_i \leq ds$, dann ist $w_i = 1$ und $v_i = d_i/ds$,
- falls $ds < d_i < \infty$, dann ist $w_i = ds/d$; und $v_i = 1$,
- falls $d_i = \infty$, dann ist $w_i = 0$ und $v_i = 1$ und wobei

$d_i$ einen Volumengewichtswert aus der Domäne i, insbesondere einen Mittelwert oder gewichteten Mittelwert, darstellt.

10. Verfahren zur Optimierung der Auslastung und/oder der Maximierung des Erlöses eines Frachtraumes eines Frachttransportes, insbesondere nach Anspruch 9, **dadurch gekennzeichnet, dass**
der Bid-Preis $bp_n$ einer möglichen angefragten Frachtbuchung n wie folgt angewandt wird:

- falls $r_n \geq bp_n$ ist, dann ist die Buchungsanfrage n anzunehmen, sofern die maximale Kapazität an Frachtvolumen $V_{max}$ bzw. die Restvolumenkapazität $V_{Rest}$ und die maximale Kapazität an Frachtgewicht $W_{max}$ bzw. die Restgewichtskapazität $W_{Rest}$ mit der Annahme der n-ten Frachtbuchungsnachfrage nicht überschritten werden, und
- falls $r_n < bp_n$ ist, dann ist die Buchungsanfrage n abzulehnen,
wobei der Bid-Preis $bp_n$ sich wie folgt ergibt: $w_n \times bpw + v_n \times bpv$, und
wobei $r_n$ die Rate, ausgedrückt als Preis, vorzugsweise in einer offiziell anerkannten Währungseinheit, pro Einheit eines abrechenbaren Gewichts cw, insbesondere eines abrechenbaren kg, $w_n$ den spezifischen Gewichtsverbrauch bzw. den Gewichtskoeffizienten einer Buchungsanfrage, $v_n$ den spezifischen Volumenverbrauch bzw. den Volumenkoeffizienten einer Buchungsanfrage, bpw den Preis einer Einheit eines abrechenbaren Gewichts cw, insbesondere eines abrechenbaren kg, das lediglich aus Gewicht besteht, und bpv den Preis einer Einheit eines abrechenbaren Gewichts cw, insbesondere eines abrechenbaren kg, das lediglich aus Volumen besteht, spezifizieren und wobei sich die Gewichts- und Volumenkoeffizienten wie folgt bestimmen:

- falls $0 \leq d_n \leq ds$, dann ist $w_n = 1$ und $v_n = d_n/ds$,
- falls $ds < d_n < \infty$, dann ist $w_n = ds/d_n$ und $v_n = 1$ und
- falls $d_n = \infty$, dann ist $w_n = 0$ und $v_n = 1$.

11. Verfahren nach Anspruch 9 oder 10, **dadurch gekennzeichnet, dass**
der Bid-Preis bp als Funktion des Volumengewichts wie folgt dargestellt wird:

- falls $0 \leq d \leq ds$, dann ist $bp = bpw + (d/ds \times bpv)$,
- falls $ds < d < \infty$, dann ist $bp = ds \times bpw/d + bpv$,
- falls $d = \infty$, dann ist $bp = bpv$,

wobei bp den Bid-Preis einer Einheit eines abrechenbaren Gewichts cw, insbesondere eines abrechenbaren kg, der angefragten Frachteinheit, bpw den Preis einer Einheit eines abrechenbaren Gewichts cw, ausgedrückt in Einheiten einer Währung pro abrechenbarem Gewicht, insbesondere eines abrechenbaren kg, das lediglich aus Gewicht besteht, und bpv den Preis einer Einheit eines abrechenbaren Gewichts cw, ausgedrückt in Einheiten einer Währung pro abrechenbarem Gewicht, insbesondere eines abrechenbaren kg, das lediglich aus Volumen besteht, d das Volumengewicht und ds das Standard-Volumengewicht spezifizieren.

12. Verfahren nach Anspruch 9 oder 10, **dadurch gekennzeichnet, dass**
der Bid-Preis bp als Funktion des skalierten Volumengewichts wie folgt dargestellt wird:

- falls $0 \leq sd \leq 0{,}5$, dann ist $bp = bpw + 2\,sd \times bpv$,
- falls $0{,}5 < sd < 1$, dann ist $bp = 2(1 - sd)bpw + bpv$,
- falls $sd = 1$, dann ist $bp = bpv$,

wobei bp den Bid-Preis, ausgedrückt in Einheiten einer Währung pro abrechenbarem Gewicht, bpw den Preis einer Einheit eines abrechenbaren Gewichts cw, ausgedrückt in Einheiten einer Währung pro abrechenbarem Gewicht, das lediglich aus Gewicht besteht, und bpv den Preis einer Einheit eines abrechenbaren Gewichts cw, ausgedrückt in Einheiten einer Währung pro abrechenbarem Gewicht, das lediglich aus Volumen besteht, sd das skalierte Volumengewicht und ds das Standard-Volumengewicht spezifizieren.

13. Verfahren nach einem der Ansprüche 9 bis 12, **dadurch gekennzeichnet, dass** der Ertrag $R_F$ eines Transportes oder Frachtfluges mit Hilfe der Linearen Optimierung wie folgt maximiert wird:

Maximiere

$$R_F = \sum_i r_i \, x_i$$

bezüglich

$$\sum_i w_i \, x_i \leq W_{Rest}$$

$$\sum_i v_i \, x_i \leq V_{Rest}$$

$$i$$

$x_i \leq D_i$, für alle (i) und
$x_i \geq 0$, für alle (i),

wobei der Index i die Prognosedomäne bzw. den Unterbereich (r/sd-Klasse), $x_i$ die zu akzeptierende Nachfrage der Prognosedomäne i, ausgedrückt in abrechenbarem Gewicht cw, $D_i$ die prognostizierte Nachfrage der Prognosedomäne i, ausgedrückt in abrechenbarem Gewicht cw, $w_i$ den Gewichtskoeffizienten der Prognosedomäne i, $v_i$ den Volumenkoeffizienten der Prognosedomäne i, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, und $r_i$ die Rate der Prognosedomäne i, insbesondere in Form eines Mittelwerts oder eines gewichteten Mittelwerts, ausgedrückt als Preis, vorzugsweise in einer offiziell anerkannten Währungseinheit, pro abrechenbaren Gewicht cw, insbesondere abrechenbaren kg, spezifizieren, und wobei

die Gewichts- und Volumenkoeffizienten $w_i$ und $v$; wie folgt definiert sind:

-   falls $0 \leq d_i \leq ds$, dann ist $w_i = 1$ und $v_i = d_i/ds$,
-   falls ds < d; < ∞, dann ist w; = ds/$d_i$ und $v_i = 1$,
-   falls $d_i = ∞$, dann ist w; = 0 und $v_i = 1$ und wobei

$d_i$ einen Volumengewichtswert aus der Domäne i, insbesondere einen Mittelwert oder gewichteten Mittelwert, darstellt.

**14.** Verfahren zur Optimierung der Auslastung und/oder der Maximierung des Erlöses eines Frachtraumes eines Frachttransportes, insbesondere nach einem der Ansprüche 9 bis 12, **dadurch gekennzeichnet, dass**
der Ertrag $R_F$ und/oder die voraussichtlich ungenutzt bleibende Kapazität, insbesondere die voraussichtlich ungenutzt bleibende Gewichts- und/oder Volumenkapazität, eines Legs für einen Transport oder Frachtflug mit Hilfe der Linearen Optimierung wie folgt bestimmt wird bzw. werden:

Maximiere

$$R_F = \sum_i r_i \, x_i$$

$$i$$

bezüglich

$$\sum_i w_i\, x_i + sw = W_{Rest,}$$

$$\sum_i v_i\, x_i + sv = V_{Rest,}$$

x; + $s_i$ = $D_i$, für alle (i) und

$s_i$, sv, sw, $x_i \geq 0$, für alle (i),

wobei $R_F$ den Erlös über einen Leg eines Transportes, insbesondere Flugs, der Index i die Prognosedomäne bzw. den Unterbereich (r/sd-Klasse), x; die zu akzeptierende Nachfrage der Prognosedomäne i, ausgedrückt in abrechenbarem Gewicht cw, $D_i$ die prognostizierte Nachfrage der Prognosedomäne i, ausgedrückt in abrechenbarem Gewicht cw, $w_i$ den Gewichtskoeffizienten der Prognosedomäne i, $v_i$ den Volumenkoeffizi-enten der Prognosedomäne i, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, sowie s;, sv und sw die Schlupfvariablen für die Nachfrage der Prognosedomäne i, des Volumens, insbesondere in Form eines abrechenbaren Gewichts, insbesondere eines abrechenbaren kg, die bzw. das vorzugsweise lediglich aus Volumen besteht, d.h. ein Volumengewicht von d = ∞ aufweist, bzw. des Gewichts, insbesondere in Form eines abrechenbaren Gewichts cw, insbesondere eines abrechenbaren kg, die bzw. das vorzugsweise lediglich aus Gewicht besteht, d.h. ein Volumengewicht von d = 0 aufweist, und $r_i$ die Rate der Prognosedomäne i, insbesondere in Form eines Mittelwerts oder eines gewichteten Mittelwerts, ausgedrückt als Preis, vorzugsweise in einer offiziell anerkannten Währungseinheit, pro abrechenbaren Gewicht cw, insbesondere eines abrechenbaren kg, spezifizieren, und wobei

die Gewichts- und Volumenkoeffizienten $w_i$ und $v_i$ wie folgt definiert sind:

- falls $0 \leq d_i \leq ds$, dann ist w; = 1 und v; = $d_i$/ds,
- falls ds < $d_i$ < ∞, dann ist $w_i$ = ds/$d_i$ und $v_i$ = 1,
- falls $d_i$ = ∞, dann ist $w_i$ = 0 und $v_i$ = 1 und wobei

$d_i$ einen Volumengewichtswert aus der Domäne i, insbesondere einen Mittelwert oder gewichteten Mittelwert, darstellt.

**15.** Verfahren nach Anspruch 14, **dadurch gekennzeichnet, dass**

die erwartete Nachfrage nach Transportleistungen einer bestimmten Raten/Volumengewichtsklasse i durch D; wiedergegeben wird und dass die der Raten/Volumengewichtsklasse i entsprechende Rate $r_i$ und das entspre-chende Volumengewicht $d_i$ betragen.

**16.** Verfahren zur Optimierung der Auslastung und/oder der Maximierung des Erlöses eines Frachtraumes eines Frachttransportes, insbesondere nach einem der vorangehenden Ansprüche, **dadurch gekennzeichnet, dass**

der Ertrag $R_F$ für ein Leg eines Transportes oder Frachtfluges und/oder der Bid-Preis bpw für eine Einheit eines abrechenbaren Gewichts cw, das lediglich aus Gewicht besteht, und/oder der Bid-Preis bpv für eine Einheit eines abrechenbaren Gewichts cw, das lediglich aus Volumen besteht, mit Hilfe der Linearen Optimierung wie folgt be-stimmt wird:

Minimiere

$$R_F = W_{Rest} \times bpw + V_{Rest} \times bpv + \sum_i D_i \times p_i$$

bezüglich

$w_i \times bpw + v_i \times bpv + p_i \geq r_i$, für alle (i)

bpv, bpw, $p_i \geq 0$, für alle (i)

wobei $R_F$ den Erlös, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, bpw den Preis einer Einheit eines abrechenbaren Gewichts cw, das lediglich aus Gewicht besteht, und bpv den Preis einer Einheit eines abrechenbaren Gewichts cw, das lediglich aus Volumen besteht, D; die prognostizierte Nachfrage der Prognosedomäne bzw. des Unterbereichs (r/sd-Klasse) i, ausgedrückt

in abrechenbarem Gewicht cw, insbesondere abrechenbaren kg, w; den Gewichtskoeffizienten für die Prognosedomäne i, $v_i$ den Volumenkoeffizienten für die Prognosedomäne i sowie $p_i$ die Profitabilität der Prognosedomäne i, ausgedrückt in Währungseinheit pro abrechenbarem Gewicht cw, insbesondere abrechenbaren kg, und $r_i$, ausgedrückt als Preis, vorzugsweise in einer offiziell anerkannten Währungseinheit, pro abrechenbaren Gewicht cw, insbesondere abrechenbaren kg, die Rate der Prognosedomäne i spezifizieren, wobei

die Gewichts- und Volumenkoeffizienten $W_i$ und $v_i$ wie folgt definiert sind:

- falls $0 \leq d_i \leq ds$, dann ist $w_i = 1$ und $v_i = d_i/ds$,
- falls $ds < d_i < \infty$, dann ist $w_i = ds/d_i$ und $v_i = 1$,
- falls $d_i = \infty$, dann ist $w_i = 0$ und $v_i = 1$ und wobei

$d_i$ einen Volumengewichtswert aus der Domäne i, insbesondere einen Mittelwert oder gewichteten Mittelwert, darstellt.

**17.** Verfahren zur Optimierung der Auslastung und/oder der Maximierung des Erlöses eines Frachtraumes eines Frachttransportes, insbesondere nach einem der Ansprüche 9 bis 16, **dadurch gekennzeichnet, dass** der Ertrag $R_F$ und/oder die voraussichtlich ungenutzt bleibende Kapazität, insbesondere die voraussichtlich ungenutzt bleibende Gewichts- und/oder Volumenkapazität, für einen Transport oder Frachtflug mit mindestens einem Segment durch Lösung des nachfolgenden Problems mit Hilfe der Linearen Optimierung bestimmt wird bzw. werden:

Maximiere

$$R_F = \sum_i \sum_j r_{ij}\, x_{ij}$$

bezüglich

$$\sum_i \sum_j a_{kj}\, w_{ij}\, x_{ij} + sw_k = W_{k\text{-}Rest}$$

für alle k

$$\sum_i \sum_j a_{kj}\, v_{ij}\, x_{ij} + sv_k = V_{k\text{-}Rest},$$

für alle k

$x_{ij} + s_{ij} = D_{ij}$, für alle (i, j) und

$s_{ij}, sv_k, sw_k, x_{ij} \geq 0$, für alle (i, j) und k,

wobei $R_F$ den Erlös über einen Flug, der Index k das Leg eines Transportes, insbesondere Fluges, j das Segment eines Transportes, i die Prognosedomäne bzw. den Unterbereich (r/d-Klasse) eines Segments, $x_{ij}$ die zu akzeptierende Nachfrage für die Prognosedomäne i des Segments j, ausgedrückt in abrechenbarem Gewicht cw, insbesondere abrechenbaren kg, $D_{ij}$ die prognostizierte Nachfrage der Prognosedomäne i des Segments j, ausgedrückt in abrechenbarem Gewicht cw, insbesondere abrechenbaren kg, $a_{kj}$ den Indexkoeffizienten des Legs k auf dem Segment j darstellt, wobei $a_{kj} = 0$, wenn das Leg k nicht Bestandteil des Segments j ist und wobei $a_{kj} = 1$, wenn das Leg k Bestandteil des Segments j ist, $w_{ij}$ den Gewichtskoeffizienten für die Prognosedomäne i des Segments j, $v_{ij}$ den Volumenkoeffizienten für die Prognosedomäne i, $W_{k\text{-Rest}}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, des Legs k und $V_{k\text{-Rest}}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, des Legs k sowie $s_{ij}$, $sv_k$ und $sw_k$ die Schlupfvariablen für die Nachfrage der Prognosedomäne i auf dem Segment j, des Volumen des Legs k, insbesondere in Form eines abrechenbaren Gewichts cw, insbesondere eines abrechenbaren kg, die bzw. das vorzugsweise lediglich aus Volumen besteht, d.h. ein Volumengewicht von d = ∞ aufweist, bzw. des Gewichts des Legs k, insbesondere in Form eines abrechenbaren Gewichts cw, insbesondere eines abrechenbaren kg, die bzw. das vorzugsweise lediglich aus Gewicht besteht, d.h. ein Volumengewicht von d = 0 aufweist, spezifizieren und $r_{ij}$ die Rate der Prognosedomäne i des Segments j, ausgedrückt als Preis, vorzugsweise in einer offiziell anerkannten Währungseinheit, pro abrechenbaren Gewicht cw, insbesondere abrechenbaren kg, spezifizieren, wobei

die Gewichts- und Volumenkoeffizienten $w_{ij}$ und $v_{ij}$ wie folgt definiert sind:

- falls $0 \le d_{ij} \le ds$, dann ist $w_{ij} = 1$ und $v_{ij} = d_{ij}/ds$,
- falls $ds < d_{ij} < \infty$, dann ist $w_{ij} = ds/d_{ij}$ und $v_{ij} = 1$,
- falls $d_{ij} = \infty$, dann ist $w_{ij} = 0$ und $v_{ij} = 1$ und wobei

$d_{ij}$ einen Volumengewichtswert aus der Domäne i des Segments j, insbesondere einen Mittelwert oder gewichteten Mittelwert, darstellt.

18. Verfahren zur Optimierung der Auslastung und/oder der Maximierung des Erlöses eines Frachtraumes eines Frachttransportes, insbesondere nach einem der vorangehenden Ansprüche, **dadurch gekennzeichnet, dass** der Ertrag $R_F$ und/oder der Bid-Preis, insbesondere der volumenspezifische Bid-Preis bpv und/oder der gewichtsspezifische Bid-Preis bpw, für einen Transport oder Frachtflug mit mindestens einem Segment mit Hilfe der Linearen Optimierung wie folgt bestimmt wird:

Minimiere

$$R_F = \sum_k W_{k\text{-Rest}} \times bpw_k + \sum_k V_{k\text{-Rest}} \times bpv_k + \sum_i \sum_j D_{ij} \times p_{ij}$$

bezüglich
$\Sigma\, a_{kj}\, w_{ij} \times bpw_k + \Sigma\, a_{kj}\, V_{ij} \times bpv_k + p_{ij} \ge r_{ij}$ , für alle (i, j)
$bpv_k$, $bpw_k$, $p_{ij} \ge 0$, für alle (i, j) und k,

wobei $R_F$ den Erlös über einen Flug, $W_{k\text{-Rest}}$ die noch verfügbare Gewichtskapazität des Legs k, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{k\text{-Rest}}$ die noch verfügbare Volumenkapazität des Legs k, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, $bpw_k$ den Bid-Preis der Gewichtskapazität des Legs k, $bpv_k$ den Bid-Preis der Volumenkapazität des Legs k, $D_{ij}$ die prognostizierte Nachfrage der Prognosedomäne bzw. des Unterbereichs (r/d-Klasse) i des Segments j, ausgedrückt in abrechenbarem Gewicht cw, insbesondere abrechenbaren kg, $w_{ij}$ den Gewichtskoeffizienten für die Prognosedomäne i des Segments j, $v_{ij}$ den Volumenkoeffizienten für die Prognosedomäne i des Segments j, $a_{kj}$ den Indexkoeffizienten des Legs k auf dem Segment j darstellt, wobei $a_{kj} = 0$, wenn das Leg k nicht Bestandteil des Segments j ist und wobei $a_{kj} = 1$, wenn das Leg k Bestandteil des Segments j ist, sowie $p_{ij}$ die Profitabilität der Prognosedomäne i des Segments j, ausgedrückt in abrechenbarem Gewicht cw, insbesondere abrechenbaren kg, und $r_{ij}$ die Rate der Prognosedomäne i des Segments j, ausgedrückt als Preis, vorzugsweise in einer offiziell anerkannten Währungseinheit, pro abrechenbaren Gewicht cw, insbesondere abrechenbaren kg, spezifizieren, wobei
die Gewichts- und Volumenkoeffizienten $w_{ij}$ und $v_{ij}$ wie folgt definiert sind:

- falls $0 \le d_{ij} \le ds$, dann ist $w_{ij} = 1$ und $v_{ij} = d_{ij}/ds$,
- falls $ds < d_{ij} < \infty$, dann ist $w_{ij} = ds/d_{ij}$ und $v_{ij} = 1$,
- falls $d_{ij} = \infty$, dann ist $w_{ij} = 0$ und $v_{ij} = 1$ und wobei

$d_{ij}$ einen Volumengewichtswert aus der Domäne i des Segments j, insbesondere einen Mittelwert oder gewichteten Mittelwert, darstellt.

**19.** Verfahren zur Optimierung der Auslastung und/oder der Maximierung des Erlöses eines Frachtraumes eines aus mindestens einem Segment j mit mindestens einem Leg k bestehenden Frachtguttransportes, insbesondere nach einem der vorangehenden Ansprüche, durch Ermittlung der freien Kapazität für einen Frachttransport, bezogen auf das Volumengewicht einer Frachteinheit, **dadurch gekennzeichnet, dass**

a) für eingehende Buchungsanfragen für Frachteinheiten n mit der Rate $r_n$, dem Volumen $V_n$, vorzugsweise in [m$^3$], dem Gewicht $W_n$, vorzugsweise in [t], und dem Volumengewicht $d_n$ zunächst die freie Kapazität $fc_j$ eines Segments j in Abhängigkeit von dem Volumengewicht $d_n$ ermittelt wird über:

- falls $0 < sw_j \leq sv_j$ und $0 \leq d_n \leq ds$ ist, dann ist $fc_j = sw_j$,
- falls $0 < sw_j \leq sv_j$ und $ds < d_n \leq ds \times (sv_j/sw_j)$ ist, dann ist $fc_j = (d/ds) \times sw_j$,
- falls $0 < sw_j \leq sv_j$ und $ds \times (sv_j/sw_j) < d_n \leq \infty$ ist, dann ist $fc_j = sv_j$,
- falls $sw_j > sv_j > 0$ und $0 \leq d_n \leq ds \times (sv_j/sw_j)$ ist, dann ist $fc_j = sw_j$,
- falls $sw_j > sv_j > 0$ und $ds \times (sv_j/sw_j) < d_n \leq ds$ ist, dann ist $fc_j = (ds/d_n) \times sv_j$,
- falls $sw_j > sv_j > 0$ und $ds < d_n \leq \infty$ ist, dann ist $fc_j = sv_j$,
- falls $sw_j = 0$ und $sv_j > 0$ und $0 \leq d_n < \infty$ ist, dann ist $fc_j = 0$,
- falls $sw_j = 0$ und $sv_j > 0$ und $d_n = \infty$ ist, dann ist $fc_j = sv_j$,
- falls $sw_j > 0$ und $sv_j = 0$ und $d_n = 0$ ist, dann ist $fc_j = sw_j$,
- falls $sw_j > 0$ und $sv_j = 0$ und $0 < d_n \leq \infty$ ist, dann ist $fc_j = 0$, und
- falls $sw_j = 0$ und $sv_j = 0$ ist, dann ist $fc_j = 0$,

wobei die vorangehenden Parameter die folgende Bedeutung haben:

$sw_j$ die erwartungsgemäß ungenutzte Gewichtskapazität eines Segments j, ausgedrückt in abrechenbarem Gewicht cw, insbesondere abrechenbaren kg mit dem Volumengewicht d = 0, wobei $sw_j$ definiert ist als Min $\{sw_k$, für alle k, für die gilt $ak_j = 1\}$,
$sv_j$ die erwartungsgemäß ungenutzte Volumenkapazität eines Segments j, ausgedrückt in abrechenbarem Gewicht cw, insbesondere abrechenbaren kg mit dem Volumengewicht d = ∞, wobei $sv_j$ definiert ist als Min $\{sv_k$, für alle k, für die gilt $ak_j = 1\}$, wobei
$ak_j = 1$, wenn das Leg k in dem Segment j enthalten ist und wobei
$ak_j = 0$, wenn das Leg k nicht in dem Segment j enthalten ist, und wobei
$cw_n$ das abrechenbare Gewicht cw der Buchungsanfrage n, ausgedrückt in abrechenbaren kg, darstellt,
$fc_j$ die frei verfügbare Kapazität mit dem Volumengewicht $d_n$, ausgedrückt in abrechenbarem Gewicht cw, insbesondere abrechenbaren kg, und
d das Volumengewicht, vorzugsweise in m$^3$/t,
$d_n$ das Volumengewicht einer Frachteinheit n, vorzugsweise in m$^3$/t, das wie folgt bestimmt wird:

- falls das Gewicht $W_n$ der Frachteinheit n > 0 und das Volumen $V_n$ der Frachteinheit n ≥ 0, dann ist das Volumengewicht $d_n = (V_n/W_n)$,
- falls das Gewicht $W_n$ der Frachteinheit = 0 und das Volumen $V_n$ der Frachteinheit > 0, dann ist das Volumengewicht $d_n = \infty$, und
- falls das Gewicht $W_n$ der Frachteinheit = 0 und das Volumen $V_n$ der Frachteinheit = 0, dann ist das Volumengewicht $d_n$ unbestimmt,

ds das Standard-Volumengewicht darstellt;

b) das abrechenbare Gewicht $cw_n$ der Buchungsanfrage n ermittelt wird gemäß:

- falls das Gewicht $W_n$ in t gleich 0 und das Volumen $V_n$ in m$^3$ gleich 0 ist, dann ist $cw_n = 0$,
- falls $0 \leq d_n \leq ds$, dann ist $cw_n = W_n \times 1000$ und
- falls $ds < d_n \leq \infty$, dann ist $cw_n = V_n \times 1000/ds$; und

c) falls das abrechenbare Gewicht $cw_n \leq fc_j$, die Buchungsanfrage bestätigt und, falls das abrechenbare Gewicht $cw_n > fc_j$, die Buchungsanfrage bestätigt, wenn für die Buchungsanfrage einer Frachteinheit n der Bid-Preis $bp_n \leq r_n$ und wenn $V_n \leq V_{Rest}$ und $W_n \leq W_{Rest}$, und ansonsten die Buchungsanfrage ablehnt.

**20.** Verfahren nach Anspruch 19, **dadurch gekennzeichnet, dass**
der Bid-Preis $bp_j$ ermittelt wird über die Gleichung

$$bp_j = w_n \times bpw_j + v_n \times bpv_j,$$

wobei
$bp_j$ für den Bidpreis einer Einheit eines abrechenbaren Gewichts cw, insbesondere eines abrechenbaren kg, der angefragten Frachteinheit bzw. -mengen für ein Segment j bei einem Volumengewicht $d_n$, $bpw_j$ für den Gewichts-kapazitätszugangspreis des
Segments j, ausgedrückt in Preis pro abrechenbarem Gewicht cw, insbesondere pro abrechenbaren kg mit dem Volumengewicht $d_n$ = 0, $bpv_j$ für den Volumenskapazitätszugangspreis des Segments j, ausgedrückt in Preis pro abrechenbarem Gewicht cw, insbesondere pro abrechenbaren kg mit dem Volumengewicht $d_n$ = ∞ stehen,
wobei $bpw_j$ definiert ist als die Summe der Gewichts-Bid-Preise von allen Legs k, die auf dem Segment j liegen, d.h. $bpw_j = \Sigma_k a_{kj}$ x $bpw_k$, und wobei $bpv_j$ definiert ist als die Summe der Volumen-Bid-Preise von allen Legs k, die auf dem Segment j liegen, d.h. $bpv_j = \Sigma_k a_{kj}$ x $bpv_k$, wobei $ak_j$ = 1, wenn das Leg k in dem Segment j enthalten ist und wobei $ak_j$ = 0, wenn das Leg k nicht in dem Segment j enthalten ist, und wobei $w_n$ für den spezifischen Gewichtsverbrauch und $v_n$ für den spezifischen Volumenverbrauch stehen, wobei der spezifische Gewichts- bzw. der spezifische Volumenverbrauch wie folgt definiert sind:

- falls $0 \leq d_n \leq ds$, dann ist $w_n$ = 1 und $v_n$ = $d_n$/ds,
- falls $ds < d_n < \infty$, dann ist $w_n$ = ds/$d_n$ und $v_n$ = 1,
- falls $d_n = \infty$, dann ist $w_n$ = 0 und $v_n$ = 1 und

wobei $d_n$ das Volumengewicht einer Frachteinheit- bzw. -menge und ds das Standard-Volumengewicht wiedergeben, und wobei die $bpw_k$ und $bpv_k$ ermittelt werden durch Lösen des folgenden Problems, insbesondere mittels Linearen Programmierens:

Minimiere

$$R_F = \sum_k W_{k\text{-Rest}} \times bpw_k + \sum_k V_{k\text{-Rest}} \times bpv_k + \sum_i \sum_j D_{ij} \times p_{ij}$$

bezüglich
$\Sigma a_{kj} w_{ij} \times bpw_k + \Sigma a_{kj} v_{ij} \times bpv_k + P_{ij} \geq r_{ij}$, für alle (i, j)
$bpv_k, bpw_k, p_{ij} \geq 0$, für alle (i, j) und k,

wobei $R_F$ den Erlös über einen Flug, $W_{k\text{-Rest}}$ die noch verfügbare Gewichtskapazität des Legs k, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{k\text{-Rest}}$ die noch verfügbare Volumenkapazität des Legs k, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, $bpw_k$ den Bid-Preis der Gewichtskapazität des Legs k, $bpv_k$ den Bid-Preis der Volumenkapazität des Legs k, $D_{ij}$ die prognostizierte Nachfrage der Prognosedomäne bzw. des Unterbereichs (r/d-Klasse) i des Segments j, ausgedrückt in abrechenbarem Gewicht cw, insbesondere abrechenbaren kg, $w_{ij}$ den Gewichtskoeffizienten für die Prognosedomäne i des Segments j, $v_{ij}$ den Volumenkoeffizienten für die Prognosedomäne i des Segments j, $a_{kj}$ den Indexkoeffizienten des Legs k auf dem Segment j darstellt, wobei $a_{kj}$ = 0, wenn das Leg k nicht Bestandteil des Segments j ist und wobei $a_{kj}$ = 1, wenn das Leg k Bestandteil des Segments j ist, sowie $p_{ij}$ die Profitabilität der Prognosedomäne i des Segments j, ausgedrückt in abrechenbarem Gewicht cw, insbesondere abrechenbaren kg, und $r_{ij}$, insbesondere in Form eines Mittelwerts oder gewichteten Mittelwerts, die Rate der Prognosedomäne i des Segments j, ausgedrückt als Preis, vorzugsweise in einer offiziell anerkannten Währungseinheit, pro abrechenbaren Gewicht cw, insbesondere abrechenbaren kg, spezifizieren, wobei die Gewichts- und Volumenkoeffizienten $w_{ij}$ und $v_{ij}$ wie folgt definiert sind:

- falls $0 \leq d_{ij} \leq ds$, dann ist $w_{ij}$ = 1 und $v_{ij}$ = $d_{ij}$/ds,
- falls $ds < d_{ij} < \infty$, dann ist $w_{ij}$ = ds/$d_{ij}$ und $v_{ij}$ = 1,
- falls $d_{ij} = \infty$, dann ist $w_{ij}$ = 0 und $v_{ij}$ = 1 und wobei

$d_{ij}$ einen Volumengewichtswert aus der Domäne i des Segments j, insbesondere einen Mittelwert oder gewichteten Mittelwert, darstellt.

21. Verfahren nach Anspruch 19 oder 20, **dadurch gekennzeichnet, dass**
die erwartungsgemäß ungenutzte Gewichtskapazität $sw_j$ eines Segments j, ausgedrückt in abrechenbarem Gewicht cw, insbesondere abrechenbaren kg mit dem Volumengewicht d = 0, und die erwartungsgemäß ungenutzte Volumenkapazität $sv_j$ eines Segments j, ausgedrückt in abrechenbarem Gewicht cw, insbesondere abrechenbaren kg mit dem Volumengewicht d = ∞, ermittelt werden über Min {$sw_k$, für alle k, für die gilt $ak_j$ = 1} und Min {$sv_k$, für alle k, für die gilt $ak_j$ = 1} und wobei die Werte für $sw_k$ und $sv_k$ durch Lösung des nachfolgenden Problems mit Hilfe der Linearen Optimierung bestimmt werden:

Maximiere

$$R_F = \sum_i \sum_j r_{ij}\, x_{ij}$$

bezüglich

$$\sum_i \sum_j a_{kj}\, w_{ij}\, x_{ij} + sw_k = W_{k\text{-Rest}}, \text{ für alle } k$$

$$\sum_i \sum_j a_{kj}\, v_{ij}\, x_{ij} + sv_k = V_{k\text{-Rest}}, \text{ für alle } k$$

$x_{ij} + s_{ij} = D_{ij}$, für alle (i, j) und
$s_{ij}$, $sv_k$, $sw_k$, $x_{ij} \geq 0$, für alle (i, j) und k,

wobei $R_F$ den Erlös über einen Flug, der Index k das Leg eines Transportes, insbesondere Fluges, j das Segment eines Transportes, i die Prognosedomäne bzw. den Unterbereich (r/d-Klasse) eines Segments, $x_{ij}$ die zu akzeptierende Nachfrage für die Prognosedomäne i des Segments j, ausgedrückt in abrechenbarem Gewicht cw, insbesondere abrechenbaren kg, $D_{ij}$ die prognostizierte Nachfrage der Prognosedomäne i des Segments j, ausgedrückt in abrechenbarem Gewicht cw, insbesondere abrechenbaren kg, $a_{kj}$ den Indexkoeffizienten des Legs k auf dem Segment j darstellt, wobei $a_{kj}$ = 0, wenn das Leg k nicht Bestandteil des Segments j ist und wobei $a_{kj}$ = 1, wenn das Leg k Bestandteil des Segments j ist, $w_{ij}$ den Gewichtskoeffizienten für die Prognosedomäne i des Segments j, $v_{ij}$ den Volumenkoeffizienten für die Prognosedomäne i, $W_{k\text{-Rest}}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, des Legs k und $V_{k\text{-Rest}}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, des Legs k sowie $s_{ij}$, $sv_k$ und $sw_k$ die Schlupfvariablen für die Nachfrage der Prognosedomäne i auf dem Segment j, des Volumen des Legs k, insbesondere in Form eines abrechenbaren Gewichts cw, insbesondere eines abrechenbaren kg, die bzw. das vorzugsweise lediglich aus Volumen besteht, d.h. ein Volumengewicht von d = ∞ aufweist, bzw. des Gewichts des Legs k, insbesondere in Form eines abrechenbaren Geichts cw, insbesondere eines abrechenbaren kg, die bzw. das vorzugsweise lediglich aus Gewicht besteht, d.h. ein Volumengewicht von d = 0 aufweist, spezifizieren und $r_{ij}$ die Rate der Prognosedomäne i des Segments j, insbesondere in Form eines Mittelwerts oder gewichteten Mittelwerts, ausgedrückt als Preis, vorzugsweise in einer offiziell anerkannten Währungseinheit, pro abrechenbaren Gewicht cw, insbesondere abrechenbaren kg, spezifizieren, wobei die Gewichts- und Volumenkoeffizienten $w_{ij}$ und $v_{ij}$ wie folgt definiert sind:

- falls $0 \leq d_{ij} \leq ds$, dann ist $w_{ij}$ = 1 und $v_{ij} = d_{ij}/ds$,
- falls $ds < d_{ij} < ∞$, dann ist $w_{ij}$ ds/$d_{ij}$ und $v_{ij}$ = 1,
- falls $d_{ij} = ∞$, dann ist $w_{ij}$ = 0 und $v_{ij}$ = 1 und wobei

$d_{ij}$ einen Volumengewichtswert aus der Domäne i des Segments j, insbesondere einen Mittelwert oder gewichteten Mittelwert, darstellt.

**22.** Verfahren zur Optimierung der Auslastung und/oder der Maximierung des Erlöses eines Frachtraumes eines aus mindestens einem Segment j mit mindestens einem Leg k bestehenden Frachtguttransportes, insbesondere nach einem der vorangehenden Ansprüche, durch Ermittlung der freien Kapazität für einen Frachttransport, bezogen auf das skalierte Volumengewicht einer Frachteinheit, **dadurch gekennzeichnet, dass**

a) für eingehende Buchungsanfragen für Frachteinheiten n mit der Rate $r_n$, dem Volumen $V_n$, vorzugsweise in [m³], dem Gewicht $W_n$, vorzugsweise in [t], dem abrechenbaren Gewicht $cw_n$, dem Volumengewicht $d_n$ und dem skalierten Volumengewicht $sd_n$ zunächst die freie Kapazität $fc_j$ eines Segments in Abhängigkeit von dem skalierten Volumengewicht $sd_n$ ermittelt wird über:

- falls $0 < sw_j \leq sv_j$ und $0 \leq sd_n \leq 0,5$ ist, dann ist $fc_j = sw_j$,
- falls $0 < sw_j \leq sv_j$ und $0,5 < sd_n \leq 0,5 \times (sv_j/sw_j)$ ist, dann ist $fc_j = sw_j /(2(1-sd_n))$,
- falls $0 < sw_j \leq sv_j$ und $0,5 \times (sv_j/sw_j) < sd_n \leq 1$ ist, dann ist $fc_j = sv_j$,
- falls $sw_j > sv_j > 0$ und $0 \leq sd_n \leq 0,5 \times (sv_j/sw_j)$ ist, dann ist $fc_j = sw_j$,
- falls $sw_j > sv_j > 0$ und $0,5 \times (sv_j/sw_j) < sd_n \leq 0,5$ ist, dann ist $fc_j = sv_j/2\,sd_n$,
- falls $sw_j > sv_j > 0$ und $0,5 < sd_n \leq 1$ ist, dann ist $fc_j = sv_j$,
- falls $sw_j = 0$ und $sv_j > 0$ und $0 \leq sd_n < 1$ ist, dann ist $fc_j = 0$,
- falls $sw_j = 0$ und $sv_j > 0$ und $sd_n = 1$ ist, dann ist $fc_j = sv_j$,
- falls $sw_j > 0$ und $sv_j = 0$ und $sd_n = 0$ ist, dann ist $fc_j = sw_j$,
- falls $sw_j > 0$ und $sv_j = 0$ und $0 < sd_n \leq 1$ ist, dann ist $fc_j = 0$, und
- falls $sw_j = 0$ und $sv_j = 0$ ist, dann ist $fc_j = 0$, wobei die vorangehenden Parameter die folgende Bedeutung haben:

$sw_j$ die erwartungsgemäß ungenutzte Gewichtskapazität eines Segments j, ausgedrückt in abrechenbarem Gewicht cw, insbesondere abrechenbaren kg mit dem Volumengewicht d = 0, wobei $sw_j$ definiert ist als Min {$sw_k$, für alle k, für die gilt $ak_j = 1$},

$sv_j$ die erwartungsgemäß ungenutzte Volumenkapazität eines Segments j, ausgedrückt in abrechenbarem Gewicht cw, insbesondere abrechenbaren kg mit dem Volumengewicht d = ∞, wobei $sv_j$ definiert ist als Min {$sv_k$, für alle k, für die gilt $ak_j = 1$}, wobei

$ak_j = 1$, wenn das Leg k in dem Segment j enthalten ist und wobei
$ak_j = 0$, wenn das Leg k nicht in dem Segment j enthalten ist, und wobei

$cw_n$ das abrechenbare Gewicht cw der Buchungsanfrage n, ausgedrückt in abrechenbaren kg, darstellt,

$fc_j$ die frei verfügbare Kapazität mit dem skalierten Volumengewicht $sd_n$, ausgedrückt in abrechenbarem Gewicht cw, insbesondere abrechenbaren kg,

$d_n$ das Volumengewicht einer Frachteinheit n, vorzugsweise in m³/t, das wie folgt bestimmt wird:

- falls das Gewicht $W_n$ der Frachteinheit > 0 und das Volumen $V_n$ der Frachteinheit $\geq 0$, dann ist das Volumengewicht $d_n = (V_n/W_n)$,
- falls das Gewicht $W_n$ der Frachteinheit = 0 und das Volumen $V_n$ der Frachteinheit > 0, dann ist das Volumengewicht $d_n = \infty$, und
- falls das Gewicht $W_n$ der Frachteinheit = 0 und das Volumen $V_n$ der Frachteinheit = 0, dann ist das Volumengewicht $d_n$ unbestimmt,

- ausgehend von dem ermittelten Volumengewicht $d_n$ das skalierte Volumengewicht $sd_n$ bestimmt, wobei,

- falls $d_n = 0$, dann $sd_n = 0$ ist,
- falls $0 < d_n \leq ds$, dann $sd_n = d_n/2ds$ ist,
- falls $ds < d_n < \infty$, dann $sd_n = 1 - ds/2d_n$ ist, und
- falls $d_n = \infty$, dann $sd_n = 1$ ist,

wobei ds ein gegebenes Standard-Volumengewicht, vorzugsweise in m³/t, ist, das insbesondere dem Standard-Volumengewicht $ds_{IATA}$ der IATA entspricht;

b) das abrechenbare Gewicht cw ermittelt wird gemäß:

- falls das Gewicht $W_n$ in t gleich 0 und das Volumen $V_n$ in $m^3$ gleich 0 ist, dann ist $cw_n = 0$,
- falls $0 \leq sd_n \leq 0{,}5$, dann ist $cw_n = W_n \times 1000$ und
- falls $0{,}5 < sd_n \leq 1$, dann ist $cW_n = V_n \times 1000/ds$; und

c) falls das abrechenbare Gewicht $cw_n \leq fc_j$, die Buchungsanfrage bestätigt und, falls das abrechenbare Gewicht $cw_n > fc_j$, die Buchungsanfrage bestätigt, wenn der für die Buchungsanfrage einer Frachteinheit n ermittelte Bid-Preis $bp_n \leq r_n$ und wenn $V_n \leq V_{Rest}$ und $W_n \leq W_{Rest}$, und ansonsten die Buchungsanfrage ablehnt.

**23.** Verfahren zur Optimierung der Auslastung und/oder der Maximierung des Erlöses eines Frachtraumes eines aus mindestens einem Segment j mit mindestens einem Leg k bestehenden Frachtguttransportes, insbesondere nach einem der vorangehenden Ansprüche, durch Ermittlung des Ertrages aus den niedrigstwertigen Unterbereichen von erwarteten Frachtgutbuchungsnachfragen (Bid-Preis) für ein Segment in Abhängigkeit von dem Volumengewicht d, **dadurch gekennzeichnet, dass**

a) für eingehende Buchungsanfragen für Frachteinheiten n mit der Rate $r_n$, dem Volumen $V_n$, dem Gewicht $W_n$ und dem Volumengewicht $d_n$ der Bid-Preis $bp_j$ wie folgt bestimmt wird:

- falls $0 \leq d_n \leq ds$ ist, dann ist $bp_j = bpw_j + (d_n/ds) \times bpv_j$,
- falls $ds < d_n < \infty$ ist, dann ist $bp_j = (ds/d_n) \times bpw_j + bpv_j$, und
- falls $d_n = \infty$ ist, dann ist $bp_j = bpv_j$,

wobei die vorangehenden Parameter die folgende Bedeutung haben:

$d_n$ Volumengewicht der Buchungsanfrage
ds Standard-Volumengewicht
$bp_j$ Bid-Preis des Segments j bei einem Volumengewicht $d_n$
$bpw_j$ Gewichtskapazitätszugangspreis des Segments j, ausgedrückt in Preis pro abrechenbarem Gewicht cw, insbesondere pro abrechenbaren kg mit dem Volumengewicht $d_n = 0$ (Preis der Gewichtskapazität des Segments j),
$bpv_j$ Volumenskapazitätszugangspreis des Segments j, ausgedrückt in Preis pro abrechenbarem Gewicht cw, insbesondere pro abrechenbaren kg mit dem Volumengewicht $d_n = \infty$ (Preis der Volumenkapazität des Segments j),

wobei $bpw_j$ definiert ist als die Summe der Gewichts-Bid-Preise von allen Legs k, die auf dem Segment j liegen, d.h. $bpw_j = \Sigma_k a_{kj} \times bpw_k$, und wobei $bpv_j$ definiert ist als die Summe der Volumen-Bid-Preise von allen Legs k, die auf dem Segment j liegen, d.h. $bpv_j = \Sigma_k a_{kj} \times bpv_k$, wobei
$ak_j = 1$, wenn das Leg k in dem Segment j enthalten ist und wobei
$ak_j = 0$, wenn das Leg k nicht in dem Segment j enthalten ist, und wobei
das Volumengewicht einer Frachteinheit n, vorzugsweise in $m^3/t$, darstellt und wie folgt bestimmt wird:

- falls das Gewicht $W_n$ der Frachteinheit > 0 und das Volumen $V_n$ der Frachteinheit $\geq 0$, dann ist das Volumengewicht $d_n = (V_n/W_n)$,
- falls das Gewicht $W_n$ der Frachteinheit = 0 und das Volumen $V_n$ der Frachteinheit > 0, dann ist das Volumengewicht $d_n = \infty$, und
- falls das Gewicht $W_n$ der Frachteinheit = 0 und das Volumen $V_n$ der Frachteinheit = 0, dann ist das Volumengewicht $d_n$ unbestimmt, und

b) das abrechenbare Gewicht $cw_n$ der Buchungsanfrage n ermittelt gemäß:

- falls das Gewicht $W_n$ in t gleich 0 und das Volumen $V_n$ in $m^3$ gleich 0 ist, dann ist $cw_n = 0$,
- falls $0 \leq d_n \leq ds$, dann ist $cw_n = W_n \times 1000$ und
- falls $ds < d_n \leq \infty$, dann ist $cw_n = V_n \times 1000/ds$; und

c) falls die Rate $r_n \geq bp_j$ und falls $V_n \leq V_{Rest}$ und $W_n \leq W_{Rest}$, die Buchungsanfrage bestätigt und, falls die Rate $r_n < bp_j$, die Buchungsanfrage ablehnt.

**24.** Verfahren zur Optimierung der Auslastung und/oder der Maximierung des Erlöses eines Frachtraumes eines aus mindestens einem Segment j mit mindestens einem Leg k bestehenden Frachtguttransportes, insbesondere nach einem der vorangehenden Ansprüche, durch Ermittlung des Ertrages aus den niedrigstwertigen Unterbereichen von erwarteten Frachtgutbuchungsnachfragen (Bid-Preis) für ein Segment in Abhängigkeit von dem skalierten Volumengewicht sd, **dadurch gekennzeichnet, dass**

a) für eingehende Buchungsanfragen für Frachteinheiten n mit der Rate $r_n$, dem Volumen $V_n$, dem Gewicht $W_n$, dem Volumengewicht $d_n$ und dem skalierten Volumengewicht $sd_n$ der Bid-Preis $bp_j$ wie folgt bestimmt wird:

- falls $0 \leq sd_n \leq 0,5$ ist, dann ist $bp_j = bpw_j + 2\ sd_n \times bpv_j$,
- falls $0,5 < sd_n < 1$ ist, dann ist $bp_j = 2(1 - sd_n) \times bpw_j + bpv_j$, und
- falls $d_n = 1$ ist, dann ist $bp_j = bpv_j$,

wobei die vorangehenden Parameter die folgende Bedeutung haben:

$d_n$ Volumengewicht der Buchungsanfrage
$sd_n$ das skalierte Volumengewicht der Buchungsanfrage
$bp_j$ Bid-Preis des Segments j bei einem skalierten Volumengewicht $sd_n$
$bpw_j$ Gewichtskapazitätszugangspreis des Segments j, ausgedrückt in Preis pro abrechenbarem Gewicht cw, insbesondere pro abrechenbaren kg mit dem Volumengewicht $d_n = 0$ (Preis der Gewichtskapazität des Segments j),
$bpv_j$ Volumenskapazitätszugangspreis des Segments j, ausgedrückt in Preis pro abrechenbarem Gewicht cw, insbesondere pro abrechenbaren kg mit dem Volumengewicht $d_n = \infty$ (Preis der Volumenkapazität des Segments j),

wobei $bpw_j$ definiert ist als die Summe der Gewichts-Bid-Preise von allen Legs k, die auf dem Segment j liegen, d.h. $bpw_j = \Sigma_k\ a_{kj}\ x\ bpw_k$, und wobei $bpv_j$ definiert ist als die Summe der Volumen-Bid-Preise von allen Legs k, die auf dem Segment j liegen, d.h. $bpv_j = \Sigma_k\ a_{kj}\ x\ bpv_k$, wobei
$ak_j = 1$, wenn das Leg k in dem Segment j enthalten ist und wobei
$ak_j = 0$, wenn das Leg k nicht in dem Segment j enthalten ist,
und wobei
das Volumengewicht einer Frachteinheit n, vorzugsweise in $m^3/t$, darstellt und wie folgt bestimmt wird:

- falls das Gewicht $W_n$ der Frachteinheit > 0 und das Volumen $V_n$ der Frachteinheit $\geq 0$, dann ist das Volumengewicht $d_n = (V_n/W_n)$,
- falls das Gewicht $W_n$ der Frachteinheit = 0 und das Volumen $V_n$ der Frachteinheit > 0, dann ist das Volumengewicht $d_n = \infty$, und
- falls das Gewicht $W_n$ der Frachteinheit = 0 und das Volumen $V_n$ der Frachteinheit = 0, dann ist das Volumengewicht $d_n$ unbestimmt, und

ausgehend von dem ermittelten Volumengewicht d das skalierte Volumengewicht $sd_n$ wie folgt bestimmt:

- falls $d_n = 0$, dann $sd_n = 0$ ist,
- falls $0 < d_n \leq ds$, dann $sd_n = d_n/2ds$ ist,
- falls $ds < d_n < \infty$, dann $sd_n = 1 - ds/2d_n$ ist, und
- falls $d_n = \infty$, dann $sd_n = 1$ ist,

wobei ds ein gegebenes Standard-Volumengewicht, vorzugsweise in $m^3/t$, ist, das insbesondere dem Standard-Volumengewicht $ds_{IATA}$ der IATA entspricht;
b) das abrechenbare Gewicht $cw_n$ der Buchungsanfrage n ermittelt gemäß:

- falls das Gewicht $W_n$ in t gleich 0 und das Volumen $V_n$ in $m^3$ gleich 0 ist, dann ist $cw_n = 0$,
- falls $0 \leq sd_n \leq 0,5$, dann ist $cw_n = W_n \times 1000$ und
- falls $0,5 < sd_n \leq 1$, dann ist $cw_n = V_n \times 1000/ds$; und

c) falls die Rate $r_n \geq bpj$ und falls $V_n \leq V_{Rest}$ und $W_n \leq W_{Rest}$, die Buchungsanfrage bestätigt und, falls die Rate $r_n < bp_j$, die Buchungsanfrage ablehnt.

**25.** System zur Optimierung der Auslastung und/oder der Maximierung des Erlöses eines Frachtraumes für einen Frachttransport, **dadurch gekennzeichnet, dass**

- für einen Frachttransport eingehende Transportnachfragen für Frachteinheiten n, insbesondere für jede Transportnachfrage, in Bezug auf ihr Volumen $V_n$, vorzugsweise in der Einheit $m^3$, und ihr Gewicht $W_n$, vorzugsweise in der Einheit t, und gegebenenfalls ihre Rate $r_n$ als Preis, vorzugsweise in einer offiziell anerkannten Währungseinheit, pro abrechenbarer Gewichtseinheit cw, vorzugsweise in abrechenbaren kg, erfasst wird oder erfassbar ist,
- die Volumengewichte $d_n$ der Frachteinheiten n, vorzugsweise in $m^3/t$, bestimmt werden oder bestimmbar sind, wobei,

  - falls das Gewicht $W_n$ der n-ten Frachteinheit > 0 und das Volumen $V_n$ der n-ten Frachteinheit $\geq$ 0, dann das Volumengewicht $d_n = (V_n/W_n)$ ist,
  - falls das Gewicht $W_n$ der n-ten Frachteinheit = 0 und das Volumen $V_n$ der n-ten Frachteinheit > 0, dann das Volumengewicht $d_n = \infty$ ist, und
  - falls das Gewicht $W_n$ der n-ten Frachteinheit = 0 und das Volumen $V_n$ der n-ten Frachteinheit = 0, dann das Volumengewicht $d_n$ unbestimmt ist,

- ausgehend von dem ermittelten Volumengewicht $d_n$ das skalierte Volumengewicht $sd_n$ bestimmt wird oder bestimmbar ist, wobei,

  - falls $d_n = 0$, dann $sd_n = 0$ ist,
  - falls $0 < d_n \leq ds$, dann $sd_n = d_n/2ds$ ist,
  - falls $ds < d_n < \infty$, dann $sd_n = 1 - ds/2d_n$ ist, und
  - falls $d_n = \infty$, dann $sd_n = 1$ ist,

    wobei ds ein gegebenes Standard-Volumengewicht, vorzugsweise in $m^3/t$, ist, das insbesondere dem Standard-Volumengewicht $ds_{IATA}$ der IATA entspricht;
- ermittelt wird oder ermittelbar ist, ob das skalierte Volumengewicht $sd_n$ der Transportnachfrage für die n-te Frachteinheit ein extremes skaliertes Volumengewicht $sd_n$ besitzt, das in einem Bereich von $0 \leq sd_n < 0,5$ oder von $0,5 < sd_n \leq 1$, vorzugsweise in einem Bereich von $0 \leq sd_n \leq 0,4$ oder von $0,6 \leq sd_n \leq 1$ und besonders bevorzugt in einem Bereich von $0 \leq sd_n \leq 0,2$ oder von $0,8 \leq sd_n \leq 1$ liegt, und
- die Transportnachfrage bestätigt wird, falls diese ein extremes skaliertes Volumengewicht $sd_n$ aufweist, sofern die maximale Kapazität an Frachtvolumen $V_{max}$ und die maximale Kapazität an Frachtgewicht $W_{max}$ mit der Annahme der n-ten Transportnachfrage nicht überschritten werden.

**26.** System nach Anspruch 25, **dadurch gekennzeichnet, dass**

- für einen Frachttransport eingehende Transportnachfragen für Frachteinheiten n, insbesondere für jede Transportnachfrage, in Bezug auf ihr Volumen $V_n$, vorzugsweise in der Einheit $m^3$, und ihr Gewicht $W_n$, vorzugsweise in der Einheit t, und gegebenenfalls ihre Rate $r_n$ als Preis, vorzugsweise in einer offiziell anerkannten Währungseinheit, pro abrechenbarer Gewichtseinheit, vorzugsweise in abrechenbaren kg, erfasst wird oder erfassbar ist,
- die Volumengewichte $d_n$ der Frachteinheiten n bestimmt werden oder bestimmbar sind, wobei,

  - falls das Gewicht $W_n$ der n-ten Frachteinheit > 0 und das Volumen $V_n$ der n-ten Frachteinheit $\geq$ 0, dann das Volumengewicht $d_n = (V_n/W_n)$ ist,
  - falls das Gewicht $W_n$ der n-ten Frachteinheit = 0 und das Volumen $V_n$ der n-ten Frachteinheit > 0, dann das Volumengewicht $d_n = \infty$ ist, und
  - falls das Gewicht $W_n$ der n-ten Frachteinheit = 0 und das Volumen $V_n$ der n-ten Frachteinheit = 0, dann das Volumengewicht $d_n$ unbestimmt ist,

- ausgehend von dem ermittelten Volumengewicht $d_n$ das skalierte Volumengewicht $sd_n$ bestimmt wird oder bestimmbar ist, wobei,

  - falls $d_n = 0$, dann $sd_n = 0$ ist,
  - falls $0 < d_n \leq ds$, dann $sd_n = d_n/2ds$ ist,
  - falls $ds < d_n < \infty$, dann $sd_n = 1 - ds/2d_n$ ist, und
  - falls $d_n = \infty$, dann $sd_n = 1$ ist,

    wobei ds ein gegebenes Standard-Volumengewicht ist, das insbesondere dem Standard-Volumengewicht $ds_{IATA}$ der IATA entspricht;

- die noch zur Verfügung stehende Kapazität an Volumen $V_{Rest}$ unter Berücksichtigung der maximalen Kapazität an Frachtvolumen $V_{max}$ und die noch zur Verfügung stehende Kapazität an Gewicht $W_{Rest}$ unter Berücksichtigung der maximalen Kapazität an Frachtgewicht $W_{max}$ ermittelt wird oder ermittelbar ist,
- das Volumengewicht $d_k$ der noch verfügbaren Kapazität berechnet wird oder berechenbar ist über $d_k = V_{Rest}/W_{Rest}$, mit $V_{Rest}$ vorzugsweise in der Einheit $m^3$ und $W_{Rest}$ vorzugsweise in der Einheit t, und

  - falls $d_k = 0$, dann $sd_k = 0$ ist,
  - falls $0 < d_k \leq ds$, dann $sd_k = d_k/2ds$ ist,
  - falls $ds < d_k < \infty$, dann $sd_k = 1 - ds/2d_k$ ist, und
  - falls $d_k = \infty$, dann $sd_k = 1$ ist, wobei $sd_k$ das skalierte Volumengewicht der noch verfügbaren Kapazität $d_k$ darstellt und wobei

    - falls das Gewicht $W_{Rest} > 0$ und das Volumen $V_{Rest} \geq 0$, dann das Volumengewicht $d_k = (V_{Rest}/W_{Rest})$ ist,
    - falls das Gewicht $W_{Rest} = 0$ und das Volumen $V_{Rest} > 0$, dann das Volumengewicht $d_k = \infty$ ist, und
    - falls das Gewicht $W_{Rest} = 0$ und das Volumen $V_{Rest} = 0$, dann das Volumengewicht $d_k$ unbestimmt ist,

- ermittelt, ob das skalierte Volumengewicht $sd_k$ der zur Verfügung stehenden Kapazität kleiner, größer oder gleich 0,5 ist, und

  - falls $sd_k < 0,5$, die Transportnachfrage bestätigt, wenn $sd_n < sd_k$ oder wenn $0 \leq sd_n \leq 0,5$, insbesondere $0 \leq sd_n \leq 0,4$ und besonders bevorzugt $0 \leq sd_n \leq 0,2$,
  - falls $sd_k > 0,5$, die Transportnachfrage bestätigt, wenn $sd_n > sd_k$ oder wenn $0,5 \leq sd_n \leq 1$, insbesondere $0,6 \leq sd_n \leq 1$ und besonders bevorzugt $0,8 \leq sd_n \leq 1$ und
  - falls $sd_k = 0,5$, die Transportnachfrage bestätigt, wenn $0 \leq sd_n < 0,5$ oder $0,5 < sd_n \leq 1$, vorzugsweise $0 \leq sd_n \leq 0,4$ oder $0,6 \leq sd_n \leq 1$ und besonders bevorzugt $0 \leq sd_n \leq 0,2$ oder $0,8 \leq sd_n \leq 1$,

  sofern die maximale Kapazität an Frachtvolumen $V_{max}$ und die maximale Kapazität an Frachtgewicht $W_{max}$ mit der Annahme der n-ten Frachtbuchungsnachfrage nicht überschritten werden.

**27.** System zur Optimierung der Auslastung und/oder zur Maximierung des Erlöses eines Frachtraumes eines Frachttransportes, insbesondere nach Anspruch 25 oder 26, **dadurch gekennzeichnet, dass**

- für einen Frachttransport eingehende Transportnachfragen für Frachteinheiten n in Bezug auf ihr Volumen $V_n$, insbesondere in der Einheit $m^3$, ihr Gewicht $W_n$, insbesondere in der Einheit t, ihr abrechenbares Gewicht cw, vorzugsweise in abrechenbaren kg, und ihre Rate $r_n$ pro abrechenbares Gewicht cw der Frachteinheit n erfasst bzw. abbildet wird oder erfassbar bzw. abbildbar ist,
- das Volumengewicht $d_n$ der Frachteinheiten n bestimmt wird oder bestimmbar ist, wobei,

  - falls das Gewicht $W_n$ der n-ten Frachteinheit $\geq 0$ und das Volumen $V_n$ der n-ten Frachteinheit $\geq 0$, dann das Volumengewicht $d_n = (V_n/W_n)$ ist,
  - falls das Gewicht $W_n$ der n-ten Frachteinheit $= 0$ und das Volumen $V_n > 0$, dann das Volumengewicht $d_n = \infty$ ist, und
  - falls das Gewicht $W_n$ der n-ten Frachteinheit $= 0$ und das Volumen $V_n = 0$, dann das Volumengewicht $d_n$ unbestimmt ist,

- ausgehend von dem ermittelten Volumengewicht $d_n$ das skalierte Volumengewicht $sd_n$ bestimmt wird oder bestimmbar ist, wobei,

  - falls $d_n = 0$, dann $sd_n = 0$ ist,
  - falls $0 < d_n \leq ds$, dann $sd_n = d_n/2ds$ ist,
  - falls $ds < d_n < \infty$, dann $sd_n = 1 - ds/2d_n$ ist, und
  - falls $d_n = \infty$, dann $sd_n = 1$ ist,

  wobei ds ein Standard-Volumengewicht ist, das insbesondere dem Standard-Volumengewicht $ds_{IATA}$ der IATA entspricht;
- auf der Grundlage der ermittelten Menge an skalierten Volumengewichten $sd_n$ mindestens zwei, insbesondere

mindestens vier, Volumengewichtsklassen $K_x$ mit unteren und oberen Klassengrenzen dg bildet, wobei keine Klasse $K_x$ gebildet wird, die eine untere Grenze mit einem sd-Wert < 0,5 und eine obere Grenze mit einem sd-Wert > 0,5 aufweist,

- die Volumengewichte der Klassengrenzen dg in der Weise berechnet werden oder berechenbar sind, dass,

  - falls sdg = 0, dann dg = 0 ist,
  - falls $0 < sd_g \leq 0,5$, dann dg = 2 sdg $\times$ ds ist,
  - falls 0,5 < sdg < 1, dann dg = ds/(2 - 2sd$_g$) ist, und
  - falls sdg = 1, dann dg = $\infty$ ist, und

- die Frachtguteinheiten n den ermittelten Volumengewichtsklassen $K_x(d_n)$ zuordnet werden oder zuordbar sind.

28. System zur Optimierung der Auslastung und/oder zur Maximierung des Erlöses eines Frachtraumes eines Frachttransportes, insbesondere nach einem der Ansprüche 25 bis 27, **dadurch gekennzeichnet, dass**

- für einen Frachttransport prognostizierte Transportmengen in Bezug auf ihr Volumen $V_m$, insbesondere in der Mengeneinheit m$^3$, ihr Gewicht $W_m$, insbesondere in der Mengeneinheit t, und ihren Nachfragepreis $r_m$ für das abrechenbare Gewicht cw, vorzugsweise in abrechenbaren kg, der Frachtmenge m erfasst wird oder erfassbar ist,

- das Volumengewicht $d_m$ der Frachtmengen m bestimmt wird oder bestimmbar ist, wobei,

  - falls das Gewicht $W_m$ der Frachtmenge m $\geq 0$ und das Volumen $V_m$ der Frachtmenge m $\geq 0$, dann das Volumengewicht $d_m = (V_m/W_m)$ ist,
  - falls das Gewicht $W_m$ der Frachtmenge m = 0 und das Volumen $V_m > 0$, dann das Volumengewicht $d_m = \infty$ ist, und
  - falls das Gewicht $W_m$ der Frachtmenge m = 0 und das Volumen $V_m = 0$, dann das Volumengewicht $d_m$ unbestimmt ist,

- ausgehend von dem ermittelten Volumengewicht $d_m$ das skalierte Volumengewicht $sd_m$ bestimmt wird oder bestimmbar ist, wobei,

  - falls $d_m = 0$, dann $sd_m = 0$ ist,
  - falls $0 < d_m \leq ds$, dann $sd_m = d_m/2ds$ ist,
  - falls $ds < d_m < \infty$, dann $sd_m = 1 - ds/2d_m$ ist, und
  - falls $d_m = \infty$, dann $sd_m = 1$ ist,

    wobei ds ein Standard-Volumengewicht ist, das insbesondere dem Standard-Volumengewicht $ds_{IATA}$ der IATA entspricht;

- auf der Grundlage der prognostizierten Menge mit den skalierten Volumengewichten $sd_m$ mindestens zwei, insbesondere mindestens vier, Volumengewichtsklassen $K_z$ mit unteren und oberen Klassengrenzen $d_f$ gebildet werden oder bildbar sind, wobei keine Klasse $K_z$ gebildet wird, die eine untere Grenze mit einem sd-Wert < 0,5 und eine obere Grenze mit einem sd-Wert > 0,5 aufweist,

- die Volumengewichte $d_f$ der Klassengrenzen in der Weise berechnet wird oder berechenbar ist, dass,

  - falls $sd_f = 0$, dann $d_f = 0$ ist,
  - falls $0 < sd_f \leq 0,5$, dann $d_f = 2 sd_f \times ds$ ist,
  - falls $0,5 < sd_f < 1$, dann $d_f = ds/(2 - 2sd_f)$ ist, und
  - falls $sd_f = 1$, dann $d_f = \infty$ ist, und

- die Frachtmengen m den ermittelten Volumengewichtsklassen $K_z(d_m)$ zuordnet werden oder zuordbar sind. System nach einem der Ansprüche 37 bis 44, **dadurch gekennzeichnet, dass** das Abrechnungsgewicht cw wie folgt definiert ist:

- falls das Gewicht $W_n$ in t = 0 und das Volumen $V_n$ in m$^3$ = 0 ist, dann ist cw = 0,
- falls $0 \leq d_n \leq ds$, dann ist cw = $W_n \times 1000$ und
- falls $ds < d_n \leq \infty$, dann ist cw = $V_n \times 1000/ds$.

29. System zur Optimierung der Auslastung und/oder zur Maximierung des Erlöses eines Frachtraumes eines Frachttransportes, insbesondere nach einem der Ansprüche 25 bis 28, **dadurch gekennzeichnet, dass**

- eine Menge von eingehenden Frachtguttransportnachfragen über die jeweiligen Nachfragevolumina $V_n$, Nachfragegewichte $W_n$ und erzielbaren Raten $r_n$, ausgedrückt als Preis des abrechenbaren Gewichts cw, vorzugsweise in abrechenbaren kg, sowie das Volumengewicht $d_n$ und das skalierte Volumengewicht $sd_n$ definiert ist oder definierbar ist; wobei
- das Volumengewicht $d_n$ einer Frachteinheit n wie folgt bestimmt wird oder bestimmbar ist:

  - falls das Gewicht $W_n$ der n-ten Frachteinheit > 0 und das Volumen $V_n$ der n-ten Frachteinheit $\geq$ 0, dann das Volumengewicht $d_n = (V_n/W_n)$ ist,
  - falls das Gewicht $W_n$ der n-ten Frachteinheit = 0 und das Volumen $V_n$ der n-ten Frachteinheit > 0, dann das Volumengewicht $d_n = \infty$ ist, und
  - falls das Gewicht $W_n$ der n-ten Frachteinheit = 0 und das Volumen $V_n$ der n-ten Frachteinheit = 0, dann das Volumengewicht $d_n$ unbestimmt ist, und man

- ausgehend von dem ermittelten Volumengewicht $d_n$ das skalierte Volumengewicht $sd_n$ bestimmt wird oder bestimmbar ist, wobei,

  - falls $d_n = 0$, dann $sd_n = 0$ ist,
  - falls $0 < d_n \leq ds$, dann $sd_n = d_n/2ds$ ist,
  - falls $ds < d_n < \infty$, dann $sd_n = 1 - ds/2d_n$ ist, und
  - falls $d_n = \infty$, dann $sd_n = 1$ ist,

- wobei ds ein gegebenes Standard-Volumengewicht ist, das insbesondere dem Standard-Volumengewicht $ds_{IATA}$ der IATA entspricht;
- ein zweidimensionaler Bereich, umfassend zwei sich schneidende Koordinatenachsen, definiert wird oder definierbar ist, dessen erste Dimension unmittelbar oder mittelbar den in Frachtgutbuchungsnachfragen nachfragbaren Bereich des skalierten Volumengewichts $sd_n$ und dessen zweite Dimension die Nachfragerate $r_n$, definiert als Preis pro abrechenbarem Gewichts cw, wiedergibt, wobei der Betrag des abrechenbaren bzw. Abrechnungsgewichts cw, vorzugsweise in abrechenbaren kg, wie folgt definiert ist:

  - falls das Gewicht $W_n = 0$ und das Volumen $V_n = 0$, dann ist cw = 0,
  - falls $0 \leq d_n \leq ds$, dann ist cw = $W_n \times 1000$ und
  - falls $ds < d_n \leq \infty$, dann ist cw = $V_n \times 1000/ds$,

- den Wertepaaren, gebildet aus dem skalierten Volumengewicht $sd_n$ einer angefragten n-ten Frachteinheit und deren Nachfragerate $r_n$, in dem zweidimensionalen Bereich jeweils einen korrespondierenden Wertepaarpunkt zugewiesen wird oder zuweisbar ist, in dem durch die Koordinatenachsen gebildeten Koordinatensystem und die Abstände zwischen Wertepaarpunkten, deren zugehöriges skaliertes Volumengewicht $sd_n$ in dem Bereich $0 < sd_n \leq 0{,}5$ liegt, sowie die Abstände zwischen Wertepaarpunkten, deren zugehöriges skaliertes Volumengewicht $sd_n$ in dem Bereich $0{,}5 < sd_n \leq 1$ liegt, jeweils ermittelt werden oder ermittelbar sind und Wertepaarpunkte innerhalb dieser Grenzen, insbesondere solche, die einen geringen Abstand zueinander aufweisen, mittels Bildung von Clustern zusammengefasst werden oder zusammenfassbar sind und jeweils einem Unterbereich i (r/sd-Klasse) mit Bereichsgrenzen, innerhalb derer die Wertepaare eines Clusters vorliegen, zugeordnet werden oder zuordbar sind.

**30.** Verfahren zur Optimierung der Auslastung und/oder zur Maximierung des Erlöses eines Frachtraumes eines Frachttransportes, insbesondere nach einem der Ansprüche 25 bis 29, **dadurch gekennzeichnet, dass**

- für einen Frachttransport prognostizierte Transportmengen m in Bezug auf ihr Volumen $V_m$, insbesondere in der Mengeneinheit $m^3$, ihr Gewicht $W_m$, insbesondere in der Mengeneinheit t, und ihren Nachfragepreis $r_m$, ausgedrückt als Preis des abrechenbaren Gewichts cw, vorzugsweise in abrechenbaren kg, sowie ihr Volumengewicht $d_m$ und ihr skaliertes Volumengewicht $sd_m$ definiert wird oder definierbar ist,
- das Volumengewicht $d_m$ der Frachtmengen m bestimmt wird oder bestimmbar ist, wobei,

  - falls das Gewicht $W_m$ Frachteinheit m > 0 und das Volumen $V_m$ der Frachteinheit m $\geq$ 0, dann

das Volumengewicht $d_m = (V_m/W_m)$ ist,

- falls das Gewicht $W_m$ der Frachteinheit m = 0 und das Volumen $V_m$ der Frachteinheit m > 0, dann das Volumengewicht $d_m = \infty$ ist, und
- falls das Gewicht $W_m$ der Frachteinheit m = 0 und das Volumen $V_m$ der Frachteinheit m = 0, dann das Volumengewicht $d_m$ unbestimmt ist, und man
- ausgehend von dem ermittelten Volumengewicht $d_m$ das skalierte Volumengewicht $sd_m$ bestimmt, wobei,

  - falls $d_m = 0$, dann $sd_m = 0$ ist,
  - falls $0 < d_m \leq ds$, dann $sd_m = d_m/2ds$ ist,
  - falls $ds < d_m < \infty$, dann $sd_m = 1 - ds/2d_m$ ist, und
  - falls $d_m = \infty$, dann $sd_m = 1$ ist,

- wobei ds ein gegebenes Standard-Volumengewicht ist, das insbesondere dem Standard-Volumengewicht $ds_{IATA}$ der IATA entspricht;

- ein zweidimensionaler Bereich, umfassend zwei sich schneidende Koordinatenachsen, definiert wird oder definierbar ist, dessen erste Dimension unmittelbar oder mittelbar den in Frachtgutbuchungsnachfragen nachfragbaren Bereich des skalierten Volumengewichts sd und dessen zweite Dimension die Nachfragerate r, definiert als Preis des abrechenbaren Gewichts cw, wiedergibt, wobei das abrechenbare bzw. Abrechnungsgewicht cw, vorzugsweise in abrechenbaren kg, wie folgt definiert ist:

  - falls das Gewicht $W_m = 0$ und das Volumen $V_m = 0$, dann ist cw = 0,
  - falls $0 \leq d_m \leq ds$, dann ist cw = $W_m \times 1000$ und
  - falls $ds < d_m \leq \infty$, dann ist cw = $V_m \times 1000/ds$, und

- den Wertepaaren, gebildet aus dem skalierten Volumengewicht $sd_m$ einer prognostizierten Frachteinheit m und deren prognostizierter Nachfragerate $r_m$, in dem zweidimensionalen Bereich des durch die Koordinatenachsen gebildeten Koordinatensystems jeweils einen korrespondierenden Wertepaarpunkt zugewiesen wird oder zuweisbar ist und die Abstände zwischen Wertepaarpunkten, deren zugehöriges skaliertes Volumengewicht $sd_m$ in dem Bereich $0 < sd_m \leq 0,5$ liegt, sowie die Abstände zwischen Wertepaarpunkten, deren zugehöriges skaliertes Volumengewicht $sd_m$ in dem Bereich $0,5 < sd_n \leq 1$ liegt, jeweils ermittelt werden oder ermittelbar sind und Wertepaarpunkte innerhalb dieser Grenzen, insbesondere solche die einen geringen Abstand zueinander aufweisen, mittels Bildung von Clustern zusammengefasst werden oder zusammenfassbar sind und jeweils einem Unterbereich i (r/sd-Klasse) mit Bereichsgrenzen, innerhalb derer die Wertepaare eines Clusters vorliegen, zugeordnet werden oder zuordbar sind.

31. System zur Optimierung der Auslastung und/oder der Maximierung des Erlöses eines Frachtraumes eines Frachttransportes, insbesondere nach einem der Ansprüche 25 bis 30, **dadurch gekennzeichnet, dass**

- ein zweidimensionaler Bereich, umfassend zwei sich schneidende Koordinatenachsen, definiert wird oder definierbar ist, dessen erste Dimension unmittelbar oder mittelbar den in Frachtgutbuchungsnachfragen nachfragbaren Bereich des skalierten Volumengewichts sd und dessen zweite Dimension die Rate r, ausgedrückt als Preis des abrechenbaren Gewichts cw, wiedergibt;
- benachbarte Unterbereiche i mit gemeinsamen Grenzabschnitten in dem zweidimensionalen Bereich gebildet werden oder bildbar sind, die vorzugsweise eine durchgehende Fläche bilden, welche entlang zweier Seiten von den sich schneidenden Koordinatenachsen begrenzt wird, wobei die Unterbereiche i hinsichtlich ihrer Werte für das skalierte Volumengewicht sd in dem Bereich $0 < sd \leq 0,5$ oder in dem Bereich $0,5 < sd \leq 1$ liegen, und
- den Unterbereichen i jeweils einen erwarteten Gesamtwert $D_i$ an abrechenbarem Gewicht cw, vorzugsweise in abrechenbaren kg, zugewiesen wird oder zuweisbar ist, der sich aus der Summe der erwarteten Einzelfrachttransportnachfragen ergibt, deren zugehörige Wertepaare, gebildet aus der Rate r pro abrechenbarem Gewicht cw und dem skalierten Volumengewicht sd, einem Unterbereich zuordbar sind.

32. Verfahren zur Optimierung der Auslastung und/oder der Maximierung des Erlöses eines Frachtraumes eines Frachttransportes, insbesondere nach einem der Ansprüche 25 bis 31, **dadurch gekennzeichnet, dass**

- eine eingehende Transportnachfrage für eine Frachteinheit n angenommen wird oder annehmbar ist, wenn die zu erwartende Rate $r_n$ größer ist als der mit der Akzeptanzentscheidung, insbesondere voraussichtlich,

einhergehende entgangene Gewinn $bp_n$, d.h. der Bid-Preis, sofern die maximale Kapazität an Frachtvolumen $V_{max}$ bzw. die Restvolumenkapazität $V_{Rest}$ und die maximale Kapazität an Frachtgewicht $W_{max}$ bzw. die Restgewichtskapazität $W_{Rest}$ mit der Annahme der Frachtbuchungsnachfrage nicht überschritten werden, und ansonsten ablehnt wird oder ablehnbar ist, wobei der entgangene Gewinn $bp_n$ ermittelt bzw. abgeschätzt wird über die Gleichung

$$bp_n = w_n \times bpw + v_n \times pbv, \text{ wobei}$$

$bp_n$ für den Bidpreis einer Einheit eines abrechenbaren Gewichts cw, insbesondere eines abrechenbaren kg, der angefragten Frachteinheit bzw. -menge, bpw für den Preis einer Einheit eines abrechenbaren Gewichts cw, insbesondere eines abrechenbaren kg, die bzw. das vorzugsweise lediglich aus Gewicht besteht, d.h. ein Volumengewicht von $d = 0$ aufweist, bpv für den Preis einer Einheit eines abrechenbaren Gewichts cw, insbesondere eines abrechenbaren kg, die bzw. das vorzugsweise lediglich aus Volumen besteht, d.h. ein Volumengewicht von $d = \infty$ aufweist, $w_n$ für den spezifischen Gewichtsverbrauch und $v_n$ für den spezifischen Volumenverbrauch stehen, wobei der spezifische Gewichts- bzw. der spezifische Volumenverbrauch wie folgt definiert sind:

- falls $0 \leq d_n \leq ds$, dann ist $w_n = 1$ und $v_n = d_n/ds$,
- falls $ds < d_n < \infty$, dann ist $w_n = ds/d_n$ und $v_n = 1$,
- falls $d_n = \infty$, dann ist $w_n = 0$ und $v_n = 1$ und
  wobei $d_n$ das Volumengewicht einer Frachteinheit- bzw. -menge und ds das Standard-Volumengewicht wiedergeben, und wobei die bpw und bpv ermittelt werden durch Lösen des folgenden Problems, insbesondere mittels Linearen Programmierens:

Minimiere

$$R_F = W_{Rest} \times bpw + V_{Rest} \times bpv + \sum_i D_i \times p_i$$

bezüglich
$w_i \times bpw + v_i \times bpv + p_i \geq r_i$, für alle (i)
$bpv, bpw, p_i \geq 0$, für alle (i)
wobei $R_F$ den Erlös, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von $d = 0$ aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von $d = \infty$ aufweist, $D_i$ die prognostizierte Nachfrage der Prognosedomäne bzw. des Unterbereichs (r/sd-Klasse) i, ausgedrückt in abrechenbarem Gewicht cw, insbesondere abrechenbaren kg, und $p_i$ die Profitabilität der Prognosedomäne i, ausgedrückt in Währungseinheit pro abrechenbarem Gewicht cw, insbesondere abrechenbaren kg, und $r_i$, ausgedrückt als Preis, vorzugsweise in einer offiziell anerkannten Währungseinheit, pro abrechenbaren Gewicht cw, insbesondere abrechenbaren kg, die Rate der Prognosedomäne i spezifizieren, und wobei
die Gewichts- und Volumenkoeffizienten $w_i$ und $v_i$ wie folgt definiert sind:

- falls $0 \leq d_i \leq ds$, dann ist $w_i = 1$ und $v_i = d_i/ds$,
- falls $ds < d_i < \infty$, dann ist $w_i = ds/d_i$ und $v_i = 1$,
- falls $d_i = \infty$, dann ist $w_i = 0$ und $v_i = 1$ und wobei

$d_i$ einen Volumengewichtswert aus der Domäne i, insbesondere einen Mittelwert oder gewichteten Mittelwert, darstellt.

**33.** System nach Anspruch 32, **dadurch gekennzeichnet, dass**
der Bid-Preis bp als Funktion des skalierten Volumengewichts wie folgt dargestellt wird:

- falls $0 \leq sd \leq 0,5$, dann ist $bp = bpw + 2\ sd \times bpv$,

- falls 0,5 < sd < 1, dann ist bp = 2(1- sd)bpw + bpv,
- falls sd = 1, dann ist bp = bpv,

wobei bp den Bid-Preis, ausgedrückt in Einheiten einer Währung pro abrechenbarem Gewicht, bpw den Preis einer Einheit eines abrechenbaren Gewichts cw, ausgedrückt in Einheiten einer Währung pro abrechenbarem Gewicht, das lediglich aus Gewicht besteht, und bpv den Preis einer Einheit eines abrechenbaren Gewichts cw, ausgedrückt in Einheiten einer Währung pro abrechenbarem Gewicht, das lediglich aus Volumen besteht, sd das skalierte Volumengewicht und ds das Standard-Volumengewicht spezifizieren.

**34.** System nach Anspruch 32 oder 33, **dadurch gekennzeichnet, dass**

der Ertrag $R_F$ eines Transportes oder Frachtfluges mit Hilfe der Linearen Optimierung wie folgt maximiert wird:

Maximiere

$$R_F = \sum_i r_i \, x_i$$

bezüglich

$$\sum_i w_i \, x_i \leq W_{Rest}$$

$$\sum_i v_i \, x_i \leq V_{Rest}$$

$x_i \leq D_i$, für alle (i) und
$X_i \geq 0$, für alle (i),

wobei der Index i die Prognosedomäne bzw. den Unterbereich (r/sd-Klasse), $x_i$ die zu akzeptierende Nachfrage der Prognosedomäne i, ausgedrückt in abrechenbarem Gewicht cw, $D_i$ die prognostizierte Nachfrage der Prognosedomäne i, ausgedrückt in abrechenbarem Gewicht cw, $w_i$ den Gewichtskoeffizienten der Prognosedomäne i, $v_i$ den Volumenkoeffizienten der Prognosedomäne i, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, und $r_i$ die Rate der Prognosedomäne i, insbesondere in Form eines Mittelwerts oder eines gewichteten Mittelwerts, ausgedrückt als Preis, vorzugsweise in einer offiziell anerkannten Währungseinheit, pro abrechenbaren Gewicht cw, insbesondere abrechenbaren kg, spezifizieren, und wobei
die Gewichts- und Volumenkoeffizienten $w_i$ und $v_i$ wie folgt definiert sind:

- falls $0 \leq d_i \leq ds$, dann ist $w_i = 1$ und $v_i = d_i/ds$,
- falls $ds < d_i < \infty$, dann ist $w_i = ds/d_i$ und $v_i = 1$,
- falls $d_i = \infty$, dann ist w; = 0 und $v_i = 1$ und wobei

$d_i$ einen Volumengewichtswert aus der Domäne i, insbesondere einen Mittelwert oder gewichteten Mittelwert, darstellt.

**35.** System zur Optimierung der Auslastung und/oder der Maximierung des Erlöses eines Frachtraumes eines Frachttransportes, insbesondere nach einem der Ansprüche 32 bis 34, **dadurch gekennzeichnet, dass**
der Ertrag $R_F$ und/oder die voraussichtlich ungenutzt bleibende Kapazität, insbesondere die voraussichtlich ungenutzt bleibende Gewichts- und/oder Volumenkapazität, eines Legs für einen Transport oder Frachtflug mit Hilfe der Linearen Optimierung wie folgt bestimmt wird bzw. werden:

Maximiere

$$R_F = \sum_i r_i \, x_i$$

bezüglich

$$\sum_i w_i \, x_i + sw = W_{Rest,}$$

$$\sum_i v_i \, x_i + sv = V_{Rest,}$$

$x_i + s_i = D;$, für alle (i) und
$s_i$, sv, sw, $x_i \geq 0$, für alle (i),

wobei $R_F$ den Erlös über einen Leg eines Transportes, insbesondere Flugs, der Index i die Prognosedomäne bzw. den Unterbereich (r/sd-Klasse), $x_i$ die zu akzeptierende Nachfrage der Prognosedomäne i, ausgedrückt in abrechenbarem Gewicht cw, $D_i$ die prognostizierte Nachfrage der Prognosedomäne i, ausgedrückt in abrechenbarem Gewicht cw, $w_i$ den Gewichtskoeffizienten der Prognosedomäne i, $v_i$ den Volumenkoeffizienten der Prognosedomäne i, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d. h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, sowie $s_i$, sv und sw die Schlupfvariablen für die Nachfrage der Prognosedomäne i, des Volumens, insbesondere in Form eines abrechenbaren Gewichts, insbesondere eines abrechenbaren kg, die bzw. das vorzugsweise lediglich aus Volumen besteht, d.h. ein Volumengewicht von d = ∞ aufweist, bzw. des Gewichts, insbesondere in Form eines abrechenbaren Gewichts cw, insbesondere eines abrechenbaren kg, die bzw. das vorzugsweise lediglich aus Gewicht besteht, d.h. ein Volumengewicht von d = 0 aufweist, und $r_i$ die Rate der Prognosedomäne i, insbesondere in Form eines Mittelwerts oder eines gewichteten Mittelwerts, ausgedrückt als Preis, vorzugsweise in einer offiziell anerkannten Währungseinheit, pro abrechenbaren Gewicht cw, insbesondere eines abrechenbaren kg, spezifizieren, und wobei
die Gewichts- und Volumenkoeffizienten $w_i$ und $v_i$ wie folgt definiert sind:

- falls $0 \leq d_i \leq ds$, dann ist $w_i = 1$ und $v_i = d_i/ds$,
- falls $ds < d; < \infty$, dann ist $w; = ds/d_i$ und $v_i = 1$,
- falls $d_i = \infty$, dann ist $w_i = 0$ und $v_i = 1$ und wobei

d; einen Volumengewichtswert aus der Domäne i, insbesondere einen Mittelwert oder gewichteten Mittelwert, darstellt.

**36.** System nach Anspruch 35, **dadurch gekennzeichnet, dass**
die erwartete Nachfrage nach Transportleistungen einer bestimmten Raten/Volumengewichtsklasse i durch D; wiedergegeben wird und dass die der Raten/Volumengewichtsklasse i entsprechende Rate $r_i$ und das entsprechende Volumengewicht $d_i$ betragen.

**37.** System zur Optimierung der Auslastung und/oder der Maximierung des Erlöses eines Frachtraumes eines Frachttransportes, insbesondere nach einem der Ansprüche 25 bis 36, **dadurch gekennzeichnet, dass**
der Ertrag $R_F$ für ein Leg eines Transportes oder Frachtfluges und/oder der Bid-Preis bpw für eine Einheit eines abrechenbaren Gewichts cw, das lediglich aus Gewicht besteht, und/oder der Bid-Preis bpv für eine Einheit eines abrechenbaren Gewichts cw, das lediglich aus Volumen besteht, mit Hilfe der Linearen Optimierung wie folgt bestimmt wird:

Minimiere

$$R_F = W_{Rest} \times bpw + V_{Rest} \times bpv + \sum_i D_i \times p_i$$

bezüglich

$w_i \times bpw + v_i \times bpv + p_i \geq r_i$, für alle (i)

$bpv, bpw, p_i \geq 0$, für alle (i)

wobei $R_F$ den Erlös, $W_{Rest}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{Rest}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, bpw den Preis einer Einheit eines abrechenbaren Gewichts cw, das lediglich aus Gewicht besteht, und bpv den Preis einer Einheit eines abrechenbaren Gewichts cw, das lediglich aus Volumen besteht, $D_i$ die prognostizierte Nachfrage der Prognosedomäne bzw. des Unterbereichs (r/sd-Klasse) i, ausgedrückt in abrechenbarem Gewicht cw, insbesondere abrechenbaren kg, $w_i$ den Gewichtskoeffizienten für die Prognosedomäne i, $v_i$ den Volumenkoeffizienten für die Prognosedomäne i sowie $p_i$ die Profitabilität der Prognosedomäne i, ausgedrückt in Währungseinheit pro abrechenbarem Gewicht cw, insbesondere abrechenbaren kg, und $r_i$, ausgedrückt als Preis, vorzugsweise in einer offiziell anerkannten Währungseinheit, pro abrechenbaren Gewicht cw, insbesondere abrechenbaren kg, die Rate der Prognosedomäne i spezifizieren, wobei die Gewichts- und Volumenkoeffizienten $w_i$ und $v_i$ wie folgt definiert sind:

- falls $0 \leq d_i \leq ds$, dann ist $w_i = 1$ und $v; = d_i/ds$,
- falls $ds < d_i < \infty$, dann ist $w_i = ds/d_i$ und $v_i = 1$,
- falls $d_i = \infty$, dann ist $w; = 0$ und $v_i = 1$ und wobei

$d_i$ einen Volumengewichtswert aus der Domäne i, insbesondere einen Mittelwert oder gewichteten Mittelwert, darstellt.

**38.** System zur Optimierung der Auslastung und/oder der Maximierung des Erlöses eines Frachtraumes eines Frachttransportes, insbesondere nach einem der Ansprüche 32 bis 37, **dadurch gekennzeichnet, dass** der Ertrag $R_F$ und/oder die voraussichtlich ungenutzt bleibende Kapazität, insbesondere die voraussichtlich ungenutzt bleibende Gewichts- und/oder Volumenkapazität, für einen Transport oder Frachtflug mit mindestens einem Segment durch Lösung des nachfolgenden Problems mit Hilfe der Linearen Optimierung bestimmt wird bzw. werden:

Maximiere

$$R_F = \sum_i \sum_j r_{ij}\, x_{ij}$$

bezüglich

$$\sum_i \sum_j a_{kj}\, w_{ij}\, x_{ij} + sw_k = W_{k\text{-Rest}}, \text{ für alle k}$$

$$\sum_i \sum_j a_{kj}\, v_{ij}\, x_{ij} + sv_k = V_{k\text{-Rest}}, \text{ für alle k}$$

$x_{ij} + s_{ij} = D_{ij}$, für alle (i, j) und

$s_{ij}, sv_k, sw_k, x_{ij} \geq 0$, für alle (i, j) und k,

wobei $R_F$ den Erlös über einen Flug, der Index k das Leg eines Transportes, insbesondere Fluges, j das Segment eines Transportes, i die Prognosedomäne bzw. den Unterbereich (r/d-Klasse) eines Segments, $x_{ij}$ die zu akzeptierende Nachfrage für die Prognosedomäne i des Segments j, ausgedrückt in abrechenbarem Gewicht cw, insbesondere abrechenbaren kg, $D_{ij}$ die prognostizierte Nachfrage der Prognosedomäne i des Segments j, ausgedrückt in abrechenbarem Gewicht cw, insbesondere abrechenbaren kg, $a_{kj}$ den Indexkoeffizienten des Legs k auf dem Segment j darstellt, wobei $a_{kj}$ = 0, wenn das Leg k nicht Bestandteil des Segments j ist und wobei $a_{kj}$ = 1, wenn das Leg k Bestandteil des Segments j ist, $w_{ij}$ den Gewichtskoeffizienten für die Prognosedomäne i des Segments j, $v_{ij}$ den Volumenkoeffizienten für die Prognosedomäne i, $W_{k\text{-Rest}}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, des Legs k und $V_{k\text{-Rest}}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, des Legs k sowie $s_{ij}$, $sv_k$ und $sw_k$ die Schlupfvariablen für die Nachfrage der Prognosedomäne i auf dem Segment j, des Volumen des Legs k, insbesondere in Form eines abrechenbaren Gewichts cw, insbesondere eines abrechenbaren kg, die bzw. das vorzugsweise lediglich aus Volumen besteht, d.h. ein Volumengewicht von d = ∞ aufweist, bzw. des Gewichts des Legs k, insbesondere in Form eines abrechenbaren Gewichts cw, insbesondere eines abrechenbaren kg, die bzw. das vorzugsweise lediglich aus Gewicht besteht, d.h. ein Volumengewicht von d = 0 aufweist, spezifizieren und $r_{ij}$ die Rate der Prognosedomäne i des Segments j, ausgedrückt als Preis, vorzugsweise in einer offiziell anerkannten Währungseinheit, pro abrechenbaren Gewicht cw, insbesondere abrechenbaren kg, spezifizieren, wobei
die Gewichts- und Volumenkoeffizienten $w_{ij}$ und $v_{ij}$ wie folgt definiert sind:

- falls $0 \le d_{ij} \le ds$, dann ist $w_{ij}$ = 1 und $v_{ij}$ = $d_{ij}/ds$,
- falls $ds < d_{ij} < \infty$, dann ist $w_{ij}$ = $ds/d_{ij}$ und $v_{ij}$ = 1,
- falls $d_{ij} = \infty$, dann ist $w_{ij}$ = 0 und $v_{ij}$ = 1 und wobei
  $d_{ij}$ einen Volumengewichtswert aus der Domäne i des Segments j, insbesondere einen Mittelwert oder gewichteten Mittelwert, darstellt.

**39.** System zur Optimierung der Auslastung und/oder der Maximierung des Erlöses eines Frachtraumes eines Frachttransportes, insbesondere nach einem der Ansprüche 25 bis 38, **dadurch gekennzeichnet, dass**
der Ertrag $R_F$ und/oder der Bid-Preis, insbesondere der volumenspezifische Bid-Preis bpv und/oder der gewichtsspezifische Bid-Preis bpw, für einen Transport oder Frachtflug mit mindestens einem Segment mit Hilfe der Linearen Optimierung wie folgt bestimmt wird:

Minimiere

$$R_F = \sum_k W_{k\text{-Rest}} \times bpw_k + \sum_k V_{k\text{-Rest}} \times bpv_k + \sum_i \sum_j D_{ij} \times p_{ij}$$

bezüglich
$\Sigma\, a_{kj}\, w_{ij} \times bpw_k + \Sigma\, a_{kj}\, v_{ij} \times bpv_k + p_{ij} \ge r_{ij}$, für alle (i,j)
$bpv_k, bpw_k, p_{ij}, u_{ij} \ge 0$, für alle (i, j) und k,

wobei $R_F$ den Erlös über einen Flug, $W_{k\text{-Rest}}$ die noch verfügbare Gewichtskapazität des Legs k, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, $V_{k\text{-Rest}}$ die noch verfügbare Volumenkapazität des Legs k, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, $bpw_k$ den Bid-Preis der Gewichtskapazität des Legs k, $bpv_k$ den Bid-Preis der Volumenkapazität des Legs k, $D_{ij}$ die prognostizierte Nachfrage der Prognosedomäne bzw. des Unterbereichs (r/d-Klasse) i des Segments j, ausgedrückt in abrechenbarem Gewicht cw, insbesondere abrechenbaren kg, $w_{ij}$ den Gewichtskoeffizienten für die Prognosedomäne i des Segments j, $v_{ij}$ den Volumenkoeffizienten für die Prognosedomäne i des Segments j, $a_{kj}$ den Indexkoeffizienten des Legs k auf dem Segment j darstellt, wobei $a_{kj}$ = 0, wenn das Leg k nicht Bestandteil des Segments j ist und wobei $a_{kj}$ = 1, wenn das Leg k Bestandteil des Segments j ist, sowie $p_{ij}$ die Profitabilität der Prognosedomäne i des Segments j, ausgedrückt in abrechenbarem Gewicht cw, insbesondere abrechenbaren kg, und $r_{ij}$ die Rate der Prognosedomäne i des Segments j, ausgedrückt als Preis, vorzugsweise in einer offiziell anerkannten Währungseinheit, pro abrechenbaren Gewicht cw, insbesondere abrechenbaren kg, spezifizieren, wobei
die Gewichts- und Volumenkoeffizienten $w_{ij}$ und $v_{ij}$ wie folgt definiert sind:

- falls $0 \le d_{ij} \le ds$, dann ist $w_{ij}$ = 1 und $v_{ij}$ = $d_{ij}/ds$,

- falls ds < $d_{ij}$ < ∞, dann ist $w_{ij}$ ds/$d_{ij}$ und $v_{ij}$ = 1,
- falls $d_{ij}$ = ∞, dann ist $w_{ij}$ = 0 und $v_{ij}$ = 1 und wobei

$d_{ij}$ einen Volumengewichtswert aus der Domäne i des Segments j, insbesondere einen Mittelwert oder gewichteten Mittelwert, darstellt.

**40.** System zur Optimierung der Auslastung und/oder der Maximierung des Erlöses eines Frachtraumes eines aus mindestens einem Segment j mit mindestens einem Leg k bestehenden Frachtguttransportes, insbesondere nach einem der Ansprüche 25 bis 39, durch Ermittlung der freien Kapazität für einen Frachttransport, bezogen auf das Volumengewicht einer Frachteinheit, **dadurch gekennzeichnet, dass**

a) für eingehende Buchungsanfragen für Frachteinheiten n mit der Rate $r_n$, dem Volumen $V_n$, vorzugsweise in [m$^3$], dem Gewicht $W_n$, vorzugsweise in [t], und dem Volumengewicht $d_n$ zunächst die freie Kapazität $fc_j$ eines Segments j in Abhängigkeit von dem Volumengewicht $d_n$ ermittelt wird über:

- falls 0 < $sw_j$ ≤ $sv_j$ und 0 ≤ $d_n$ ≤ ds ist, dann ist $fc_j$ = $sw_j$,
- falls 0 < $sw_j$ ≤ $sv_j$ und ds < $d_n$ ≤ ds × ($sv_j$/$sw_j$) ist, dann ist $fc_j$ = (d/ds) × $sw_j$,
- falls 0 < $sw_j$ ≤ $sv_j$ und ds × ($sv_j$/$sw_j$) < $d_n$ › ∞ ist, dann ist $fc_j$ = $sv_j$,
- falls $sw_j$ > $sv_j$ > 0 und 0 ≤ $d_n$ ≤ ds × ($sv_j$/$sw_j$) ist, dann ist $fc_j$ = $sw_j$,
- falls $sw_j$ > $sv_j$ > 0 und ds × ($sv_j$/$sw_j$) < $d_n$ ≤ ds ist, dann ist $fc_j$ = (ds/$d_n$) × $sv_j$,
- falls $sw_j$ > $sv_j$ > 0 und ds < $d_n$ ≤ ∞ ist, dann ist $fc_j$ = $sv_j$,
- falls $sw_j$ = 0 und $sv_j$ > 0 und 0 ≤ $d_n$ < ∞ ist, dann ist $fc_j$ = 0,
- falls $sw_j$ = 0 und $sv_j$ > 0 und $d_n$ = ∞ ist, dann ist $fc_j$ = $sv_j$,
- falls $sw_j$ > 0 und $sv_j$ = 0 und $d_n$ = 0 ist, dann ist $fc_j$ = $sw_j$,
- falls $sw_j$ > 0 und $sv_j$ = 0 und 0 < $d_n$ ≤ ∞ ist, dann ist $fc_j$ = 0, und
- falls $sw_j$ = 0 und $sv_j$ = 0 ist, dann ist $fc_j$ = 0,
  wobei die vorangehenden Parameter die folgende Bedeutung haben:

$sw_j$ die erwartungsgemäß ungenutzte Gewichtskapazität eines Segments j, ausgedrückt in abrechenbarem Gewicht cw, insbesondere abrechenbaren kg mit dem Volumengewicht d = 0, wobei $sw_j$ definiert ist als Min {$sw_k$, für alle k, für die gilt $ak_j$ = 1},
$sv_j$ die erwartungsgemäß ungenutzte Volumenkapazität eines Segments j, ausgedrückt in abrechenbarem Gewicht cw, insbesondere abrechenbaren kg mit dem Volumengewicht d = ∞, wobei $sv_j$ definiert ist als Min {$sv_k$, für alle k, für die gilt $ak_j$ = 1}, wobei
$ak_j$ = 1, wenn das Leg k in dem Segment j enthalten ist und wobei
$ak_j$ = 0, wenn das Leg k nicht in dem Segment j enthalten ist, und wobei
$cw_n$ das abrechenbare Gewicht cw der Buchungsanfrage n, ausgedrückt in abrechenbaren kg, darstellt,
$fc_j$ die frei verfügbare Kapazität mit dem Volumengewicht $d_n$, ausgedrückt in abrechenbarem Gewicht cw, insbesondere abrechenbaren kg, und
d das Volumengewicht, vorzugsweise in m$^3$/t,
$d_n$ das Volumengewicht einer Frachteinheit n, vorzugsweise in m$^3$/t, das wie folgt bestimmt wird:

- falls das Gewicht $W_n$ der Frachteinheit n > 0 und das Volumen $V_n$ der Frachteinheit n ≥ 0, dann ist das Volumengewicht $d_n$ = ($V_n$/$W_n$),
- falls das Gewicht $W_n$ der Frachteinheit = 0 und das Volumen $V_n$ der Frachteinheit > 0, dann ist das Volumengewicht $d_n$ = ∞, und
- falls das Gewicht $W_n$ der Frachteinheit = 0 und das Volumen $V_n$ der Frachteinheit = 0, dann ist das Volumengewicht $d_n$ unbestimmt,

ds das Standard-Volumengewicht darstellt;

b) das abrechenbare Gewicht $cw_n$ der Buchungsanfrage n ermittelt wird gemäß:

- falls das Gewicht $W_n$ in t gleich 0 und das Volumen $V_n$ in m$^3$ gleich 0 ist, dann ist $cw_n$ = 0,
- falls 0 ≤ $d_n$ ≤ ds, dann ist $cw_n$ = $W_n$ × 1000 und
- falls ds < $d_n$ ≤ ∞, dann ist $cw_n$ = $V_n$ × 1000/ds; und

c) falls das abrechenbare Gewicht $cw_n \leq fc_j$, die Buchungsanfrage bestätigt und, falls das abrechenbare Gewicht $cw_n > fc_j$, die Buchungsanfrage bestätigt, wenn für die Buchungsanfrage einer Frachteinheit n der Bid-Preis $bp_n \leq r_n$ und wenn $V_n \leq V_{Rest}$ und $W_n \leq W_{Rest}$, und ansonsten die Buchungsanfrage ablehnt.

**41.** Verfahren nach Anspruch 40, **dadurch gekennzeichnet, dass**
der Bid-Preis $bp_j$ ermittelt wird über die Gleichung

$$bp_j = w_n \times bpw_j + v_n \times bpv_j, \text{ wobei}$$

$bp_j$ für den Bidpreis einer Einheit eines abrechenbaren Gewichts cw, insbesondere eines abrechenbaren kg, der angefragten Frachteinheit bzw. -mengen für ein Segment j bei einem Volumengewicht $d_n$, $bpw_j$ für den Gewichtskapazitätszugangspreis des Segments j, ausgedrückt in Preis pro abrechenbarem Gewicht cw, insbesondere pro abrechenbaren kg mit dem Volumengewicht $d_n = 0$, $bpv_j$ für den Volumenskapazitätszugangspreis des Segments j, ausgedrückt in Preis pro abrechenbarem Gewicht cw, insbesondere pro abrechenbaren kg mit dem Volumengewicht $d_n = \infty$ stehen,
wobei $bpw_j$ definiert ist als die Summe der Gewichts-Bid-Preise von allen Legs k, die auf dem Segment j liegen, d.h. $bpw_j = \Sigma_k a_{kj} \times bpw_k$, und wobei $bpv_j$ definiert ist als die Summe der Volumen-Bid-Preise von allen Legs k, die auf dem Segment j liegen, d.h. $bpv_j = \Sigma_k a_{kj} \times bpv_k$, wobei $ak_j = 1$, wenn das Leg k in dem Segment j enthalten ist und wobei $ak_j = 0$, wenn das Leg k nicht in dem Segment j enthalten ist, und wobei $W_n$ für den spezifischen Gewichtsverbrauch und $V_n$ für den spezifischen Volumenverbrauch stehen, wobei der spezifische Gewichts- bzw. der spezifische Volumenverbrauch wie folgt definiert sind:

- falls $0 \leq d_n \leq ds$, dann ist $W_n = 1$ und $V_n = d_n/ds$,
- falls $ds < d_n < \infty$, dann ist $W_n = ds/d_n$ und $V_n = 1$,
- falls $d_n = \infty$, dann ist $W_n = 0$ und $V_n = 1$ und

wobei $d_n$ das Volumengewicht einer Frachteinheit- bzw. -menge und ds das Standard-Volumengewicht wiedergeben, und wobei die $bpw_k$ und $bpv_k$ ermittelt werden durch Lösen des folgenden Problems, insbesondere mittels Linearen Programmierens:

Minimiere

$$R_F = \sum_k W_{k\text{-Rest}} \times bpw_k + \sum_k V_{k\text{-Rest}} \times bpv_k + \sum_i \sum_j D_{ij} \times p_{ij}$$

bezüglich
$\Delta a_{kj} w_{ij} \times bpw_k + \Sigma a_{kj} v_{ij} \times bpv_k + p_{ij} \geq r_{ij}$, für alle (i, j)
$bpv_k, bpw_k, p_{ij} \geq 0$, für alle (i, j) und k,

wobei $R_F$ den Erlös über einen Flug, $W_{k\text{-Rest}}$ die noch verfügbare Gewichtskapazität des Legs k, ausgedrückt in abrechenbarem Gewicht cw, insbesondere abrechenbaren kg, die bzw. das vorzugsweise lediglich aus Gewicht besteht, d.h. ein Volumengewicht von $d = 0$ aufweist, $V_{k\text{-Rest}}$ die noch verfügbare Volumenkapazität des Legs k, ausgedrückt in abrechenbarem Gewicht cw, insbesondere abrechenbaren kg, die bzw. das vorzugsweise lediglich aus Volumen besteht, d.h. ein Volumengewicht von $d = \infty$ aufweist, $bpw_k$ den Bid-Preis der Gewichtskapazität des Legs k, $bpv_k$ den Bid-Preis der Volumenkapazität des Legs k, $D_{ij}$ die prognostizierte Nachfrage der Prognosedomäne bzw. des Unterbereichs (r/d-Klasse) i des Segments j, ausgedrückt in abrechenbarem Gewicht cw, insbesondere abrechenbaren kg, $w_{ij}$ den Gewichtskoeffizienten für die Prognosedomäne i des Segments j, $v_{ij}$ den Volumenkoeffizienten für die Prognosedomäne i des Segments j, $a_{kj}$ den Indexkoeffizienten des Legs k auf dem Segment j darstellt, wobei $a_{kj} = 0$, wenn das Leg k nicht Bestandteil des Segments j ist und wobei $a_{kj} = 1$, wenn das Leg k Bestandteil des Segments j ist, sowie $p_{ij}$ die Profitabilität der Prognosedomäne i des Segments j, ausgedrückt in abrechenbarem Gewicht cw, insbesondere abrechenbaren kg, und $r_{ij}$, insbesondere in Form eines Mittelwerts oder gewichteten Mittelwerts, die Rate der Prognosedomäne i des Segments j, ausgedrückt als Preis, vorzugsweise in einer offiziell anerkannten Währungseinheit, pro abrechenbaren Gewicht cw, insbesondere abrechenbaren kg, spezifizieren, wobei die Gewichts- und Volumenkoeffizienten $w_{ij}$ und $v_{ij}$ wie folgt definiert sind:

- falls $0 \leq d_{ij} \leq ds$, dann ist $w_{ij} = 1$ und $v_{ij} = d_{ij}/ds$,

- falls ds < $d_{ij}$ < ∞, dann ist $w_{ij}$ ds/$d_{ij}$ und $v_{ij}$ = 1,
- falls $d_{ij}$ = ∞, dann ist $w_{ij}$ = 0 und $v_{ij}$ = 1 und wobei

  $d_{ij}$ einen Volumengewichtswert aus der Domäne i des Segments j, insbesondere einen Mittelwert oder gewichteten Mittelwert, darstellt.

**42.** Verfahren nach Anspruch 40 oder 41, **dadurch gekennzeichnet, dass**

die erwartungsgemäß ungenutzte Gewichtskapazität $sw_j$ eines Segments j, ausgedrückt in abrechenbarem Gewicht cw, insbesondere abrechenbaren kg mit dem Volumengewicht d = 0, und die erwartungsgemäß ungenutzte Volumenkapazität $sv_j$ eines Segments j, ausgedrückt in abrechenbarem Gewicht cw, insbesondere abrechenbaren kg mit dem Volumengewicht d = ∞, ermittelt werden über Min {$sw_k$, für alle k, für die gilt $ak_j$ = 1} und Min {$sv_k$, für alle k, für die gilt $ak_j$ = 1} und wobei die Werte für $sw_k$ und $sv_k$ durch Lösung des nachfolgenden Problems mit Hilfe der Linearen Optimierung bestimmt werden:

Maximiere

$$R_F = \sum_i \sum_j r_{ij} \, x_{ij}$$

bezüglich

$$\sum_i \sum_j a_{kj} \, w_{ij} \, x_{ij} + sw_k = W_{k\text{-Rest}}, \text{ für alle } k$$

$$\sum_i \sum_j a_{kj} \, v_{ij} \, x_{ij} + sv_k = V_{k\text{-Rest}}, \text{ für alle } k$$

$x_{ij} + s_{ij} = D_{ij}$, für alle (i, j) und
$s_{ij}$, $sv_k$, $sw_k$, $x_{ij}$ ≥ 0, für alle (i, j) und k,

wobei $R_F$ den Erlös über einen Flug, der Index k das Leg eines Transportes, insbesondere Fluges, j das Segment eines Transportes, i die Prognosedomäne bzw. den Unterbereich (r/d-Klasse) eines Segments, $x_{ij}$ die zu akzeptierende Nachfrage für die Prognosedomäne i des Segments j, ausgedrückt in abrechenbarem Gewicht cw, insbesondere abrechenbaren kg, $D_{ij}$ die prognostizierte Nachfrage der Prognosedomäne i des Segments j, ausgedrückt in abrechenbarem Gewicht cw, insbesondere abrechenbaren kg, $a_{kj}$ den Indexkoeffizienten des Legs k auf dem Segment j darstellt, wobei $a_{kj}$ = 0, wenn das Leg k nicht Bestandteil des Segments j ist und wobei $a_{kj}$ = 1, wenn das Leg k Bestandteil des Segments j ist, $w_{ij}$ den Gewichtskoeffizienten für die Prognosedomäne i des Segments j, $v_{ij}$ den Volumenkoeffizienten für die Prognosedomäne i, $W_{k\text{-Rest}}$ die noch verfügbare Gewichtskapazität, ausgedrückt in abrechenbarem Gewicht cw, insbesondere abrechenbaren kg, die bzw. das vorzugsweise lediglich aus Gewicht besteht, d.h. ein Volumengewicht von d = 0 aufweist, des Legs k und $V_{k\text{-Rest}}$ die noch verfügbare Volumenkapazität, ausgedrückt in abrechenbarem Gewicht cw, insbesondere abrechenbaren kg, die bzw. das vorzugsweise lediglich aus Volumen besteht, d.h. ein Volumengewicht von d = ∞ aufweist, des Legs k sowie $s_{ij}$, $sv_k$ und $sw_k$ die Schlupfvariablen für die Nachfrage der Prognosedomäne i auf dem Segment j, des Volumen des Legs k, insbesondere in Form eines abrechenbaren Gewichts cw, insbesondere eines abrechenbaren kg, die bzw. das vorzugsweise lediglich aus Volumen besteht, d.h. ein Volumengewicht von d = ∞ aufweist, bzw. des Gewichts des Legs k, insbesondere in Form eines abrechenbaren Geichts cw, insbesondere eines abrechenbaren kg, die bzw. das vorzugsweise lediglich aus Gewicht besteht, d.h. ein Volumengewicht von d = 0 aufweist, spezifizieren und $r_{ij}$ die Rate der Prognosedomäne i des Segments j, insbesondere in Form eines Mittelwerts oder gewichteten Mittelwerts, ausgedrückt als Preis, vorzugsweise in einer offiziell anerkannten Währungseinheit, pro abrechenbaren Gewicht cw, insbesondere abrechenbaren kg, spezifizieren, wobei die Gewichts- und Volumenkoeffizienten $w_{ij}$ und $v_{ij}$ wie folgt definiert sind:

- falls 0 ≤ $d_{ij}$ ≤ ds, dann ist $w_{ij}$ = 1 und $v_{ij}$ = $d_{ij}$/ds,
- falls ds < $d_{ij}$ < ∞, dann ist $w_{ij}$ ds/$d_{ij}$ und $v_{ij}$ = 1,
- falls $d_{ij}$ = ∞, dann ist $w_{ij}$ = 0 und $v_{ij}$ = 1 und wobei

$d_{ij}$ einen Volumengewichtswert aus der Domäne i des Segments j, insbesondere einen Mittelwert oder gewichteten Mittelwert, darstellt.

**43.** System zur Optimierung der Auslastung und/oder der Maximierung des Erlöses eines Frachtraumes eines aus mindestens einem Segment j mit mindestens einem Leg k bestehenden Frachtguttransportes, insbesondere nach einem der Ansprüche 25 bis 42, durch Ermittlung der freien Kapazität für einen Frachttransport, bezogen auf das skalierte Volumengewicht einer Frachteinheit, **dadurch gekennzeichnet, dass**

a) für eingehende Buchungsanfragen für Frachteinheiten n mit der Rate $r_n$, dem Volumen $V_n$, vorzugsweise in [$m^3$], dem Gewicht $W_n$, vorzugsweise in [t], dem abrechenbaren Gewicht $cw_n$, dem Volumengewicht $d_n$ und dem skalierten Volumengewicht $sd_n$ zunächst die freie Kapazität $fc_j$ eines Segments in Abhängigkeit von dem skalierten Volumengewicht $sd_n$ ermittelt wird über:

- falls $0 < sw_j \leq sv_j$ und $0 \leq sd_n \leq 0,5$ ist, dann ist $f_{cj} = sw_j$,
- falls $0 < sw_j \leq sv_j$ und $0,5 < sd_n \leq 0,5 \times (sv_j/sw_j)$ ist, dann ist $fc_j = sw_j /(2(1-sd_n))$,
- falls $0 < swj \leq sv_j$ und $0,5 \times (sv_j/sw_j) < sd_n \leq 1$ ist, dann ist $fc_j = sv_j$,
- falls $sw_j > sv_j > 0$ und $0 \leq sd_n \leq 0,5 \times (sv_j/sw_j)$ ist, dann ist $fc_j = sw_j$,
- falls $sw_j > sv_j > 0$ und $0,5 \times (sv_j/sw_j) < sd_n \leq 0,5$ ist, dann ist $fc_j = sv_j/2\, sd_n$,
- falls $sw_j > sv_j > 0$ und $0,5 < sd_n \leq 1$ ist, dann ist $fc_j = sv_j$,
- falls $sw_j = 0$ und $sv_j > 0$ und $0 \leq sd_n < 1$ ist, dann ist $fc_j = 0$,
- falls $sw_j = 0$ und $sv_j > 0$ und $sd_n = 1$ ist, dann ist $fc_j = sv_j$,
- falls $sw_j > 0$ und $sv_j = 0$ und $sd_n = 0$ ist, dann ist $fc_j = sw_j$,
- falls $sw_j > 0$ und $sv_j = 0$ und $0 < sd_n \leq 1$ ist, dann ist $fc_j = 0$, und
- falls $sw_j = 0$ und $sv_j = 0$ ist, dann ist $fc_j = 0$,

wobei die vorangehenden Parameter die folgende Bedeutung haben:

$sw_j$ die erwartungsgemäß ungenutzte Gewichtskapazität eines Segments j, ausgedrückt in abrechenbarem Gewicht cw, insbesondere abrechenbaren kg mit dem Volumengewicht d = 0, wobei $sw_j$ definiert ist als Min {$sw_k$, für alle k, für die gilt $ak_j = 1$},

$sv_j$ die erwartungsgemäß ungenutzte Volumenkapazität eines Segments j, ausgedrückt in abrechenbarem Gewicht cw, insbesondere abrechenbaren kg mit dem Volumengewicht d = ∞, wobei $sv_j$ definiert ist als Min {$sv_k$, für alle k, für die gilt $ak_j = 1$}, wobei

$ak_j = 1$, wenn das Leg k in dem Segment j enthalten ist und wobei

$ak_j = 0$, wenn das Leg k nicht in dem Segment j enthalten ist, und wobei

$cw_n$ das abrechenbare Gewicht cw der Buchungsanfrage n, ausgedrückt in abrechenbaren kg, darstellt,

$fc_j$ die frei verfügbare Kapazität mit dem skalierten Volumengewicht $sd_n$, ausgedrückt in abrechenbarem Gewicht cw, insbesondere abrechenbaren kg,

$d_n$ das Volumengewicht einer Frachteinheit n, vorzugsweise in $m^3$/t, das wie folgt bestimmt wird:

- falls das Gewicht $W_n$ der Frachteinheit > 0 und das Volumen $V_n$ der Frachteinheit ≥ 0, dann ist das Volumengewicht $d_n = (V_n/W_n)$,
- falls das Gewicht $W_n$ der Frachteinheit = 0 und das Volumen $V_n$ der Frachteinheit > 0, dann ist das Volumengewicht $d_n = ∞$, und
- falls das Gewicht $W_n$ der Frachteinheit = 0 und das Volumen $V_n$ der Frachteinheit = 0, dann ist das Volumengewicht $d_n$ unbestimmt,

- ausgehend von dem ermittelten Volumengewicht $d_n$ das skalierte Volumengewicht $sd_n$ bestimmt, wobei,

- falls $d_n = 0$, dann $sd = 0$ ist,
- falls $0 < d_n \leq ds$, dann $sd_n = d_n/2ds$ ist,
- falls $ds < d_n < ∞$, dann $sd_n = 1 - ds/2d_n$ ist, und
- falls $d_n = ∞$, dann $sd_n = 1$ ist,

wobei ds ein gegebenes Standard-Volumengewicht, vorzugsweise in $m^3$/t, ist, das insbesondere dem Standard-Volumengewicht $ds_{IATA}$ der IATA entspricht;

b) das abrechenbare Gewicht cw ermittelt wird gemäß:

- falls das Gewicht $W_n$ in t gleich 0 und das Volumen $V_n$ in $m^3$ gleich 0 ist, dann ist $cw_n = 0$,
- falls $0 \leq sd_n \leq 0,5$, dann ist $cw_n = W_n \times 1000$ und
- falls $0,5 < sd_n \leq 1$, dann ist $cw_n = V_n \times 1000/ds$; und

c) falls das abrechenbare Gewicht $cw_n \leq fc_j$, die Buchungsanfrage bestätigt und, falls das abrechenbare Gewicht $cw_n > fc_j$, die Buchungsanfrage bestätigt, wenn der für die Buchungsanfrage einer Frachteinheit n ermittelte Bid-Preis $bp_n \leq r_n$ und wenn $V_n \leq V_{Rest}$ und $W_n \leq W_{Rest}$, und ansonsten die Buchungsanfrage ablehnt.

**44.** System zur Optimierung der Auslastung und/oder der Maximierung des Erlöses eines Frachtraumes eines aus mindestens einem Segment j mit mindestens einem Leg k bestehenden Frachtguttransportes, insbesondere nach einem der Ansprüche 25 bis 43, durch Ermittlung des Ertrages aus den niedrigstwertigen Unterbereichen von erwarteten Frachtgutbuchungsnachfragen (Bid-Preis) für ein Segment in Abhängigkeit von dem Volumengewicht d, **dadurch gekennzeichnet, dass**

a) für eingehende Buchungsanfragen für Frachteinheiten n mit der Rate $r_n$, dem Volumen $V_n$, dem Gewicht $W_n$ und dem Volumengewicht $d_n$ der Bid-Preis $bp_j$ wie folgt bestimmt wird:

- falls $0 \leq d_n \leq ds$ ist, dann ist $bp_j = bpw_j + (d_n/ds) \, bpv_j$,
- falls $ds < d_n < \infty$ ist, dann ist $bp_j = (ds/d_n) \times bpw_j \times + bpv_j$, und
- falls $d_n = \infty$ ist, dann ist $bp_j = bpv_j$,

wobei die vorangehenden Parameter die folgende Bedeutung haben:

$d_n$ Volumengewicht der Buchungsanfrage
ds Standard-Volumengewicht
$bp_j$ Bid-Preis des Segments j bei einem Volumengewicht $d_n$
$bpw_j$ Gewichtskapazitätszugangspreis des Segments j, ausgedrückt in Preis pro abrechenbarem Gewicht cw, insbesondere pro abrechenbaren kg mit dem Volumengewicht $d_n = 0$ (Preis der Gewichtskapazität des Segments j),
$bpv_j$ Volumenskapazitätszugangspreis des Segments j, ausgedrückt in Preis pro abrechenbarem Gewicht cw, insbesondere pro abrechenbaren kg mit dem Volumengewicht $d_n = \infty$ (Preis der Volumenkapazität des Segments j),

wobei $bpw_j$ definiert ist als die Summe der Gewichts-Bid-Preise von allen Legs k, die auf dem Segment j liegen, d.h. $bpw_j = \Sigma_k \, a_{kj} \, x \, bpw_k$, und wobei $bpv_j$ definiert ist als die Summe der Volumen-Bid-Preise von allen Legs k, die auf dem Segment j liegen, d.h. $bpv_j = \Sigma_k \, a_{kj} \, x \, bpv_k$, wobei
$ak_j = 1$, wenn das Leg k in dem Segment j enthalten ist und wobei
$ak_j = 0$, wenn das Leg k nicht in dem Segment j enthalten ist, und wobei
das Volumengewicht einer Frachteinheit n, vorzugsweise in $m^3/t$, darstellt und wie folgt bestimmt wird:

- falls das Gewicht $W_n$ der Frachteinheit $> 0$ und das Volumen $V_n$ der Frachteinheit $\geq 0$, dann ist das Volumengewicht $d_n = (V_n/W_n)$,
- falls das Gewicht $W_n$ der Frachteinheit $= 0$ und das Volumen $V_n$ der Frachteinheit $> 0$, dann ist das Volumengewicht $d_n = \infty$, und
- falls das Gewicht $W_n$ der Frachteinheit $= 0$ und das Volumen $V_n$ der

Frachteinheit $= 0$, dann ist das Volumengewicht $d_n$ unbestimmt, und
b) das abrechenbare Gewicht $cw_n$ der Buchungsanfrage n ermittelt gemäß:

- falls das Gewicht $W_n$ in t gleich 0 und das Volumen $V_n$ in $m^3$ gleich 0 ist, dann ist $cw_n = 0$,
- falls $0 \leq d_n \leq ds$, dann ist $cw_n = W_n \times 1000$ und
- falls $ds < d_n \leq \infty$, dann ist $cw_n = V_n \times 1000/ds$; und

c) falls die Rate $r_n \geq bp_j$ und falls $V_n \geq V_{Rest}$ und $W_n \leq W_{Rest}$, die Buchungsanfrage bestätigt und, falls die Rate $r_n < bp_j$, die Buchungsanfrage ablehnt.

**45.** System zur Optimierung der Auslastung und/oder der Maximierung des Erlöses eines Frachtraumes eines aus mindestens einem Segment j mit mindestens einem Leg k bestehenden Frachtguttransportes, insbesondere nach einem der Ansprüche 25 bis 44, durch Ermittlung des Ertrages aus den niedrigstwertigen Unterbereichen von erwarteten Frachtgutbuchungsnachfragen (Bid-Preis) für ein Segment in Abhängigkeit von dem skalierten Volumengewicht sd, **dadurch gekennzeichnet, dass**

a) für eingehende Buchungsanfragen für Frachteinheiten n mit der Rate $r_n$, dem Volumen $V_n$, dem Gewicht $W_n$, dem Volumengewicht $d_n$ und dem skalierten Volumengewicht $sd_n$ der Bid-Preis $bp_j$ wie folgt bestimmt wird:

- falls $0 \leq sd_n \leq 0{,}5$ ist, dann ist $bp_j = bpw_j + 2\,sd_n \times bpv_j$,
- falls $0{,}5 < sd_n < 1$ ist, dann ist $bp_j = 2(1 - sd_n) \times bpw_j + bpv_j$, und
- falls $d_n = 1$ ist, dann ist $bp_j = bpv_j$,
    wobei die vorangehenden Parameter die folgende Bedeutung haben:

    $d_n$ Volumengewicht der Buchungsanfrage
    $sd_n$ das skalierte Volumengewicht der Buchungsanfrage
    $bp_j$ Bid-Preis des Segments j bei einem skalierten Volumengewicht $sd_n$
    $bpw_j$ Gewichtskapazitätszugangspreis des Segments j, ausgedrückt in Preis pro abrechenbarem Gewicht cw, insbesondere pro abrechenbaren kg mit dem Volumengewicht $d_n = 0$ (Preis der Gewichtskapazität des Segments j),
    $bpv_j$ Volumenskapazitätszugangspreis des Segments j, ausgedrückt in Preis pro abrechenbarem Gewicht cw, insbesondere pro abrechenbaren kg mit dem Volumengewicht $d_n = \infty$ (Preis der Volumenkapazität des Segments j),

    wobei $bpw_j$ definiert ist als die Summe der Gewichts-Bid-Preise von allen Legs k, die auf dem Segment j liegen, d.h. $bpw_j = \Sigma_k\, a_{kj}\, x\, bpw_k$, und wobei $bpv_j$ definiert ist als die Summe der Volumen-Bid-Preise von allen Legs k, die auf dem Segment j liegen, d.h. $bpv_j = \Sigma_k\, a_{kj}\, x\, bpv_k$, wobei
    $ak_j = 1$, wenn das Leg k in dem Segment j enthalten ist und wobei
    $ak_j = 0$, wenn das Leg k nicht in dem Segment j enthalten ist,
    und wobei
    das Volumengewicht einer Frachteinheit n, vorzugsweise in $m^3/t$, darstellt und wie folgt bestimmt wird:

- falls das Gewicht $W_n$ der Frachteinheit $> 0$ und das Volumen $V_n$ der Frachteinheit $\geq 0$, dann ist das Volumengewicht $d_n = (V_n/W_n)$,
- falls das Gewicht $W_n$ der Frachteinheit $= 0$ und das Volumen $V_n$ der Frachteinheit $> 0$, dann ist das Volumengewicht $d_n = \infty$, und
- falls das Gewicht $W_n$ der Frachteinheit $= 0$ und das Volumen $V_n$ der Frachteinheit $= 0$, dann ist das Volumengewicht $d_n$ unbestimmt, und

    ausgehend von dem ermittelten Volumengewicht d das skalierte Volumengewicht $sd_n$ wie folgt bestimmt:

- falls $d_n = 0$, dann $sd_n = 0$ ist,
- falls $0 < d_n \leq ds$, dann $sd_n = d_n/2ds$ ist,
- falls $ds < d_n\, \infty$, dann $sd_n = 1 - ds/2d_n$ ist, und
- falls $d_n = \infty$, dann $sd_n = 1$ ist,

    wobei ds ein gegebenes Standard-Volumengewicht, vorzugsweise in $m^3/t$, ist, das insbesondere dem Standard-Volumengewicht $ds_{IATA}$ der IATA entspricht;

b) das abrechenbare Gewicht $cw_n$ der Buchungsanfrage n ermittelt gemäß:

- falls das Gewicht $W_n$ in t gleich 0 und das Volumen $V_n$ in $m^3$ gleich 0 ist, dann ist $cw_n = 0$,
- falls $0 \leq sd_n \leq 0{,}5$, dann ist $cw_n = W_n \times 1000$ und
- falls $0{,}5 < sd_n \leq 1$, dann ist $cw_n = V_n \times 1000/ds$; und

c) falls die Rate $r_n \geq bp_j$ und falls $V_n \leq V_{Rest}$ und $W_n \leq W_{Rest}$, die Buchungsanfrage bestätigt und, falls die Rate $r_n < bp_j$, die Buchungsanfrage ablehnt.

**46.** Computerprogramm mit Programmcode-Mitteln, um alle Schritte gemäß einem der Ansprüche 1 bis 24 durchzuführen, wenn das Programm auf einem Computer ausgeführt wird.

**47.** Computerprogramm mit Programmcode-Mitteln gemäß Anspruch 46, die auf einem computerlesbaren Datenträger gespeicher sind.

**48.** Computerprogramm-Produkt mit auf einem maschinenlesbaren Träger gespeicherten Programmcode-Mitteln, um alle Schrittte gemäß einem der Ansprüche 1 bis 24 durchzuführen, wenn das Programm auf einem Computer ausgeführt wird.

| | domain i=1 | i=2 | i=3 | i=4 | | |
|---|---|---|---|---|---|---|
| $r_9$ | | | | | ... | ... |
| $r_8$ | ... | ... | ... | ... | ... | ... |
| $r_7$ | ... | ... | ... | ... | ... | ... |
| $r_6$ | ... | ... | $D_{ij}$ | 123 | ... | ... |
| $r_5$ | ... | ... | 456 | [chkg] | ... | ... |
| $r_4$ | ... | ... | ... | ... | ... | ... |
| $r_3$ | ... | ... | ... | ... | ... | ... |
| $r_2$ | ... | ... | ... | ... | ... | ... |
| $r_1$ | ... | ... | ... | ... | ... | segment j |

$d_1 = 0 \quad d_2 \quad d_3 \quad d_4 = 0.5 \quad d_5 \quad d_6 \quad d_7 = 1$

**Skaliertes Volumengewicht [-]**

*Raten- / Skaliertes Volumengewichts-Diagramm für ein Flugsegment*

**Rate [euro/chkg]**

# Figur 1

**a)** Skaliertes Volumengewicht [-]

| 0 | 1/12 | 1/6 | 3/12 | 1/3 | 5/12 | 0.5 | 7/12 | 2/3 | 3/4 | 5/6 | 11/12 | 1 |

**b)** Volumengewicht auf der Basis des skalierten Volumengewichts

| 0 | 1 | 2 | 3 | 4 | 5 | 6 | 7.2 | 9 | 12 | 18 | 36 | ∞ |

**c)** Logarithmisch skaliertes Volumengewicht auf der Basis 2

| 1 | 1.41 | 2 | 2.82 | 4 | 5.65 | 8 | 11. | 16 | 22. | 32 | 45. | 64 |

**d)** Logarithmisch skaliertes Volumengewicht

| 1 | 1.77 | 3.16 | 5.62 | 10 | 17. | 31. | 56. | 100 | 177. | 316. | 562. | 1000 |

**e)** Unskaliertes Volumengewicht

| 0 | 1 | 2 | 3 | 4 | 5 | 6 | 7 | 8 | 9 | 10 | 11 | 12 |

(Skaliertes) Volumengewicht ([-]) [mc/t]

Skalierungen

*Verschiedene Volumengewichtsabbildungen*

# Figur 2

Figur 3

Figur 4

Spezifischer Gewichts- und Volumenverbrauch eines abrechenbaren Kilogramms III

# Figure 5

Raten- / Skaliertes Volumengewichts-Diagramm für ein Flugsegment

# Figur 6

Ein primaler Graph mit verschiedenen freien Volumenkapazitäten

Figur 7

EP 1 596 317 A1

Ein primaler Graph mit verschiedenen freien Gewichtskapazitäten

# Figur 8

Ein dualer Graph mit verschiedenen Gewichts Bid-Preisen

## Figur 9

EP 1 596 317 A1

*Ein dualer Graph mit verschiedenen Volumen Bid-Preisen*

# Figure 10

EP 1 596 317 A1

**EP 1 596 317 A1**

Europäisches
Patentamt

**ERKLÄRUNG**

die nach Regel 45 des Europäischen Patentübereinkommens für das weitere Verfahren als
europäischer Recherchenbericht gilt

**Nummer der Anmeldung**

EP 05 01 0487

| | **KLASSIFIKATION DER ANMELDUNG (Int.Cl.7)** |
|---|---|
| Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind.<br><br>Grund: | G06F17/60 |

Die Ansprüche beziehen sich auf einen
Sachverhalt, der nach Art. 52(2) und (3)
EPÜ von der Patentierbarkeit
ausgeschlossen ist. In Anbetracht dessen,
dass der beanspruchte Gegenstand entweder
nur derartige nichttechnische Sachverhalte
(mathematische Methode) oder allgemein
bekannte Merkmale zu deren technologischen
Umsetzung (universelle EDV-Anlage)
anführt, konnte der Rechercheprüfer keine
technische Aufgabe feststellen, deren
Lösung eventuell eine erfinderische
Tätigkeit beinhalten würde. Es war daher
nicht möglich, sinnvolle Ermittlungen über
den Stand der Technik durchzuführen (Regel
45 EPÜ und EPÜ Richtlinien Teil B Kapitel
VIII, 1-3).

Der Anmelder wird darauf hingewiesen, dass
im Zuge der Prüfung eine Recherche
durchgeführt werden kann, sollten die
einer Erklärung gemäss Regel 45 EPÜ
zugrundeliegenden Mängel behoben worden
sein (Vgl. EPA-Richtlinien C-VI, 8.5).
-----

| Recherchenort | Abschlußdatum | Prüfer |
|---|---|---|
| München | 2. September 2005 | Hopper, E |

EPO FORM 1504 (P04C39)

73